# EUROPEAN PATENT APPLICATION

(11) **EP 1 580 514 A1**
(43) Date of publication of application: **28.09.2005**
(21) Application number: 03774231.9
(22) Date of filing: 25.11.2003
(51) Int. Cl.: F28F 13/18, C09K 3/18, C09D 127/12

(54) **HEAT EXCHANGER FOR AIR AND FREEZER DEVICE**

(30) Priority: 26.11.2002 JP 2002342849; 26.11.2002 JP 2002342981; 07.03.2003 JP 2003062324; 29.10.2003 JP 2003369425
(71) Applicant: DAIKIN INDUSTRIES, LTD., Osaka 530-8323 (JP)
(72) Inventor: YOSHIOKA, Shun, Daikin Industries, Ltd., Sakai-shi, Osaka 591-8511 (JP); KASAI, Kazushige, Daikin Industries, Ltd., Sakai-shi, Osaka 591-8511 (JP); KOBAYASHI, Shinichirou, Daikin Industries, Ltd., Sakai-shi, Osaka 591-8511 (JP); NAKATA, Haruo, Daikin Industries, Ltd., Sakai-shi, Osaka 591-8511 (JP)
(74) Representative: Stein-Dräger, Christiane
(86) International application number: PCT/JP2003/015054
(87) International publication number: WO 2004/048876

(57) **Abstract**

Surface portions A with a low heat capacity and surface portions B to which frost or ice is poorly bound or attached are discretely distributed on the heat exchange surface. The surface portions A and the surface portions B have features by which, when heating the heat exchanger to which frost or ice is attached, frost or ice in contact with the surface portions A melts earlier than frost or ice in contact with the surface portions B, and at least a part of frost or ice attached to the surface portions B is made partially continuous with at least a part of frost or ice attached to the surface portions A and is thereby released from the surface portions B by its own weight. The heat exchanger having such a heat exchange surface is used as an evaporator of a refrigeration apparatus.

## Description

### Technical Field

The present invention relates to an air heat exchanger and a refrigeration apparatus, in particular, to a heat exchanger with an improved surface structure.

### Background Art

Generally, in a refrigeration apparatus using an air heat exchanger as an evaporator, when air to be heat-exchanged with the air heat exchanger has a low temperature, and the evaporator has a low evaporation temperature, frost is produced on the heat exchange surface. When frost is produced, the air heat exchanger exhibits reduced heat exchange capacity, thereby reducing refrigerating capacity.

For example, in a heat pump air conditioner as a refrigeration apparatus, when the outside air temperature is lowered during heating operation, the evaporation temperature is lowered, and an outdoor heat exchanger using an air heat exchanger is frosted. In addition, the outdoor heat exchanger has reduced evaporation performance ahd heating performance when frosted. Thus, defrost operation is appropriately carried out in order to remove the attached frost or ice as frozen frost (hereinafter simply referred to as frost or ice). However, when the defrost operation is carried out, the heating operation may halt or the heating capacity may be reduced, depending on the method of the defrost operation, and thus the heating comfort is disadvantageously reduced.

Thus, it has been conventionally demanded that frosting in an air heat exchanger be delayed so as to extend refrigerating operation (heating operation, particularly in the case of a heat pump air conditioner as a typical example of a refrigeration apparatus) or reduce the time for defrost operation.

A possible method for satisfying such demands comprises forming an antifrosting layer on the surface for heat' exchange with air in order to reduce the amount of frost formed in an evaporator. In this method of forming an antifrosting layer, water repellency is improved mainly for the heat exchange surface of an air heat exchanger to prevent frosting.

A possible method for forming such an antifrosting layer comprises, for example, applying a paint described in Japanese Laid-Open Patent Publication No. 8-3477 (Patent Document 1), specifically, a water-repellent paint in which a fluorine-terminated polytetrafluoroethylene (PTFE) powder with a molecular weight of 500 to 20,000 is incorporated into a non-fluororesin to the heat exchange surface. Similarly, a method comprising applying a paint described in Japanese Laid-Open Patent Publication No. 8-3479 (Patent Document 2), specifically, an antifrosting paint in which a fluorine-terminated PTFE powder with a molecular weight of 500 to 20,000 is contained in a liquid resin (e.g. a fluororesin, a silicone resin, or a polyester resin) to the heat exchange surface is also possible.
(Patent Document 1) Japanese Laid-Open Patent Publication No. 8-3477
(Patent Document 2) Japanese Laid-Open Patent Publication No. 8-3479
(Patent Document 3) Japanese Laid-Open Patent Publication No. 57-34107
(Patent Document 4) Japanese Laid-Open Patent Publication No. 62-7767
(Patent Document 5) Japanese Laid-Open Patent Publication No. 62-174213
(Patent Document 6) Japanese Laid-Open Patent Publication No. 2-265979
(Patent Document 7) Japanese Laid-Open Patent Publication No. 2-298645
(Patent Document 8) Japanese Laid-Open Patent Publication No. 4-279612

However, it has been found that the above conventional paints have a PTFE powder only poorly dispersed uniformly in the resin, have a poorly water-repellent area remaining on the surface, and exhibit an impaired antifrosting effect. In addition, since it is difficult to avoid frosting thoroughly even if the antifrosting layer is formed on the heat exchange surface, defrosting is necessary for the heat exchanger. However, the conventional paints have not been designed to reduce the time for defrost operation.

As described above, the conventional methods comprising forming an antifrosting layer on the surface have not been satisfactory.

In addition to the above antifrosting methods comprising forming an antifrosting layer on the surface, a defrosting method comprising applying heat energy from outside may be applicable. In this method comprising applying heat energy, however, frost or ice rarely remains on the heat exchange surface, but a large amount of energy is required for melting the whole frost or ice in contact with the heat exchange surface, and the temperature becomes higher. Thus, the method cannot be applied to an apparatus sensitive to heat.

Moreover, a method comprising spreading an antifrosting agent onto the surface is also possible, but the method involves frosting by the antifrosting agent.

Furthermore, a defrosting method comprising applying a mechanical energy such as vibration or shock to an air heat exchanger may be applicable. However, even if this method is used, since the heat exchange surface of a conventional heat exchanger has small water repellency and sliding properties (properties showing the amount of droplets attached to the heat exchange surface that fall down), frost or ice remains on the heat exchange surface, and the subsequent frosting is carried out easier.

Accordingly, the defrosting methods other than the antifrosting methods comprising forming an antifrosting layer on the surface cannot reduce the time for defrost operation of a frosted heat exchanger, either.

The present invention has achieved in view of the above problems in the prior art. An objective of the present invention is to provide an air heat exchanger having a heat exchange surface with an improved surface structure so that frosting onto the heat exchange surface can be delayed and the time for defrost operation of the frosted heat exchanger can be reduced. Another object of the present invention is to provide a refrigeration apparatus using such an air heat exchanger.

### Disclosure of the Invention

In order to achieve the above objects, the air heat exchanger of the present invention comprises fins that form a surface for heat exchange with air, and heat exchange pipes that are disposed in thermally conductive connection with the fins and circulate a heating medium therein, the fins having a surface for heat exchange with air with a surface structure in which surface portions A with a low heat capacity and surface portions B to which frost or ice is poorly bound or attached are discretely distributed, and the surface portions A and the surface portions B exhibit the following feature 1 and feature 2. Specifically, the feature 1 refers to a feature by which interfacial frost or ice in contact with the surface portions A melts earlier than interfacial frost or ice in contact with the surface portions B when heating the surface of a member to which frost or ice is attached, and the feature 2 refers to a feature by which frost or ice attached to the surface portions B and at least a part of frost or ice attached to the surface portions A are released in a combined manner by their own weight from the surface of a member to which frost or ice is attached when heating the surface of the member.

Since the air heat exchanger with such a configuration has two kinds of surface portions discretely distributed, i.e. surface portions A with a low heat capacity and surface portions B to which frost or ice is poorly bound or attached, the heat exchange surface exhibits excellent water repellency and sliding properties. For this reason, condensed water condensed on and attached to the surface of the air heat exchanger is made globular and thus is blown off easily by the pressure of wind passing through the air heat exchanger, and is supercooled and thus frozen only with difficulty. Accordingly, the growth rate of frost attached to the heat exchange surface can be reduced, and the time for refrigerating operation until the amount of frost formed requires defrosting (heating operation in the case of a heat pump air conditioner) can be extended.

On the other hand, in defrost operation, frost or ice on the surface portions A is released by melting interfacial frost or ice in contact with the surface portions A. Further, the released frost or ice and frost or ice attached to the surface portions B are at least partially bound to each other, and the frost or ice on the surface portions B is released by its own weight. Accordingly, in the air heat exchanger, it is unnecessary to thoroughly melt interfacial frost or ice in contact with the heat exchange surface as in a conventional one, and it is only necessary to cause melting of frost or ice in contact with the surface portions A. Thus, the time for defrost operation can be reduced.

The above-described heat exchange surface, in which the surface portions A and the surface portions B are discretely distributed, is provided with easy frost/ice release properties. Easy frost/ice release properties in the present specification refer to properties in which, when defrosting the air heat exchanger, frost or ice formed on the heat exchange surface of the air heat exchanger is released (detached) from the heat exchange surface by its own weight, and thus only a small amount of water droplets or frost remain on the heat exchange surface from which the frost or ice has melted or has been released. When defrost operation is repeated after resuming refrigerating operation, if water droplets, frost, or ice remain on the heat exchange surface of the defrosted air heat exchanger, the water droplets, frost, or ice become frosting or freezing nuclei in the next refrigerating operation, thereby reducing the time for refrigerating operation. However, since the evaporator of the present invention can reduce the amount of water droplets or frost remaining on the heat exchange surface of the evaporator after defrosting, the amount of frosting or freezing nuclei in refrigerating operation is reduced. Thus, the time for refrigerating operation can be extended repeatedly, and the time for defrost operation can be reduced repeatedly. For this reason, the heat energy required for defrosting can be saved, and the time for defrost operation can be reduced.

As described above, the present invention can suppress reduction in an effect of refrigerating operation (e.g. reduction in heating comfort when the invention is applied to a heat pump air conditioner) and reduction in energy efficiency.

Further, the air heat exchanger of the present invention may comprise fins that form a surface for heat exchange with air, and heat exchange pipes that are disposed in thermally conductive connection with the fins and circulate a heating medium therein,
the fins having a surface for heat exchange with air coated with a film formed from a surface treatment composition composed of:
(A) a water-repellent binder resin,
(B-1) a simple carbon substance with DBP absorbed in an amount of 45 to 450 cm³/100 g, and
(C) a dispersing agent.

Such a configuration can provide a film with high water repellency and easy water droplets sliding properties, can easily prepare a composition that is capable of preventing formation of ice and snow, and can achieve the same effects as above, even if PTFE particles are not added.

The amount of DBP absorbed was measured in accordance with JIS K6217.

Further, the air heat exchanger of the present invention may comprise fins that form a surface for heat exchange with air, and heat exchange pipes that are disposed in thermally conductive connection with the fins and circulate a heating medium therein, the fins having a surface for heat exchange with air coated with a film formed from a surface treatment composition composed of:
(A) a water-repellent binder resin,
(B-2) a simple carbon substance with a specific surface area by nitrogen adsorption of 30 to 400 m²/g, and
(C) a dispersing agent.

Such a configuration can provide a film with high water repellency and easy water droplets sliding properties, can easily prepare a composition that is capable of preventing formation of ice and snow, and can achieve the same effects as above, even if PTFE particles are not added.

The specific surface area by nitrogen adsorption is a value measured in accordance with JIS K6217.

Further, the air heat exchanger of the present invention may comprise fins that form a surface for heat exchange with air, and heat exchange pipes that are disposed in thermally conductive connection with the fins and circulate a heating medium therein, the fins having a surface for heat exchange with air coated with a film formed from a surface treatment composition composed of:
(A) a water-repellent binder resin,
(B-3) a simple carbon substance with DBP absorbed in an amount of 45 to 450 cm³/100 g and a specific surface area by nitrogen adsorption of 30 to 400 m²/g, and
(C) a dispersing agent.

Such a configuration can provide a film with high water repellency and easy water droplets sliding properties, can easily prepare a composition that is capable of preventing formation of ice and snow, and can achieve the same effects as above, even if PTFE particles are not added.

The surface treatment composition composed of the component (A), one of the components (B-1), (B-2), and (B-3), and the component (C) preferably provides a film with an initial sliding angle of 15° or less, the sliding angle defined as an angle of a sample plate at which water droplets begin to roll down when 4 µL of distilled water is added dropwise onto the sample plate horizontally placed under environmental conditions of a temperature of 17 ± 1°C and a relative humidity of 60 ± 2% to form the water droplets, and then the sample plate is inclined at increasing angles with an increment of 0.1°.

Further, in the air heat exchanger, the surface treatment composition preferably comprises one of the simple carbon substances (B-1) to (B-3) in an amount of 25 to 400 parts by weight and the dispersing agent (C) in an amount of 5 to 100 parts by weight based on 100 parts by weight of the water-repellent binder resin (A).

Further, in the air heat exchanger, the water-repellent binder resin (A) is preferably a fluororesin.

Further, in the air heat exchanger, the fluororesin is preferably a fluorine-containing copolymer with a number average molecular weight of 1,000 to 500,000 composed of
(1) a fluoroolefin structural unit (1) represented by the formula (I):

   -CF₂-CFX- (I)

   wherein X is a fluorine atom, a chlorine atom, a hydrogen atom, or a trifluoromethyl group,
(2) a β-methyl substituted α-olefin structural unit (2) represented by the formula (II):

   -CH₂-CR (CH₃)- (II)

   wherein R is a C₁ to C₈ alkyl group,
(3) a structural unit (3) based on a monomer having a chemically curable group,
(4) a structural unit (4) based on a monomer having an ester group on the side chain, and
(5) a structural unit (5) based on a different copolymerizable monomer,
the copolymer comprising the structural unit (1) in an amount of 20 to 60 mol%, the structural unit (2) in an amount of 5 to 25 mol%, the structural unit (3) in an amount of 1 to 45 mol%, the structural unit (4) in an amount of 1 to 45 mol%, and the structural unit (5) in an amount of 0 to 45 mol%, provided that the structural units (1) and (2) are 40 to 90 mol% in total.

Further, in the air heat exchanger, the carbon element substances (B-1) to (B-3) are preferably carbon element substances pretreated with the dispersing agent (C).

Further, in the air heat exchanger, the carbon element substances (B-1) to (B-3) are preferably carbon black or carbon nanotube.

Further, in the air heat exchanger, the dispersing agent (C) is a polymer containing a recurring unit derived from a vinyl monomer having a fluoroalkyl group.

In the air heat exchanger, the polymer is preferably a copolymer with a non-fluorine vinyl monomer.

Further, in the air heat exchanger, it is preferable that the surface treatment composition further comprise a crosslinking agent (E), and the water-repellent binder resin (A) be a resin having a chemically curable group.

Further, in the air heat exchanger, the surface treatment composition preferably comprises the crosslinking agent (E) in an amount of 0.1 to 5 equivalents based on one equivalent of a chemically curable group in the water-repellent binder resin having a chemically curable group.

Further, preferably provided in the air heat exchanger is (2) a film with an initial water microdroplet sliding angle of 15° or less, the angle at which ultrafine water droplets slide defined as an angle of a sample plate at which the water droplets begin to roll down when 1 µL of distilled water is added dropwise onto the sample plate horizontally placed under environmental conditions of a temperature of 17 ± 1°C and a relative humidity of 60 ± 2% to form the water droplets, and then the sample plate is inclined at increasing angles with an increment of 0.1°.

Further, the air heat exchanger of the present invention may comprise fins that form a surface for heat exchange with air, and heat exchange pipes that are disposed in thermally conductive connection with the fins and circulate a heating medium therein, characterized in that the fins have a surface for heat exchange with air coated with a film formed from a surface treatment composition composed of a water-repellent binder resin, polytetrafluoroethylene particles, a dispersing agent, inorganic particles with a low heat capacity, and a solvent.

Such a configuration comprises a heat exchange surface in which two kinds of surface portions, i.e. surface portions A with a low heat capacity and surface portions B to which frost or ice is poorly bound or attached, are discretely distributed, and the surface portions A and the surface portions B satisfy the above feature 1 and feature 2, and thus can provide the heat exchange surface with easy frost/ice release properties. Accordingly, the time for normal refrigerating operation such as heating operation can be extended, and the reduction in energy efficiency can be suppressed.

The water-repellent binder resin is a fluororesin, the polytetrafluoroethylene particles have a weight average molecular weight of 500 to 200,000 and a mean particle diameter of 0.1 µm or more, the dispersing agent is a polymer comprising a recurring unit derived from a vinyl monomer having a fluoroalkyl group, the inorganic particles with a low heat capacity have a molar heat capacity of 6 Ca/JK⁻¹mol⁻¹ to 7 Ca/JK⁻¹mol⁻¹ and are electrically conductive, and the solvent is an organic solvent system. Further, the composition may comprise the polytetrafluoroethylene particles in an amount of 100 to 200 parts by weight, the dispersing agent in an amount of 5 to 30 parts by weight, the inorganic particles with a low heat capacity in an amount of 25 to 200 parts by weight, and the solvent in an amount of 400 to 2,000 parts by weight, based on 100 parts by weight of the water-repellent binder resin.

In such a configuration, the heat exchange surface can have more preferable surface portions A and surface portions B which satisfies the above feature 1 and feature 2 and are discretely distributed, and the heat exchange surface can be provided with more preferable easy frost/ice release properties. Accordingly, the time for normal refrigerating operation such as heating operation can be further extended, the time for defrost operation can be further reduced, and the reduction in energy efficiency can be further suppressed.

The air heat exchanger may be characterized in that the fins are multiple sheets of plate fins located at predetermined intervals, the heat exchange pipes are disposed so that the pipes penetrate through the multiple plate fins, and the spaces between the fins are formed as air passages.

If the plate fins are used in this manner, the heat exchanger can not only be produced at a low cost, but also be used in wider applications.

The plate fins may be formed as slit fins.

When the slit fins are used in this manner, frost or ice can be easily cut with slits during defrost operation. Thus, a mass of frost or ice attached to the heat exchange surface can be made suitably small and fall down easily by its own weight.

The plate fins may be formed as louver fins.

Also in this case, frost or ice can be cut with the top of louvers easily during defrost operation. Thus, a mass of frost or ice attached to the heat exchange surface can be made suitably small and fall down easily by its own weight.

The plate fins may be formed as flat fins and provided with notches at the rear of the heat exchange pipes in the direction along which air passes.

In conventional plate fins, there is a small wind speed distribution at the rear of the heat exchange pipes. Thus, condensed water attached to this part is blown off only with difficulty, the growth rate of frost increases, and frost or ice easily remains when defrosting, which is a problem still to be solved. However, in the above configuration, not only can the area of the fins at the rear of the heat exchange pipes be made smaller, thereby reducing the amount of condensed water attached, but also the wind can easily go around due to the notches, thereby improving the wind speed distribution. Accordingly, the problem in which frost or ice remains unmelted at the rear of the heat exchange pipes can be solved.

The plate fins may be provided with dimples on the surface. In such a configuration, since the area of the heat exchange surface of the fins for heat exchange with frost is large as compared with the amount of frost formed, interfacial frost or ice in the surface portions A can melt earlier, and the time for defrost operation can be further reduced.

The plate fins may have a large fin pitch formed at the ends from which air flows out.

In such a configuration, frost or ice released and carried by the wind pressure to the side from which air flows out is not retained at the side from which air flows out, and the time for defrost operation can be surely reduced.

The plate fins may have a large fin pitch formed at the lower ends.

In such a configuration, frost or ice released and falling down by its own weight is not retained at the lower end of the heat exchanger, and the time for defrost operation can be surely reduced.

The plate fins may be located so that the edges are made oblique in the air passages.

By locating the air heat exchanger in this manner, when the air heat exchanger is used as an evaporator, water droplets condensed on and attached to the heat exchange surface can fall down easily. Further, in the case of defrost operation or the like of the heat exchanger, frost attached to the heat exchange surface can fall down easily by its own weight. Thus, the time for refrigerating operation can be further extended, and the time for defrost operation can be further reduced.

The heat exchange pipes are preferably arranged in grids.

In such a configuration, as compared with the case of arranging the heat exchange pipes in a zigzag manner, frost or ice attached to the heat exchange surface can easily flow downwind, making it easy to carry out defrosting.

The air heat exchanger of the present invention may be configured so that multiple rows of flat tubes are located as the heat exchange pipes, the fins are corrugate fins and are disposed so that the edge lines of the waveform parts of the corrugate fins are perpendicular to the heat exchange pipes, and the spaces formed in parallel with the edge lines of the waveform parts of the corrugate fins are formed as air passages.

In such a configuration, since the surface of the corrugate fins has two kinds of surface portions discretely distributed, i.e. surface portions A with a low heat capacity and surface portions B to which frost or ice is poorly bound or attached, the heat exchange surface exhibits excellent water repellency and sliding properties. Thus, water droplets or frost attached to the surface of the corrugate fins can be drifted downwind by the wind force. Accordingly, a stacked heat exchanger, in which ventilation resistance of air is smaller than that of a heat exchanger using the above-described plate fins (specifically, a cross fin heat exchanger) and high-performance and inexpensive corrugate fins are used, can be used as an outdoor heat exchanger such as a heat pump air conditioner or a heat pump air conditioner for vehicle use.

The air heat exchanger of the present invention may be formed so that the heat exchange pipes are disposed on the surface perpendicular to the direction along which air flows, and mesh fins are attached to the heat exchange pipes.

In such a configuration, since the surface of the mesh fins used as an evaporator has two kinds of surface portions discretely distributed, i.e. surface portions A with a low heat capacity and surface portions B to which frost or ice is poorly bound or attached, the heat exchange surface exhibits excellent water repellency and sliding properties. Thus, condensed water attached to the surface of the mesh fins is made globular and can be blown off easily, and the mesh fins can be used without frosting for a long time. Accordingly, inexpensive mesh fins can be used at a high efficiency.

The refrigeration apparatus of the present invention uses the above air heat exchanger.

The refrigeration apparatus with such a configuration, can extend the time for refrigerating operation and reduce the time for defrost operation. Thus, the unit can exhibit an effect of refrigerating operation sufficiently and improve energy efficiency.

The refrigeration apparatus may be a refrigeration apparatus configured as a heat pump air conditioner, the refrigeration apparatus in which the above air heat exchanger is used as an outdoor heat exchanger.

The heat pump air conditioner with such a configuration can extend the time for heating operation and reduce the time for defrost operation. Thus, the unit can provide improved heating comfort and exhibit improved energy efficiency.

The refrigeration apparatus may be a refrigeration apparatus configured as a heat pump air conditioner, the refrigeration apparatus in which the air heat exchangers are used as an indoor heat exchanger and an outdoor heat exchanger, respectively.

In such a configuration, the unit can not only exhibit the above effect, but also suppress formation of frost in the indoor heat exchanger during low-load cooling operation.

Further, the refrigeration apparatus of the present invention may be configured so that the unit comprises an evaporator consisting of the air heat exchanger having the above-described surface structure; a blower for blowing air to be heat-exchanged with the evaporator across the evaporator; a refrigerant circuit that can be operated in a defrost cycle in which a gas discharged from a compressor is supplied to the evaporator during defrost operation; and a control unit that, during defrost operation, stops the blower and activates the defrost cycle until interfacial frost or ice in contact with the surface portions A melts, and operates the blower and inactivates the defrost cycle after the interfacial frost or ice in contact with the surface portions A has melted.

According to the refrigeration apparatus with such a configuration, condensed water condensed on and attached to the surface of the evaporator is made globular and thus is blown off easily by the pressure of wind passing through the evaporator, and is supercooled and thus frozen only with difficulty. Accordingly, the time for refrigerating operation until the amount of frost formed reduces the growth rate of frost attached to the heat exchange surface and requires defrosting (heating operation in the case of a heat pump air conditioner) can be extended.

On the other hand, during defrost operation, it is unnecessary to thoroughly melt interfacial frost or ice in contact with the heat exchange surface of the evaporator as in a conventional one, and it is only necessary to cause melting of frost or ice in contact with the surface portions
A. Thus, the time for defrost operation can be reduced.

When defrost operation is repeated, if water droplets, frost, or ice remain on the heat exchange surface of the defrosted evaporator, the water droplets, frost, or ice become frosting or freezing nuclei in the next refrigerating operation, thereby reducing the time for refrigerating operation. However, since the evaporator of the present invention can reduce the amount of water droplets or frost remaining on the heat exchange surface of the evaporator after defrosting, the amount of frosting or freezing nuclei in refrigerating operation is reduced, and thus the time for refrigerating operation can be extended repeatedly, and the time for defrost operation can be reduced repeatedly. For this reason, the heat energy required for defrosting can be saved, and the time for defrost operation can be reduced.

Furthermore, in the refrigeration apparatus of the present invention, since the blower is operated in defrost operation in which a gas discharged from a compressor is supplied to the evaporator, when interfacial frost or ice in contact with the heat exchange surface of the evaporator melts, frost or ice on the heat exchange surface can be blown off by the wind pressure. Thus, the time for defrost operation can be reduced, and the heat energy necessary for defrosting can be further reduced.

As described above, the refrigeration apparatus of the present invention can prevent reduction in an effect of refrigerating operation (e.g. reduction in heating comfort when the unit is applied to a heat pump air conditioner) and suppress reduction in energy efficiency.

Further, the refrigeration apparatus of the present invention may be configured so that the unit comprises an evaporator having, as constituent members, fins with a surface for heat exchange with air comprising surface portions A and surface portions B, the surface portions A and the surface portions B having the feature 1 and the feature 2 as described above; a blower for blowing air to be heat-exchanged with the evaporator across the evaporator; a refrigerant circuit that can be operated in a defrost cycle in which a gas discharged from a compressor is supplied to the evaporator during defrost operation; and a control unit for controlling the apparatus during defrost operation to activate the defrost cycle and operate the blower.

The refrigeration apparatus with such a configuration is configured so that the fins of the evaporator have the surface structure as described above, and the blower is operated after interfacial frost or ice in contact with the surface portions A during defrost operation has melted, and thus can prevent reduction in an effect of refrigerating operation (e.g. reduction in heating comfort when the apparatus is applied to a heat pump air conditioner) and suppress reduction in energy efficiency as in the above-described refrigeration apparatus.

Since the refrigeration apparatus activates the defrost cycle and stops the blower until interfacial frost or ice in contact with the surface portions A melts during defrost operation, the blower blows wind only when frost or ice attached to the heat exchange surface is intended to be blown off by the wind pressure, and can further improve energy efficiency as compared with the above-described first solution means.

Further, the refrigeration apparatus of the present invention may be configured as a heat pump refrigeration apparatus which can be operated for heating and cooling, so that the apparatus comprises an evaporator consisting of the air heat exchanger having the above-described fin surface structure; a blower for blowing air to be heat-exchanged with the evaporator across the evaporator; a refrigerant circuit that can be operated in a defrost cycle in which a gas discharged from a compressor is supplied to the evaporator during defrost operation; and a control unit for controlling the apparatus to activate the defrost cycle during defrost operation and set the operation speed of the blower during the defrost operation at the highest of speeds that can be selected during heating operation.

According to such a configuration, since the speed of wind passing through the evaporator increases during defrost operation, frost or ice on the surface portions A of which the interface with the surface portions A melts can be blown off by the wind pressure. Thus, release of frost or ice on the surface portions B can be promoted, and detachment of frost or ice from the whole heat exchange surface can be promoted. Further, since the rotation speed of the blower is the same as in heating operation, an increase in the cost for a driving unit of the blower can be suppressed.

Further, the refrigeration apparatus of the present invention may be configured as a heat pump refrigeration apparatus which can be operated for heating and cooling, so that the apparatus comprises an evaporator consisting of the air heat exchanger having the above-described fin surface structure; a blower for blowing air to be heat-exchanged with the evaporator across the evaporator; a refrigerant circuit that can be operated in a defrost cycle in which a gas discharged from a compressor is supplied to the evaporator during defrost operation; and a control unit for controlling the apparatus to activate the defrost cycle during defrost operation and set the operation speed of the blower during the defrost operation at a higher speed than the highest of speeds that can be selected during heating operation.

In such a configuration, during defrost operation, a larger amount of frost or ice of the surface portions A having melted on the interface of the surface portions A can be blown off by the wind pressure, frost or ice attached to the surface portions B can be released earlier, and frost or ice can be released from the whole heat exchange surface.

In above refrigeration apparatus, the refrigerant circuit may comprise a defrost cycle of a normal cycle hot gas bypass system. The normal cycle hot gas bypass system refers to a defrost cycle in which a gas discharged from a compressor is bypassed to the inlet of an evaporator, while circulating a refrigerant in a refrigerant circuit in heating operation, to heat the evaporator.

In such a configuration, heating operation can be switched to defrost operation while operating the compressor continuously without cessation, and the time for defrost operation can be reduced.

In the refrigeration apparatus, the refrigerant circuit may comprise a defrost cycle of a reverse cycle system. The reverse cycle system refers to a defrost cycle during defrost operation in which a refrigerant is circulated in the direction reverse to that of normal refrigerating operation, specifically, heating operation in the case of a heat pump air conditioner, and an evaporator during heating operation functions as a condenser.

In such a configuration, a cycle during cooling operation can be used as it is.

In the refrigeration apparatus, the refrigerant circuit may comprise a defrost cycle of a simple hot gas bypass system. The simple hot gas bypass system refers to a defrost cycle during defrost operation in which an expansion mechanism for heating is closed, and a refrigerant discharged from a compressor is entirely circulated to the inlet of an evaporator directly.

In such a configuration, heating operation can be switched to defrost operation while operating the compressor continuously without cessation, and the time for defrost operation can be reduced. In addition, during defrost operation, since a large amount of the refrigerant is directly transferred to the evaporator from the compressor, heat energy accumulated on the high pressure side of the refrigerant circuit is discharged to the evaporator at a burst. Accordingly, interfacial frost or ice in contact with the surface portions A can melt in a short time, and the time for defrost operation can be reduced. In a conventional refrigeration apparatus in which frost or ice on the whole heat exchange surface has to be caused to melt, the amount of heat tends to be insufficient. In the present invention, however, it is only necessary to cause melting of frost or ice on the surface of the surface portions A (interfacial frost or ice), and thus heat energy does not lack.

### Brief Description of the Drawings

Fig. 1 is a photograph taken by a CCD camera of the state of the surface of a sample plate when frosting started 10 minutes after frost operation of a first cycle started in Test Example 3;
Fig. 2 is a partially enlarged photograph of Fig. 1;
Fig. 3 is an overall photograph taken by a CCD camera of the frosting state of the surface of a sample plate when frost operation of a first cycle finished 20 minutes after the frost operation started in Test Example 3;
Fig. 4 is a partially enlarged photograph of Fig. 3;
Fig. 5 is an overall photograph taken by a CCD camera of the release state of the surface of a sample plate when frost or ice began to be released immediately after defrost operation of a first cycle started in Test Example 3;
Fig. 6 is a partially enlarged photograph of Fig. 5;
Fig. 7 is an overall photograph taken by a CCD camera of the state of the surface of a sample plate when defrost operation of a first cycle finished two minutes after the defrost operation started in Test Example 3;
Fig. 8 is a partially enlarged photograph of Fig. 7;
Fig. 9 is an overall photograph taken by a CCD camera of the state of the surface of a sample plate when frost operation of a second cycle finished 20 minutes after the frost operation started in Test Example 3;
Fig. 10 is a partially enlarged photograph of Fig. 9;
Fig. 11 is an overall photograph taken by a CCD camera of the state of the surface of a sample plate when frost or ice began to be released immediately after defrost operation of a second cycle started in Test Example 3;
Fig. 12 is an overall photograph taken by a CCD camera of the state of the surface of a sample plate when release was almost completed 30 seconds after defrost operation of a second cycle started in Test Example 3;
Fig. 13 is an overall photograph taken by a CCD camera of the state of the surface of a sample plate when defrost operation of a second cycle finished two minutes after the defrost operation started in Test Example 3;
Fig. 14 is a partially enlarged photograph of Fig. 13;
Fig. 15 is an overall photograph taken by a CCD camera of the state of the surface of a sample plate when the whole surface was frosted about 10 minutes after frost operation of a first cycle started in Comparative Test Example 2;
Fig. 16 is a partially enlarged photograph of Fig. 15;
Fig. 17 is an overall photograph taken by a CCD camera of the state of the surface of a sample plate when frost operation of a first cycle finished 20 minutes after the frost operation started in Comparative Test Example 2;
Fig. 18 is a partially enlarged photograph of Fig. 17;
Fig. 19 is an overall photograph taken by a CCD camera of the state of the surface of a sample plate when frost or ice began to melt immediately after defrost operation of a first cycle started in Comparative Test Example 2;
Fig. 20 is a partially enlarged photograph of Fig. 19;
Fig. 21 is an overall photograph taken by a CCD camera of the state of the surface of a sample plate when defrost operation of a first cycle finished two minutes after the defrost operation started in Comparative Test Example 2;
Fig. 22 is a partially enlarged photograph of Fig. 21;
Fig. 23 is an overall photograph taken by a CCD camera of the state of the surface of a sample plate when frost operation of a second cycle finished 20 minutes after the frost operation started in Comparative Test Example 2;
Fig. 24 is a partially enlarged photograph of Fig. 23;
Fig. 25 is an overall photograph taken by a CCD camera of the state of the surface of a sample plate when frost or ice began to melt immediately after defrost operation of a second cycle started in Comparative Test Example 2;
Fig. 26 is an overall photograph taken by a CCD camera of the state of the surface of a sample plate one minute after defrost operation of a second cycle started in Comparative Test Example 2;
Fig. 27 is an overall photograph taken by a CCD camera of the state of the surface of a sample plate when defrost operation of a second cycle finished two minutes after the defrost operation started in Comparative Test Example 2;
Fig. 28 is a partially enlarged photograph of Fig. 27;
Fig. 29 is a view showing a refrigerant circuit of the refrigeration apparatus of Embodiment 1;
Fig. 30 is a perspective view showing an outdoor heat exchanger in the same refrigeration apparatus;
Fig. 31 is a cross-sectional view of an outdoor heat exchanger of the refrigeration apparatus of Embodiment 2 cut with the cross-section of plate fins;
Fig. 32 is a cross-sectional view of the same outdoor heat exchanger cut with the plane of a plate fin;
Fig. 33 is a cross-sectional view of an outdoor heat exchanger of the refrigeration apparatus of Embodiment 3 cut with the cross-section of plate fins;
Fig. 34 is an explanatory view showing the wind speed distribution at the end of an outdoor heat exchanger from which air flows out of the refrigeration apparatus of Embodiment 4;
Fig. 35 is an explanatory view for comparison with Embodiment 8 showing the wind speed distribution at the end of an outdoor heat exchanger from which air flows out in Embodiment 1;
Fig. 36 is a cross-sectional view showing a plate fin in a frosted state in an outdoor heat exchanger of the refrigeration apparatus of Embodiment 4;
Fig. 37 is a cross-sectional view showing the same plate fin in which frost or ice is released during defrost operation;
Fig. 38 is a perspective view showing an outdoor heat exchanger of the refrigeration apparatus of Embodiment 6;
Fig. 39 is a front view showing the same outdoor heat exchanger;
Fig. 40 is a plan view showing the same outdoor heat exchanger;
Fig. 41 is a plan view showing an outdoor heat exchanger of the refrigeration apparatus of Embodiment 7;
Fig. 42 is an explanatory view showing the location of heat exchange pipes in an outdoor heat exchanger of the refrigeration apparatus of Embodiment 8;
Fig. 43 is an explanatory view for comparison with Embodiment 8 showing the location of heat exchange pipes in an outdoor heat exchanger of the refrigeration apparatus of Embodiment 1;
Fig. 44 is an explanatory view showing a state in which an outdoor heat exchanger of the refrigeration apparatus of Embodiment 9 is installed;
Fig. 45 is an explanatory view showing a state in which an outdoor heat exchanger of the refrigeration apparatus of Embodiment 10 is installed;
Fig. 46 is a front view showing the stacked heat exchanger of Embodiment 11;
Fig. 47 is a cross-sectional view taken along line A-A of Fig. 46;
Fig. 48 is a partially enlarged view of the same heat exchanger viewing from the front;
Fig. 49 is a view showing a state in which water droplets are attached to the same heat exchanger;
Fig. 50 is a view showing a state in which water droplets are attached to the heat exchanger shown in Fig. 46 when vertically used;
Fig. 51 is a view showing a state in which frost or ice drops out from the same heat exchanger;
Fig. 52 is a reference view showing a state in which frost or ice drops out from the heat exchanger of Embodiment 1;
Fig. 53 is a front perspective view showing the mesh fin heat exchanger of Embodiment 12;
Fig. 54 is a partially enlarged front perspective view showing the same mesh fin heat exchanger;
Fig. 55 is a partially enlarged view showing a mesh fin used in the same mesh fin heat exchanger;
Fig. 56 is a view showing a refrigerant circuit of the refrigeration apparatus of Embodiment 13;
Fig. 57 is a control flow chart during defrost operation by a control unit of the same refrigeration apparatus;
Fig. 58 is a control timing chart during defrost operation by the same control unit;
Fig. 59 is a view showing a refrigerant circuit of the refrigeration apparatus of Embodiment 14;
Fig. 60 is a control flow chart during defrost operation by a control unit of the same refrigeration apparatus;
Fig. 61 is a control timing chart during defrost operation by the same control unit;
Fig. 62 is a view showing a refrigerant circuit of the refrigeration apparatus of Embodiment 15;
Fig. 63 is a control flow chart during defrost operation by a control unit of the same refrigeration apparatus; and
Fig. 64 is a control timing chart during defrost operation by the same control unit.

### Best Mode for Carrying Out the Invention

Embodiments of the present invention will be described below. First, the surface structure of the heat exchange surface in an air heat exchanger of the present invention will be described.

In the present invention, the surface for heat exchange with air has two kinds of surface portions discretely distributed, i.e. surface portions A and surface portions B satisfying the following feature 1 and feature 2, and is formed as a surface structure exhibiting excellent easy frost/ice release properties.

Here, the feature 1 and the feature 2 refer to the features as defined above. The present invention will be described with regard to the properties. The feature 1 is a feature for detaching frost or ice easily in its entirety by first untying the relation in which the surface portions A adhere to and are bound to ice. Conventionally, since interfacial frost or ice in contact with a heat exchange surface is simply caused to melt in order to detach frost or ice attached to the heat exchange surface, frost or ice is not detached until melting occurs in a large part of the heat exchange surface. However, the surface structure of the present invention can make frost or ice detached in its entirety only by melting the interface in contact with the surface portions A.

In order to make frost or ice detached further easier, the surface portions B preferably has features such as, for example, water repellency and surface roughness, that make the surface portions B to which frost or ice is poorly bound or attached. In this case, when frost or ice melts on the interface with the surface portions A, the feature 2 can be exhibited regardless of whether frost or ice melts on the interface with the surface portions B or not.

The feature 2 is a feature showing that frost or ice attached to the surface portions B can be released from the surface portions B even if the frost or ice does not necessarily melt. A feature is that frost or ice crystals on the surface portions B can be released integrally with frost or ice crystals having been detached from the surface portions A in advance. In a conventional heat exchange surface, interfacial frost or ice in contact with surface portions B has to be caused to melt before release.

When the heat exchange surface is provided with the above surface structure, frost or ice can be easily removed only by applying a small amount of heat energy to the heat exchange surface to which frost or ice is attached.

The heat exchange surface may have a surface portion other than the surface portions A and the surface portions B, but such a surface portion must not impair the feature 1 and feature 2 of the surface portions A and the surface portions B.

The air heat exchanger may be defrosted by applying force to the heat exchanger (specifically, directly heating the heat exchanger itself) or by heating frost or ice from outside (e.g. by heat irradiation or sunlight). Any of the heating methods can cause frost or ice to be released from the heat exchanger having the surface structure of the present invention, though the required time differs.

The area ratio, planar shape, and location of the surface portions A and the surface portions B, the three-dimensional shape of the surface portions, and the like are not specifically limited insofar as the above feature 1 and feature 2 are satisfied, but are preferably as follows.

The area ratio of the surface portions A to the surface portions B can be selected in a wide range of 1/99 to 99/1. However, the ratio of the surface portions A is preferably as small as possible from the viewpoint of energy efficiency, insofar as the feature 2 can be exhibited.

Any planar shape or location of the surface portions is possible. Specific examples include a configuration in which the surface portions A and the surface portions B are arranged in stripes; a configuration in which the surface portions A and the surface portions B are located as islands; a configuration in which the surface portions A are dispersed in the surface portions B as spots or polka dots (or vice versa); a configuration in which the surface portions A are located on the surface portions B as lattices (or vise versa); and a configuration in which the surface portions A are located on the surface portions B as rings (or vise versa).

The three-dimensional shape of the surface portions is not specifically limited, and may be planar, projected, or deformed. Alternatively, the surface portions may be in the shape of a terrace (or a diagonal board or circular board) in which one surface is higher than the other surface.

Next, the method for forming the surface structure of the present invention will be described.

Known methods can be applied to the forming method without specific limitations. Examples include (1) coating, (2) various moldings, (3) various chemical surface processings, (4) various physical surface processings, and (5) a method comprising forming a complex such as a layered product.

Now, the coating method will be described in detail.

The heat exchange surface is coated with the following surface treatment composition to form the surface structure of the present invention.

Examples of the surface treatment composition used include a first surface treatment composition composed of:
(a) a water-repellent binder resin,
(b) polytetrafluoroethylene (PTFE) particles,
(c) a dispersing agent,
(d) inorganic particles with a low heat capacity, and
(e) a solvent.

From other points of view, the surface treatment composition may be a second surface treatment composition composed of:
(A) a water-repellent binder resin,
(B-1) a simple carbon substance with DBP absorbed in an amount of 45 to 450 cm³/100 g, and
(C) a dispersing agent;
a third surface treatment composition composed of:
(A) a water-repellent binder resin,
(B-2) a simple carbon substance with a specific surface area by nitrogen adsorption of 30 to 400 m²/g, and
(C) a dispersing agent;
or a fourth surface treatment composition composed of:
(A) a water-repellent binder resin,
(B-3) a simple carbon substance with DBP absorbed in an amount of 45 to 450 cm³/100. g and a specific surface area by nitrogen adsorption of 30 to 400 m²/g, and
(C) a dispersing agent.

Further, the second to fourth surface treatment compositions are preferably surface treatment compositions that provide a film with an initial sliding angle of 15° or less, the sliding angle defined as an angle of a sample plate at which water droplets begin to roll down when 4 µL of distilled water is added dropwise onto the sample plate horizontally placed under environmental conditions of a temperature of 17 ± 1°C and a relative humidity of 60 ± 2% to form the water droplets, and then the sample plate is inclined at increasing angles with an increment of 0.1°.

Presumably, in the surface structure of a film formed from this surface treatment composition, the surface portions A are formed by the inorganic particles with a low heat capacity (d), and the surface portions B are formed by the water-repellent binder resin (a) and the PTFE particles (b). Or presumably, the surface portions A are formed by the simple carbon substance, and the surface portions B are formed by the water-repellent binder resin (A).

The water-repellent binder resin (a) may be a resin that is water repellent and can maintain the PTFE particles (b) and the inorganic particles with a low heat capacity (d) to be uniformly dispersed.

The water-repellent binder resin (A) may be a resin that is water repellent and sets the sliding angle of the surface of a film obtained from the composition of the present invention (definition (1): 4 µL water droplets, initial time, hereinafter the same) at 15° or less, preferably 10° or less, more preferably 7° or less, particularly 5° or less, and more particularly 3° or less.

Further, the resin (A) is preferably a resin that sets the sliding angle of ultrafine water droplet (definition (2): 1 µL water droplets, initial time, hereinafter the same) at 15° or less, preferably 12° or less, more preferably 10° or less, particularly 7° or less, and more particularly 5° or less. The sliding angle of 1 µL ultrafine water droplets is more useful as an index for evaluating the state of the coating surface than the sliding angle of 4 µL water droplets measured.

For ensuring water repellency, the contact angle with water is preferably large. The surface portions B or the surface of a film obtained from the composition of the present invention has a contact angle with water of 140° or more. Although it is not necessary for a single coating surface of the water-repellent binder resins (a) and (A) to have a contact angle with water of 140° or more, the angle is preferably 100° or more in order to easily provide the treated surface with the target water repellency. The upper limit is theoretically 180°.

Examples of such water-repellent binder resins (a) and (A) include a fluororesin, a silicone resin, and a urethane resin. A fluororesin is preferable because of its excellent dispersibility of PTFE particles or a simple carbon substance and the like.

The fluororesin can be selected from conventional fluororesins, but is preferably a copolymer comprising tetrafluoroethylene (TFE), chlorotrifluoroethylene (CTFE), or hexafluoropropylene (HFP) as a main component due to its advantageous weather resistance, paint making, solubility in a solvent, and the like.

Examples of these fluororesins include the following resins.
(1) a fluorine-containing copolymer curable at room temperature comprising fluoroolefin, cyclohexyl vinyl ether, alkyl vinyl ether, and hydroxyalkyl vinyl ether as essential constituents, the copolymer comprising a unit based on fluoroolefin, a unit based on cyclohexyl vinyl ether, a unit based on alkyl vinyl ether, a unit based on hydroxyalkyl vinyl ether, and a unit based on other comonomers respectively in an amount of 40 to 60 mol%, 5 to 45 mol%, 5 to 45 mol%, 3 to 15 mol%, and 0 to 30 mol%, and having an intrinsic viscosity of 0.1 to 2.0 dl/g when measuring the uncured copolymer in tetrahydrofuran at 30°C (described in Japanese Laid-Open Patent Publication No. 57-34107 (Patent Document 3)).
   Specific examples include a chlorotrifluoroethylene (CTFE)/cyclohexyl vinyl ether (c-HVE)/ethyl vinyl ether (EVE)/hydroxybutyl vinyl ether (HBVE) copolymer, a tetrafluoroethylene (TFE)/c-HVE/EVE/HBVE copolymer, and a CTFE/c-HVE/isobutyl vinyl ether (i-BVE)/HBVE copolymer.
(2) a vinyl copolymer obtained by copolymerizing fluoroolefin, vinyl carboxylate, alkyl vinyl ether, and hydroxyalkyl vinyl ether as essential monomers and other vinyl monomers as optional components copolymerizable with these monomers (described in Japanese Laid-Open Patent Publication No. 62-7767 (Patent Document 4)).
   Specific examples include a hexafluoropropylene (HFP)/EVE/HBVE/VeoVa 9 (trade name; vinyl carboxylate manufactured by Shell Chemicals Ltd.) copolymer, a HFP/EVE/HBVE/vinyl benzoate (VBz) copolymer, a CTFE/EVE/HBVE/VeoVa 9 copolymer, a TFE/EVE/HBVE/VBz copolymer, a HFP/i-BVE/HBVE/vinyl pivalate (PIV) copolymer, a HFP/EVE/hydroxyhexyl vinyl ether (HHVE)/vinyl p-t-butylbenzoate (VPTBz) copolymer, a CTFE/EVE/HBVE/vinyl cyclohexylcarboxylate (VCHC) copolymer, and a CTFE/EVE/HBVE/PIV copolymer.
(3) a fluorine-containing copolymer constituted by 35 to 65 mol% of a structural unit represented by the formula:

   -CClF-CF₂-,

   5 to 50 mol% of a structural unit represented by the formula: 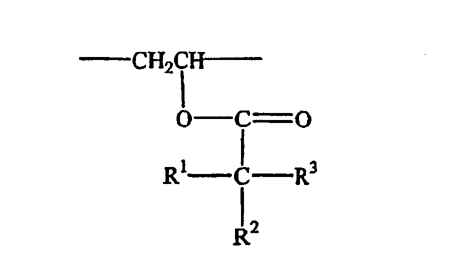 wherein R¹, R², and R³ are, the same or different, a C₁ to C₁₀ alkyl group, and
   1 to 30 mol% of a structural unit represented by the formula:

   -CH₂-CH(OR⁴OH) -

   wherein R⁴ is a C₂ to C₅ alkylene group (described in Japanese Laid-Open Patent Publication No. 62-174213 (Patent Document 5)).
   Specific examples include a CTFE/VeoVa 10 (trade name; vinyl carboxylate manufactured by Shell Chemicals Ltd.)/HBVE copolymer, a CTFE/VeoVa 10/CH₂=CHOCH₂(CF₂)₂H copolymer, and a CTFE/VeoVa 10/HBVE copolymer.
(4) a fluorine-containing resin composed of fluoroolefin, alkene, and hydroxyl group-containing allyl ether represented by the formula:

   CH₂=CH-CH₂-O-R

   wherein R is -(CH₂CXHO) ₙ-H, n is an integer of 0 to 6, and X is H or CH₃, the resin comprising a unit based on fluoroolefin, a unit based on alkene, and a unit based on hydroxyl group-containing allyl ether respectively in an amount of 25 to 75 mol%, 10 to 70 mol%, and 3 to 40 mol% (described in Japanese Laid-Open Patent Publication No. 2-265979 (Patent Document 6)).
   Specific examples.include a CTFE/propylene/ethylene glycol monoallyl ether (EGMAE)/vinylacetic acid (VAA) copolymer, a CTFE/ethylene/EGMAE/VAA copolymer, a CTFE/isobutylene/EGMAE/VAA copolymer, a CTFE/propylene/EGMAE copolymer, a CTFE/propylene/allyl alcohol/VAA copolymer, and a TFE/ethylene/EGMAE/VAA copolymer.
(5) a copolymer composed of 25 to 75 mol% of fluoroolefin, 10 to 70 mol% of fatty acid vinyl ester, 3 to 40 mol% of alkylene glycol monoallyl ether, and 0 to 20 mol% of a carboxyl group-containing vinyl monomer, the copolymer having a hydroxyl value of 60 to 200 mgKOH/g (described in Japanese Laid-Open Patent Publication No. 2-298645 (Patent Document 7)).
   Specific examples include a CTFE/vinyl acetate (VAc)/EGMAE/VAA copolymer, a CTFE/VAc/diethylene glycol monoallyl ether/VAA copolymer, and a CTFE/VAc/EGMAE copolymer.
(6) a fluorine-containing copolymer with a number average molecular weight of 1,000 to 500,000 composed of
   (6-1) a fluoroolefin structural unit (6-1) represented by the formula (I):

      -CF₂-CFX- (I)

      wherein X is a fluorine atom, a chlorine atom, a hydrogen atom, or a trifluoromethyl group,
   (6-2) a β-methyl substituted α-olefin structural unit (6-2) represented by the formula (II):

      -CH₂-CR(CH₃)- (II)

      wherein R is a C₁ to C₈ alkyl group,
   (6-3) a structural unit (6-3) based on a monomer having a chemically curable group,
   (6-4) a structural unit (6-4) based on a monomer having an ester group on the side chain, and
   (6-5) a structural unit (6-5) based on a different copolymerizable monomer,
      the copolymer comprising the structural unit (6-1) in an amount of 20 to 60 mol%, the structural unit (6-2) in an amount of 5 to 25 mol%, the structural unit (6-3) in an amount of 1 to 45 mol%, the structural unit (6-4) in an amount of 1 to 45 mol%, and the structural unit (6-5) in an amount of 0 to 45 mol%, provided that the structural units (6-1) and (6-2) are 40 to 90 mol% in total (described in Japanese Laid-Open Patent Publication No. 4-279612 (Patent Document 8)).

Typical examples of the structural unit (6-3) based on a monomer having a chemically curable group include a vinyl monomer of which the curable group is a hydroxyl group, carboxyl group, epoxy group, silyl group, or the like.

Examples of the vinyl monomer of which the curable group is a hydroxyl group include hydroxyalkyl vinyl ether and hydroxyalkyl vinyl ester.

Examples of the carboxyl group-containing vinyl monomer includes crotonic acid, maleic acid, acrylic acid, methacrylic acid, itaconic acid, and vinylacetic acid, or monomers derived from these acids.

Examples of the epoxy group-containing vinyl monomer include vinyl monomers described in Japanese Laid-Open Patent Publication No. 2-232250 and Japanese Laid-Open Patent Publication No. 2-232251, for example, an epoxy vinyl or epoxy vinyl ether represented by the following formula:

CH₂=CH-R⁵-R⁶

wherein R⁵ is -CH₂-O-R⁷, -CH₂-O-R⁷-CH (OH) -, -O-R⁷-, or -R⁷-, wherein R⁷ is an alkylene group, and
R⁶ is 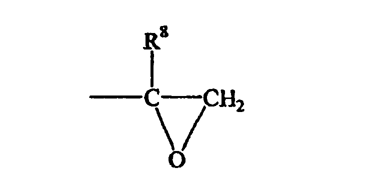 wherein R⁸ is a hydrogen atom or an alkyl group,

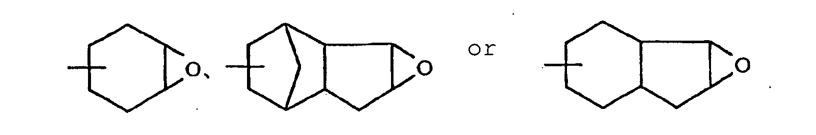

Specific examples thereof include the following monomers:

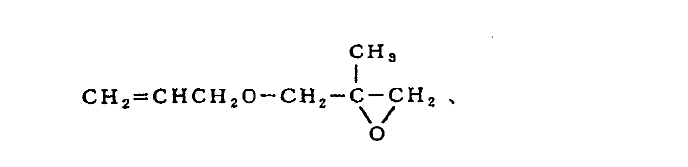

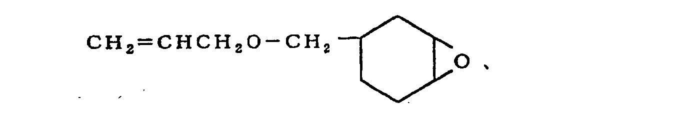

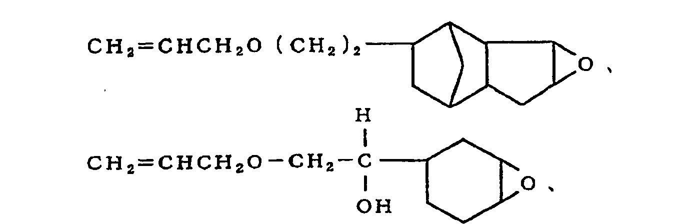

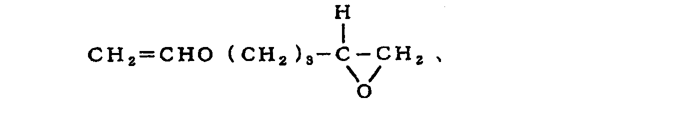

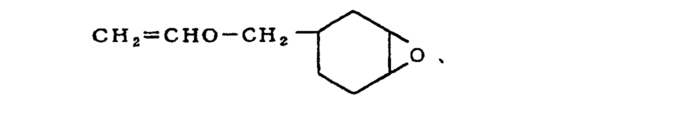

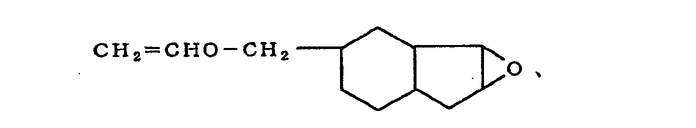

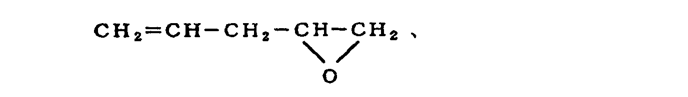

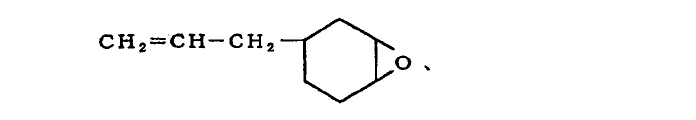

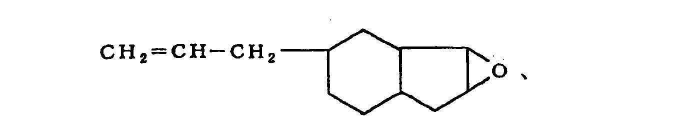

Examples of the silyl group-containing vinyl monomer include vinyl monomers described in Japanese Laid-Open Patent Publication No. 61-141713, for example, vinyltrimethoxysilane, vinyltriethoxysilane, vinyltripropoxysilane, vinylmethyldimethoxysilane, vinyldimethylmethoxysilane, vinylmethyldiethoxysilane, vinyltris(γ-methoxy)silane, trimethoxysilylethyl vinyl ether, triethoxysilylethyl vinyl ether, trimethoxysilylbutyl vinyl ether, triethoxysilylbutyl vinyl ether, trimethoxysilylpropyl vinyl ether, triethoxysilylpropyl vinyl ether, vinyltriisopropenyloxysilane, vinylmethyldiisopropenyloxysilane, triisopropenyloxysilylethyl vinyl ether, triisopropenyloxysilylpropyl vinyl ether, triisopropenyloxyoxysilylbutyl vinyl ether, vinyltris(dimethyliminooxy)silane, vinyltris(methylethyliminooxy)silane, vinylmethylbis(methyldimethyliminooxy)silane, vinyldimethyl(dimethyliminooxy)silane, tris(dimethyliminooxy)silylethyl vinyl ether, methylbis(dimethyliminooxy)silylethyl vinyl ether, tris(dimethyliminooxy)silylbutyl vinyl ether, γ-(meth)acryloyloxypropyltrimethoxysilane, γ-(meth)acryloyloxypropyltriethoxysilane, γ-(meth)acryloyloxypropylmethyldimethoxysilane, γ-(meth)acryloyloxypropyltriisopropenyloxysilane, γ-(meth)acryloyloxypropyltris(dimethyliminooxy)silane, γ-(meth)acryloyloxypropyltris(dimethyliminooxy)silane, and allyltrimethoxysilane.

Specific examples include a CTFE/isobutylene (IB)/HBVE/vinyl propionate (VPi) copolymer, a CTFE/IB/hydroxyethyl allyl ether (HEAE)/VAc copolymer, a TFE/IB/HBVE/VPi copolymer, a CTFE/IB/HBVE/VeoVa 9 (manufactured by a Shell Chemicals Ltd., trade name) copolymer, a TFE/IB/HBVE/VBz copolymer, a CTFE/IB/HBVE/diethyl maleate (DEM) copolymer, a TFE/IB/HBVE/VeoVa 9/dibutyl maleate (DBM) copolymer, a CTFE/IB/HBVE/diethyl fumarate (DEF) copolymer, a CTFE/IB/HEVE/dibutyl fumarate (DBF) copolymer, a HFP/IB/HBVE/VBz copolymer, a TFE/2-methyl-1-pentene (MP)/HBVE/VPi copolymer, a TFE/IB/HBVE/VPi/CH₂=CH (CF₂) ₚCF₃ (p = 1 to 5) copolymer, a TFE/IB/HBVE/VPi/VBz copolymer, a CTFE/IB/HBVE/VAc copolymer, a TFE/IB/HBVE/vinyl t-butylbenzoate (VtBz) copolymer, a TFE/IB/HBVE/VPi/DEM copolymer, a CTFE/IB/HBVE/VBz/DEF copolymer, a CTFE/IB/HBVE/VPi/CH₂=CH(CF₂)ₚCF₃ (p = 1 to 5) copolymer, a CTFE/MP/HEVE/VPi copolymer, a TFE/IB/HBVE/VPi/vinylacetic acid (VAA) copolymer, a TFE/IB/HEVE/VAc/VAA copolymer, a TFE/IB/HBVE/VPi/VBz/crotonic acid (CA) copolymer, a TFE/IB/HBVE/VeoVa 9/CA copolymer, a TFE/IB/HBVE/VeoVa 9/VBz/CA copolymer, a TFE/IB/HBVE/VeoVa 10/VtBz/CA copolymer, a TFE/IB/HBVE/VtBz/CA copolymer, a TFE/IB/HBVE/DEMTFE/IB/HBVE/DFM/CA copolymer, a /CA copolymer, and a TFE/MP/HBVE/VPi/VAA copolymer.

Examples of commercially available products comprising the fluororesins (1) to (6) include ZEFFLE (manufactured by Daikin Industries, Ltd.), LUMIFLON (manufactured by Asahi Glass Company), FLUONATE (manufactured by Dainippon Ink and Chemicals, Inc.), and CEFRAL COAT (manufactured by Central Glass Co., Ltd.).

Of these fluororesins (1) to (6), the fluorine-containing copolymer (6) is preferable in terms of weather resistance.

Specific examples of a resin suitable for the water-repellent binder resins (a) and (A) other than the fluororesins include a silicone resin which may be fluorinated.

The PTFE particles (b) preferably have a weight average molecular weight of 500 to 500,000. Since conventional PTFE, having a weight average molecular weight of 1,000,000 to 10,000,000, is fibrillated when a shearing force is applied, PTFE used in the present invention preferably has a molecular weight in the above range. The weight average molecular weight is preferably 600 or more, and particularly 5,000 or more, and is preferably 500,000 or less, more preferably 200,000 or less, and still more preferably 12,000 or less.

The mean particle diameter is preferably 0.05 µm to 10 µm. The mean particle diameter is preferably 0.1 µm or more, and more preferably 0.2 µm or more, and is preferably 7 µm or less, and more preferably 5 µm or less.

PTFE may be a tetrafluoroethylene (TFE) homopolymer or modified PTFE modified by a known modifier.

PTFE particles have an unstable group at the molecular terminal due to a polymerization initiator or the like, but it is preferable to completely fluorinate such a terminal group to stabilize the PTFE particles. Particularly preferable PTFE particles have a terminal group completely fluorinated, and have a weight average molecular weight of 500 to 20,000 and a mean particle diameter of 2 to 10 µm.

Examples of commercially available products of the PTFE particles (b) include LUBRON manufactured by Daikin Industries Ltd. and CEFRAL LUBE manufactured by Central Glass Co., Ltd.

The second to fourth surface treatment compositions of the present invention do not necessarily have to comprise the PTFE particles in order to reduce the material cost for the surface treatment compositions themselves.

The dispersing agent (c) makes the PTFE particles (b) uniformly dispersed in the water-repellent binder (a). It is necessary for the dispersing agent used here not only to make the PTFE particles (b) dispersed in the solvent if used, but also to make the PTFE particles (b) uniformly dispersed in the water-repellent binder resin in a film. Accordingly, the suitable dispersing agent is selected taking the types of the PTFE particles (b) and the water-repellent binder resin (a) as well as the type of the solvent (e).

Usually, the simple carbon substance (B) described later cannot be easily dispersed in the water-repellent binder resin (A). However, by combining the dispersing agent (C) with the simple carbon substance (B), the simple carbon substance (B) can be dispersed uniformly in the water-repellent binder resin (A) (dispersing action in a resin). Furthermore, the dispersing agent is attached to (or adsorbed on) the surface of the simple carbon substance (B) so that the simple carbon substance (B) has increased water and oil repellency (water and oil-repellent action). In addition, when the solvent (e) is used, the dispersing agent also makes the simple carbon substance (B) uniformly dispersed in the solvent (e) (dispersing action in a solvent).

Accordingly, the suitable dispersing agent (C) is selected taking the types of the simple carbon substance (B) and the water-repellent binder resin (A) into consideration as well as the type of the solvent (e) if used. If the solvent is not used, it is only necessary to take the components (A) and (B) into consideration when a paint powder is to be prepared.

When a fluororesin is selected as the water-repellent binders (a) and (A) and an organic solvent is selected as the solvent (e) described later, the dispersing agent is preferably a polymer (C1) comprising a recurrent unit derived from a vinyl monomer having a fluoroalkyl group.

More preferably, the dispersing agent is a copolymer of a vinyl monomer having a fluoroalkyl group with a non-fluorine vinyl monomer.

The vinyl monomer having a fluoroalkyl group may be a fluoroalkyl group-containing (meth)acrylate, and the fluoroalkyl group-containing (meth)acrylate may be a (meth)acrylate represented by the following general formula:

Rf-A¹-OC (=O) CB¹=CH₂

wherein Rf is a C₁ to C₂₁ fluoroalkyl group, B¹ is a hydrogen atom or a methyl group, and A¹ is a divalent organic group.

Examples of the fluoroalkyl group-containing (meth)acrylate include the following (meth)acrylates:

Rf-SO₂-N (R¹) R²OCOCR³= CH₂

Rf= (CH₂) ₙOCOCR³ =CH₂

Rf-CO-N(R¹) R²OCOCR³=CH₂

Rf-CH₂C (OH) HCH₂OCOCR³=CH₂

Rf-CH₂C (OCOR³) HCH₂OCOCR³=CH₂

Rf-O-Ar-CH₂OCOCR³=CH₂

wherein Rf is a C₁ to C₂₁ fluoroalkyl group, R¹ is a hydrogen atom or a C₁ to C₁₀ alkyl group, R² is a C₁ to C₁₀ alkylene group, R³ is a hydrogen atom or a methyl group, Ar is an arylene group which may have a substituent, and n is an integer of 1 to 10.

Specific examples of the fluoroalkyl group-containing (meth)acrylate include, but are not limited to, the following (meth)acrylates:

CF₃(CH₂) OCOCH=CH₂,

CF₃CF₂ (CH₂) OCOCH=CH₂,

CF₃ (CF₂) ₃ (CH₂) OCOCH=CH₂,

CF₃ (CF₂) ₄ (CH₂) OCOCH=CH₂,

CF₃ (CF₂) ₅ (CH₂) OCOCH=CH₂,

CF₃ (CF₂) ₆ (CH₂) OCOCH=CH₂,

CF₃ (CF₂) ₇ (CH₂) OCOCH=CH₂,

CF₃ (CH₂) ₂OCOCH=CH₂,

CF₃CF₂ (CH₂) ₂OCOCH=CH₂,

CF₃ (CF₂) ₃ (CH₂) ₂OCOCH=CH₂,

CF₃ (CF₂) ₄ (CH₂) ₂OCOCH=CH₂,

CF₃ (CF₂) ₅ (CH₂) ₂OCOCH=CH₂,

CF₃ (CF₂) ₆ (CH₂) ₂OCOCH=CH₂,

CF₃ (CF₂) ₇ (CH₂) ₂OCOCH=CH₂,

CF₃ (CH₂) ₃OCOCH=CH₂,

CF₃CF₂ (CH₂) ₃OCOCH=CH₂,

CF₃ (CF₂) ₃ (CH₂) ₃OCOCH=CH₂,

CF₃ (CF₂) ₄ (CH₂) ₃OCOCH=CH₂,

CF₃ (CF₂) ₅ (CH₂) ₃OCOCH=CH₂,

CF₃ (CF₂) ₆ (CH₂) ₃OCOCH=CH₂,

CF₃ (CF₂) ₇ (CH₂) ₃OCOCH=CH₂,

CF₃ (CH₂) ₆OCOCH=CH₂,

CF₃CF₂ (CH₂) ₆OCOCH=CH₂,

CF₃ (CF₂) ₃ (CH₂) ₆OCOCH=CH₂,

CF₃ (CF₂) ₄ (CH₂) ₆OCOCH=CH₂,

CF₃ (CF₂) ₅ (CH₂) ₆OCOCH=CH₂,

CF₃ (CF₂) ₆ (CH₂) ₆OCOCH=CH₂,

CF₃ (CF₂) ₇ (CH₂) ₆OCOCH=CH₂,

CF₃CH=CHCH₂OCOCH=CH₂,

CF₃CF₂CH=CHCH₂OCOCH=CH₂,

CF₃ (CF₂) ₃CH=CHCH₂OCOCH=CH₂,

CF₃ (CF₂) ₄CH=CHCH₂OCOCH=CH₂,

CF₃ (CF₂) ₅CH=CHCH₂OCOCH=CH₂,

CF₃ (CF₂) ₆CH=CHCH₂OCOCH=CH₂,

CF₃ (CF₂) ₇CH=CHCH₂OCOCH=CH₂,

(CF₃) ₂CF (CH₂) ₂OCOCH=CH₂,

(CF₃)₂CF(CF₂) (CH₂) ₂OCOCH=CH₂,

(CF₃) ₂CF (CF₂) ₂(CH₂) ₂OCOCH=CH₂,

(CF₃) ₂CF (CF₂) ₃ (CH₂) ₂OCOCH=CH₂,

(CF₃) ₂CF (CF₂) ₄ (CH₂) ₂OCOCH=CH₂,

(CF₃) ₂CF (CF₂) ₅ (CH₂) ₂OCOCH=CH₂,

(CF₃)₂CF(CF₂) ₆ (CH₂) ₂OCOCH=CH₂,

H(CF₂) (CH₂) OCOCH=CH₂,

H (CF₂) ₂ (CH₂) OCOCH=CH₂,

H (CF₂) ₄ (CH₂)OCOCH=CH₂,

H (CF₂) ₆ (CH₂) OCOCH=CH₂,

H (CF₂) ₈ (CH₂) OCOCH=CH₂ ,

CF₃CHFCF₂ (CH₂) OCOCH=CH₂,

CF₃ (CH₂) OCOC (CH₃)=CH₂,

CF₃CF₂ (CH₂) OCOC (CH₃)=CH₂,

CF₃ (CF₂) ₃ (CH₂) OCOC (CH₃)=CH₂,

CF₃ (CF₂) ₄ (CH₂) OCOC (CH₃)=CH₂,

CF₃ (CF₂) ₅ (CH₂) OCOC (CH₃)=CH₂,

CF₃ (CF₂) ₆ (CH₂) OCOC (CH₃)=CH₂,

CF₃ (CF₂) ₇ (CH₂) OCOC (CH₃)=CH₂,

CF₃ (CH₂) OCOCH=CH₂,

CF₃ (CH₂) ₂ OCOC (CH₃)=CH₂,

CF₃CF₂ (CH₂) ₂OCOC (CH₃)=CH₂,

CF₃ (CF₂) ₃ (CH₂) ₂OCOC (CH₃)=CH₂,

CF₃ (CF₂) ₄ (CH₂) ₂OCOC (CH₃)=CH₂,

CF₃ (CF₂) ₅ (CH₂) ₂OCOC (CH₃)=CH₂,

CF₃ (CF₂) ₆ (CH₂) ₂OCOC (CH₃)=CH₂,

CF₃ (CF₂) ₇ (CH₂) ₂OCOC (CH₃)=CH₂,

CF₃ (CH₂) ₃OCOC (CH₃)=CH₂,

CF₃CF₂ (CH₂) ₃OCOC (CH₃)=CH₂,

CF₃ (CF₂) ₃ (CH₂) ₃OCOC (CH₃)=CH₂,

CF₃ (CF₂) ₄ (CH₂) ₃OCOC (CH₃)=CH₂,

CF₃ (CF₂) ₅ (CH₂) ₃OCOC (CH₃)=CH₂,

CF₃ (CF₂) ₆ (CH₂) ₃OCOC (CH₃)=CH₂,

CF₃ (CF₂) ₇ (CH₂) ₃OCOC (CH₃)=CH₂

CF₃ (CH₂) ₆OCO (CH₃)=CH₂,

CF₃CF₂ (CH₂) ₆OCOC (CH₃)=CH₂,

CF₃ (CF₂) ₃ (CH₂) ₆OCOC (CH₃)=CH₂,

CF₃ (CF₂) ₄ (CH₂) ₆OCOC (CH₃)=CH₂,

CF₃ (CF₂) ₅ (CH₂) ₆OCOC (CH₃)=CH₂,

CF₃ (CF₂) ₆ (CH₂) ₆OCOC (CH₃)=CH₂,

CF₃ (CF₂) ₇ CH₂) ₆OCOC (CH₃)=CH₂,

CF₃CH=CHCH₂OCOC (CH₃)=CH₂,

CF₃CF₂CH=CHCH₂OCOC (CH₃)=CH₂,

CF₃ (CF₂) ₃CH=CHCH₂OCOC (CH₃)=CH₂,

CF₃ (CF₂) ₄CH=CHCH₂OCOC (CH₃)=CH₂,

CF₃ (CF₂) ₅CH=CHCH₂OCOC (CH₃)=CH₂,

CF₃ (CF₂) ₆CH=CHCH₂OCOC (CH₃)=CH₂,

CF₃ (CF₂) ₇CH=CHCH₂OCOC (CH₃)=CH₂,

(CF₃) ₂CF (CH₂) ₂OCOC (CH₃)=CH₂,

(CF₃) ₂CF (CF₂) (CH₂) ₂OCOC (CH₃)=CH₂,

(CF₃) ₂CF (CF₂) ₂ (CH₂) ₂OCOC (CH₃)=CH₂,

(CF₃) ₂CF (CF₂) ₃ (CH₂) ₂OCOC (CH₃)=CH₂,

(CF₃) ₂CF (CF₂) ₄ (CH₂) ₂OCOC (CH₃)=CH₂,

(CF₃) ₂CF (CF₂) ₅ (CH₂) ₂OCOC (CH₃) CH₂,

(CF₃) ₂CF (CF₂) ₆ (CH₂) ₂OCOC (CH₃)=CH₂,

H(CF₂) (CH₂) OCOC (CH₃)=CH₂,

H (CF₂) ₂ (CH₂) OCOC (CH₃)=CH₂,

H (CF₂) ₄ (CH₂) OCOC (CH₃)=CH₂,

H (CF₂) ₆ (CH₂) OCOC (CH₃)=CH₂,

H (CF₂) ₈ (CH₂) OCOC (CH₃)=CH₂,

CF₃CHFCF₂ (CH₂) OCOC (CH₃) =CH₂,

CF₃SO₂N (CH₃) (CH₂) ₂OCOCH=CH₂,

CF₃ (CF₂) SO₂N (CH₃) (CH₂) ₂OCOCH=CH₂,

CF₃ (CF₂) ₂SO₂N (CH₃) (CH₂) ₂OCOCH=CH₂,

CF₃ (CF₂) ₃SO₂N (CH₃) (CH₂) ₂OCOCH=CH₂,

CF₃ (CF₂) ₄SO₂N (CH₃) (CH₂) ₂OCOCH=CH₂,

CF₃ (CF₂) ₅SO₂N (CH₃) (CH₂) ₂OCOCH=CH₂,

CF₃ (CF₂) ₆SO₂N (CH₃) (CH₂) ₂OCOCH=CH₂,

CF₃ (CF₂) ₇SO₂N (C₂H₅) (CH₂) ₂OCOC (CH₃)=CH₂,

CF₃C₆F₁₀ (CF₂) ₂SO₂N (CH₃) (CH₂) ₂OCOCH=CH₂,

(CF₃) ₂CFCH₂CH (OCOCH₃) CH₂OCOC (CH₃)=CH₂,

(CF₃) ₂CF (CF₂) CH₂CH (OCOCH₃) CH₂OCOC (CH₃)=CH₂,

(CF₃) ₂CF (CF₂) ₂CH₂CH (OCOCH₃) CH₂OCOC (CH₃)=CH₂,

(CF₃) ₂CF(CF₂) ₃CH₂CH (OCOCH₃) CH₂OCOC (CH₃)=CH₂,

(CF₃) ₂CF (CF₂) ₄CH₂CH (OCOCH₃) CH₂OCOC (CH₃)=CH₂,

(CF₃) ₂CF (CF₂) ₅CH₂CH (OCOCH₃) CH₂OCOC (CH₃)=CH₂,

(CF₃) ₂CF (CF₂) ₆CH₂CH (OCOCH₃) CH₂OCOC (CH₃)=CH₂,

(CF₃) ₂CFCH₂CH (OH) CH₂OCOCH=CH₂,

(CF₃) ₂CF (CF₂) CH₂CH (OH) CH₂OCOCH=CH₂,

(CF₃) ₂CF (CF₂) ₂CH₂CH (OH) CH₂OCOCH=CH₂,

(CF₃) ₂CF (CF₂) ₃CH₂CH (OH) CH₂OCOCH=CH₂,

(CF₃) ₂CF (CF₂) ₄CH₂CH (OH) CH₂OCOCH=CH₂,

(CF₃) ₂CF (CF₂) ₅CH₂CH (OH) CH₂OCOCH=CH₂,

(CF₃) ₂CF (CF₂) ₆CH₂CH (OH) CH₂OCOCH=CH₂,

(CF₃) ₂CF (CF₂) ₇CH₂CH (OH) CH₂OCOCH=CH₂,

(CF₃) ₂CF (CF₂) ₈CH₂CH (OH) CH₂OCOCH=CH₂,

C₈F₁₇-O-Ph-CH₂OCOCH=CH₂,

C₅F₁₁-O-Ph-CH₂OCOC (CH₃)=CH₂,

C₈F₁₇-O-Ph-COOCH₂C (OH) HCH₂OCOC (CH₃)=CH₂,

wherein -Ph- represents 1,4-phenylene group.

The fluoroalkyl group-containing (meth)acrylates may be used in a mixture of two or more.

Examples of the non-fluorine monomer include a (meth)acrylate and a polymerizable cyclic carboxylic anhydride. The (meth)acrylate may be an ester of (meth)acrylic acid with an aliphatic alcohol, for example, a monohydric alcohol or a polyhydric alcohol (for example, a dihydric alcohol).

Examples of the polymerizable cyclic carboxylic anhydride include polymerizable cyclic carboxylic anhydrides described in Japanese Laid-Open Patent Publication No. 2001-158811.

Examples of the non-fluorine monomer include the following monomers:
(meth)acrylates such as 2-ethylhexyl (meth)acrylate, cyclohexyl (meth)acrylate, lauryl (meth)acrylate, stearyl (meth)acrylate, hydroxyalkyl (meth)acrylate, tetrahydrofurfuryl (meth)acrylate, polyoxyalkylene (meth)acrylate, alkoxypolyoxyalkylene (meth)acrylate, 3-chloro-2-hydroxypropyl (meth)acrylate, glycidyl (meth)acrylate, N,N-dimethylaminoethyl (meth)acrylate, N,N-diethylaminoethyl (meth)acrylate, benzyl (meth)acrylate glycidyl methacrylate, hydroxypropyl monomethacrylate, 2-hydroxy-3-phenoxypropyl acrylate, 2-hydroxyethyl acrylate, glycerol monomethacrylate, β-acryloyloxyethyl hydrogen succinate, β-methacryloyloxyethyl hydrogen phthalate, 2-acryloyloxyethylhexahydrophthalic acid, 2-acryloyloxyethylphthalic acid, 2-acryloyloxyethyl-2-hydroxyethylphthalic acid, methacrylic acid hydroxypropyltrimethylammonium chloride, dimethylaminoethyl methacrylate, diethylaminoethyl methacrylate, 2-acryloyloxyethyl acid phosphate, glucosylethyl methacrylate, methacrylamide, 2-hydroxy-3-acryloyloxypropyl methacrylate, 2-methacryloyloxyethyl acid phosphate, and hydroxypivalic acid neopentyl glycol diacrylate; styrenes such as styrene and p-isopropylstyrene; (meth)acrylamides such as (meth)acrylamide, diacetone(meth)acrylamide, N-methylol(meth)acrylamide, N-butoxymethylacrylamide, and 2-acrylamide-2-methylpropanesulfonic acid; and vinyl ethers such as vinyl alkyl ether;
as well as ethylene, butadiene, vinyl acetate, chloroprene, vinyl halides such as vinyl chloride, vinylidene halide, acrylonitrile, vinyl alkyl ketone, maleic anhydride, N-vinylcarbazole, vinylpyrrolidone, and (meth)acrylic acid.

Examples of the polymerizable cyclic carboxylic anhydride include maleic anhydride, citraconic anhydride, itaconic anhydride, maleated methylcyclohexane tetrabasic acid anhydride, methyltetrahydrophthalic anhydride, endomethylenetetrahydrophthalic anhydride, methylendomethylenetetrahydrophthalic anhydride, and chlorendic anhydride, and their derivatives.

The non-fluorine monomer may be a silicon monomer (for example, a (meth)acryloyl group-containing alkylsilane, (meth)acryloyl group-containing alkoxysilane, or (meth)acryloyl group-containing polysiloxane).

The fluorine-containing polymer (C1) can be produced by radical polymerization.

The polymer (C1) may be a chain polymer or a graft copolymer. Examples of the graft copolymer include a graft copolymer described in the above-mentioned Japanese Laid-Open Patent Publication No. 2001-158811, which has a recurring unit derived from a vinyl monomer having a perfluoroalkyl group and a recurring unit derived from a polymerizable cyclic carboxylic anhydride; and a graft copolymer described in WO 01/19884, which has a non-fluorine backbone polymer and a fluorine-containing graft chain.

Even if the polymer (C1) has a too high weight average molecular weight, the above dispersing action in a resin, dispersing action in a solvent, and water and oil-repellent action may not be sufficiently obtained. Usually, the weight average molecular weight is preferably 3,000 or more, more preferably 5,000 or more, and particularly preferably 7,000 or more, and is preferably 30,000 or less, more preferably 20,000 or less, and particularly preferably 15,000 or less.

The dispersing agent (C) used may be, in addition to the fluorine-containing polymer, silicone oil or fluorinated silicone oil in a combination with other components.

The dispersing agent may be a solid, liquid, or gas at room temperature (about 25°C), as long as the agent has the above actions (dispersing action in a resin, water and oil-repellent action, and, if necessary, dispersing action in a solvent). However, the dispersing agent is preferably a liquid, because a liquid can be easily handled.

Examples of commercially available products of the fluorine-containing polymer include, but are not limited to, UNIDYNE series composed of a fluorine-containing graft copolymer (such as TG-656 and TG-652, both manufactured by Daikin Industries, Ltd.), FTONE series composed of a fluorine-containing polymer (such as GM-105, manufactured by Daikin Industries, Ltd.), ASAHI GUARD (such as AG-5850, manufactured by Asahi Glass Co., Ltd.), and NOXGUARD (such as ST-320, manufactured by NOK Corp.). Examples of commercially available silicone products include SD8000, SH200, and SH1107 manufactured by Dow Corning Toray Silicone Co., Ltd., and KF96 and KF99 manufactured by Shin-Etsu Chemical Co., Ltd.

The amount of the dispersing agent (C) added is advantageously 5 parts by weight or more, more advantageously 10 parts by weight or more, and particularly advantageously 20 parts by weight or more based on 100 parts by weight of the water-repellent binder resin (A) in order to obtain an effect by the addition, and is preferably 100 parts by weight or less, more preferably 80 parts by weight or less, and particularly preferably 60 parts by weight or less in order to, for example, reduce the material cost.

The inorganic particles with a low heat capacity (d) correspond to particles of many metal or nonmetal elements and particles of some metallic compounds. Specific examples include metals such as gold, silver, aluminum, iron, and copper; and nonmetals such as carbon and boron; as well as metallic compounds.

From other points of view, the inorganic particles with a low heat capacity (d) are preferably conductive. Many of water-repellent binders are electrostatic, and allow dusts as freezing nuclei to be attached to the surface of a film easily. Therefore, by preventing charging of the surface of a film, formation of ice (snow) can be further prevented.

In order not to impair weather resistance, the inorganic particles with a low heat capacity preferably have excellent weather resistance, corrosion resistance, and solvent resistance.

The inorganic particles with a low heat capacity (d) preferably have a molar heat capacity of 7 Ca/JK⁻¹mol⁻¹ or less. The lower limit is typically 6 Ca/JK⁻¹mol⁻¹.

The inorganic particles with a low heat capacity (d) preferably have a primary mean particle diameter of 2 µm to 12 µm in terms of dispersibility.

As such inorganic particles with a low heat capacity (d), carbon black as a carbon element, more particularly, crystalline carbon black is particularly preferable.

When the inorganic particles with a low heat capacity (d) are added, the composition exhibits further improved sliding properties, regardless of whether or not the composition is water-repellent, although the reason is not clear. In addition, an action for defrosting easier when frosted can be expected.

The simple carbon substance (B) used in the present invention is, as described above,
(B-1) a simple carbon substance with DBP absorbed in an amount of 45 to 450 cm³/100 g,
(B-2) a simple carbon substance with a specific surface area by nitrogen adsorption of 30 to 400 m²/g, or
(B-3) a simple carbon substance with DBP absorbed in an amount of 45 to 450 cm³/100 g and a specific surface area by nitrogen adsorption of 30 to 400 m²/g.

The amount of DBP absorbed is 45 cm³/100 g or more, and preferably 60 cm³/100 g or more. The upper limit is 450 cm³/100 g.

If the amount of DBP absorbed is small, the development level of the structure is low, and the sliding angle tends to be large depending on the combination with the dispersing agent (C). If the amount of DBP absorbed is large, the development level of the structure is high, which requires a design for uniform dispersion.

The specific surface area by nitrogen adsorption is 30 m²/g or more. The upper limit is 400 m²/g.

If the specific surface area by nitrogen adsorption is small, the specific surface area is small, and the sliding angle tends to be large depending on the combination with the dispersing agent (C). If the specific surface area by nitrogen adsorption is large, the specific surface area is large, which requires a design for uniform dispersion.

The specific surface area by nitrogen adsorption almost corresponds with the specific surface area, and almost corresponds with the particle diameter when the simple carbon substance is particles. For example, the mean particle diameter of particles of the simple carbon substance with a specific surface area by nitrogen adsorption of 30 m²/g corresponds to about 60 nm, and the mean particle diameter of particles of the simple carbon substance with a specific surface area by nitrogen adsorption of 400 m²/g corresponds to about 10 nm.

The particularly preferable simple carbon substance (B) used in the present invention, which exhibits an excellent effect of preventing formation of ice (snow) (has a small sliding angle), is the substance (B-3) that has DBP absorbed in an amount in the above range and a specific surface area by nitrogen adsorption in the above range in combination.

Specific examples of the simple carbon substance (B) that can be used include carbon black, carbon nanotube, natural graphite, fullerene, and carbon nanohorn, all of which have DBP absorbed in an amount and/or a specific surface area by nitrogen adsorption in the above specific ranges.

Specific examples of carbon black include, but are not limited to, furnace black, channel black, thermal black, lamp black, and acetylene black.

Carbon nanotube and carbon nanohorn absorb DBP in an amount of about 400 cm³/100 g.

Other examples of the simple carbon substance (B) that can be used in the present invention include fluorocarbon and carbon black surface treated in various manners.

The amount of the simple carbon substance (B) added is advantageously 25 parts by weight or more, more advantageously 40 parts by weight or more, and particularly advantageously 60 parts by weight or more based on 100 parts by weight of the water-repellent binder resin (A) in order to obtain an effect by the addition, and is preferably 400 parts by weight or less, more preferably 200 parts by weight or less, and particularly preferably 150 parts by weight or less in order to, for example, ensure good dispersion and reduce the material cost.

A solvent is useful for uniformly mixing the components of the surface treatment composition easily, forming a film easily, and uniformly dispersing various components in the water-repellent binder resins (a) and (A). Accordingly, the solvent (e) and the solvent used in the various surface treatment compositions of the present invention (hereinafter simply called solvent (e)) are selected taking the other components (a), (b), (c), and (d) and, furthermore, the components (A), (B), and (C) into consideration.

The solvent (e) may be an inorganic solvent system such as water, but is preferably an organic solvent system in terms of the above aspects. The organic solvent system may be a single solvent or a system in which two or more solvents are mixed. When two or more solvents are used, the system preferably contains a polar organic solvent and a non-polar organic solvent so that the other components can be further uniformly dispersed.

Examples of the polar organic solvent include butyl acetate, ethyl acetate, acetone, methyl isobutyl ketone, ethanol, isopropanol, butanol, and ethylene glycol monoalkyl ether.

Examples of the non-polar organic solvent include toluene, xylene, n-hexane, cyclohexane, and heptane, as well as turpentine as a petroleum spirit.

In particular, by mixing butyl acetate with a petroleum solvent (such as toluene, xylene, n-hexane, cyclohexane, heptane, or turpentine) for use, water sliding properties of the resulting film can be adjusted. The mixing ratio differs according to the types of the solvents used in combination and is arbitrary, but butyl acetate is preferably equal to or larger than the petroleum solvent on a weight basis in order to ensure good water sliding properties.

In the surface treatment composition of the present invention, the PTFE particles (b) are added in an amount of 100 parts by weight to 200 parts by weight, and the dispersing agent (c) is added in an amount of 5 parts by weight to 30 parts by weight, based on 100 parts by weight (hereinafter the same unless otherwise specified) of the water-repellent binder resin (a). The inorganic particles with a low heat capacity (d) are preferably added in an amount of 25 parts by weight to 200 parts by weight, and the solvent (e) is preferably added in an amount of 400 parts by weight to 2,000 parts by weight.

In the present invention, in the case of an outdoor application such as a solar panel cover in which icing and deicing are repeated due to the difference between temperatures or amounts of sunshine, it is desired to increase the strength of the film to maintain sliding properties for a long time. For this reason, the resin is desirably crosslinked. Although crosslinking can be achieved by irradiation with high energy rays or the like without using the crosslinking agent (E), it is preferable to use a resin having a chemically curable group as the binder resins (a) and (A) and adding the crosslinking agent (E) further.

Examples of the binder resin having a chemically curable group include, but are not limited to, the above fluororesin having a chemically curable group, as well as a silicone resin, polyester resin, polyolefin resin, acrylic resin, and polyurethane resin having a chemically curable group.

The crosslinking agent (E) may be a crosslinking agent that reacts with the curable group of the resin having a curable group to cure the resin. Examples of the agent usually used include an isocyanate compound, an amino resin, an acid anhydride, a polysilane compound, a polyepoxy compound, and an isocyanate group-containing silane compound.

Examples of the isocyanate compound include, but are not limited to, 2,4-tolylene diisocyanate, diphenylmethane-4,4-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, and n-pentane-1,4-diisocyanate; their trimers; their adducts or burets; their polymers having two or more isocyanate groups; and blocked isocyanates.

Examples of the amino resin include, but are not limited to, a urea resin, a melamine resin, a benzoguanamine resin, a glycoluril resin; a methylolated melamine resin obtained by methylolating melamine; and an alkyl etherified melamine resin obtained by etherifying methylolated melamine with an alcohol such as methanol, ethanol, or butanol.

Examples of the acid anhydride include, but are not limited to, phthalic anhydride, pyromellitic anhydride, and mellitic anhydride.

The polysilane compound is a compound having two or more groups selected from hydrolyzable groups directly bonded to a silicon atom and a SiOH group, or a condensate thereof. Examples of the compound that can be used include compounds described in Japanese Laid-Open Patent Publication No. 2-232250 and Japanese Laid-Open Patent Publication No. 2-232251. Specific examples include dimethyldimethoxysilane, dibutyldimethoxysilane, diisopropyldipropoxysilane, diphenyldibutoxysilane, diphenylethoxysilane, diethyldisilanol, dihexyldisilanol, methyltrimethoxysilane, methyltriethoxysilane, ethyltriethoxysilane, propyltrimethoxysilane, phenyltriethoxysilane, phenyltributoxysilane, hexyltriacetoxysilane, methyltrisilanol, phenyltrisilanol, tetramethoxysilane, tetraethoxysilane, tetrapropoxysilane, tetraacetoxysilane, diisopropoxydivaleroxysilane, and tetrasilanol.

As the polyepoxy compound or the isocyanate group-containing silane compound, compounds described in Japanese Laid-Open Patent Publication No. 2-232250 and Japanese Laid-Open Patent Publication No. 2-232251 can be used, for example. Preferable specific examples include the following compounds:

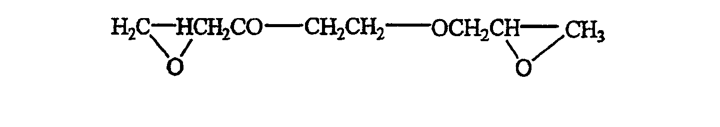

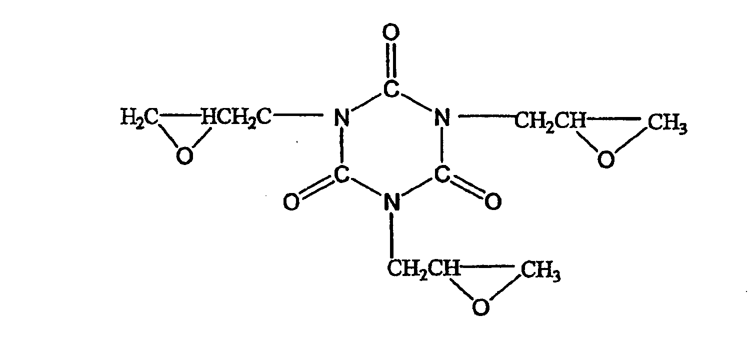

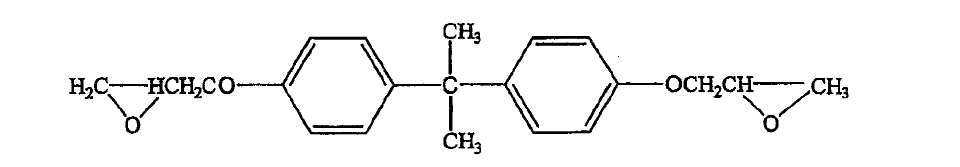

OCNC₃H₆Si (OC₂H₅)₃,

and

OCNC₂H₄Si (OCH₃)₃.

The crosslinking agent (E) is added in an amount of 0.1 equivalent or more, and preferably 0.5 equivalent or more, and 5 equivalents or less, and preferably 1.5 equivalents or less based on one equivalent of the curable group in the curable group-containing binder resin.

In the present invention, an accelerator may be used. Examples of the accelerator include an organotin compound, an acidic phosphate, a reaction product of an acidic phosphate with an amine compound, an amine compound, and lead octylate. The accelerators may be used singly or in a combination of two or more.

The amount of the accelerator added is 1.0 × 10⁻⁶ parts by weight or more, and preferably 5.0 × 10⁻⁵ parts by weight or more, and 1.0 × 10⁻² parts by weight or less, and preferably 1.0 × 10⁻³ parts by weight or less based on 100 parts by weight of the binder resin (A).

The surface treatment composition of the present invention can be prepared into various forms that can form a film. However, the composition is preferably prepared into a powder paint or a solvent-type paint, more particularly, a solvent-type paint, in particular, an organic solvent-type paint, because a film can be formed easily.

The surface treatment composition of the present invention preferably has a solid concentration of 5 to 40 wt%, and particularly 15 to 30 wt% in terms of applicability and dispersibility.

The second to fourth surface treatment compositions of the present invention are composed of the water-repellent binder resin (A), the simple carbon substance (B), and the dispersing agent (C) as essential components. If necessary, the compositions are composed of, in addition to the components (A) to (C), the solvent (e) and the accelerator.

In the first to fourth surface treatment compositions of the present invention, various additives that do not essentially affect the object and the effect of the present invention may be added.

Examples of such an additive that does not impair the object of the present invention include a pigment, other resins, other dispersing agents, a flow adjuster, an anti-flooding agent, an antioxidant, and a UV absorber.

The surface treatment composition as a solvent-type paint is prepared by feeding each component into the solvent (e) and stirring the components sufficiently. The stirring method is not specifically limited, but is preferably ultrasonic stirring or forced stirring, because such a method can uniformly disperse particle components such as the PTFE particles (b) and the inorganic particles with a low heat capacity (d) easily. Alternatively, the stirring method may comprise feeding each component into the solvent (e) and mixing the components sufficiently, or may comprise pretreating the simple carbon substance (B) with the dispersing agent (C), feeding the dispersion into the solvent (e) together with the binder resin (A), and mixing the components sufficiently.

The stirring method is not specifically limited, but is preferably ultrasonic stirring or forced stirring, because such a method can uniformly disperse solid components such as the simple carbon substance (B) easily.

When the composition is prepared into a powder paint, it is preferable to pretreat the simple carbon substance (B) with the dispersing agent (C) and then mix the dispersion with the binder resin (A).

As the coating method, methods such as, for example, dip coating, bar coating, roll down coating, and spraying can be employed without specific limitations. After coating, the film is dried at room temperature or dried with heat if necessary to form a cured film.

The film thickness of the film may be appropriately selected according to the part to which the film is applied. Usually, however, the thickness is preferable 0.1 µm or more, and more preferably 1 µm or more, and is preferably 0.2 mm or less, and more preferably 0.1 mm or less.

The substrate to which the film is applied is determined according to the type of the heat exchanger having a frosting problem without specific limitations. Examples include aluminum, stainless steel, copper, various alloys, and ceramics.

Thus, the resulting film (surface structure with the heat exchange surface formed) can provide the heat exchange surface with the surface portions A and the surface portions B, and can have easy frost/ice release properties, for example.

Further, the film can provide with the heat exchange surface with a sliding angle (4 µL water droplets) of 15° or less, further 10° or less, preferably 7° or less, particularly 5° or less, and more particularly 3° or less. In addition, the surface of the film can be provided with a contact angle with water of 140° or more, further 145° or more, and particularly 150° or more.

Particularly preferably, the sliding angle of ultrafine water droplets (1 µL water droplets) is 15° or less, preferably 12° or less, more preferably 10° or less, particularly 7° or less, and more particularly 5° or less. As the sliding angle is closer to 0° (at which the film is horizontal), water sliding properties are more excellent.

The film with such surface properties can make water microdroplets formed on the water-repellent surface slide easily, avoid formation of nuclei for formation of ice (snow, frost), and exhibit an improved effect of preventing formation of ice (snow or frost).

### (Test Examples)

Next, test examples in which a surface structure was formed with the above film will be described. The film-forming method of the present invention is not limited to the forming methods used in the following test examples. Comparative Test Example 1

ZEFFLE GK-510 manufactured by Daikin Industries, Ltd. was used as a water-repellent binder resin (a), CEFRAL LUBE (trade name, modified PTFE with a mean primary particle diameter of 5 to 10 µm, weight average molecular weight: 1,500 to 20,000) manufactured by Central Glass Co., Ltd. was used as PTFE particles (b), and UNIDYNE TG-656 manufactured by Daikin Industries, Ltd. was used as a dispersing agent (c). Amounts described in Table 1 of the components were fed into an organic solvent (e) shown in Table 1, and the components were stirred and mixed using ultrasonic stirring to prepare a surface treatment composition.

The resulting surface treatment composition was applied to an aluminum plate (A1200 of JIS H4000, 100 mm × 100 mm) by spraying, and the film was left alone at room temperature for one day to cure the film. Then, the surface of the film was dried without washing to prepare a coating plate for the test (film thickness of the film: 20 µm).

The contact angle with water and the sliding angle (4 µL) were examined for the coating plate by the following methods. The results are shown in Table 1.

The contact angle with water was measured as follows.

The angle was measured in accordance with JIS R3257 with a contact angle measuring device manufactured by Kyowa Interface Science Co., Ltd. (CA-VP, trade name) at a temperature of 15 to 20°C and at a relative humidity of 50 to 70%. As the contact angle with water is lager, water repellency is higher.

The sliding angle was measured as follows.

The coating plate was horizontally fixed to a contact angle measuring device manufactured by Kyowa Interface Science Co., Ltd. (CA-VP, trade name). 4 µL of distilled water was added dropwise onto the sample plate horizontally placed under environmental conditions of a temperature of 17 ± 1°C and a relative humidity of 60 ± 2% to form water droplets. Then, the sample plate was inclined at increasing angles with an increment of 0.1° to measure the angle of the sample plate at which the water droplets began to roll down. Measurement values shown in Table 1 are initial sliding angles. As the sliding angle is smaller, water droplet sliding properties (water sliding properties) are better.

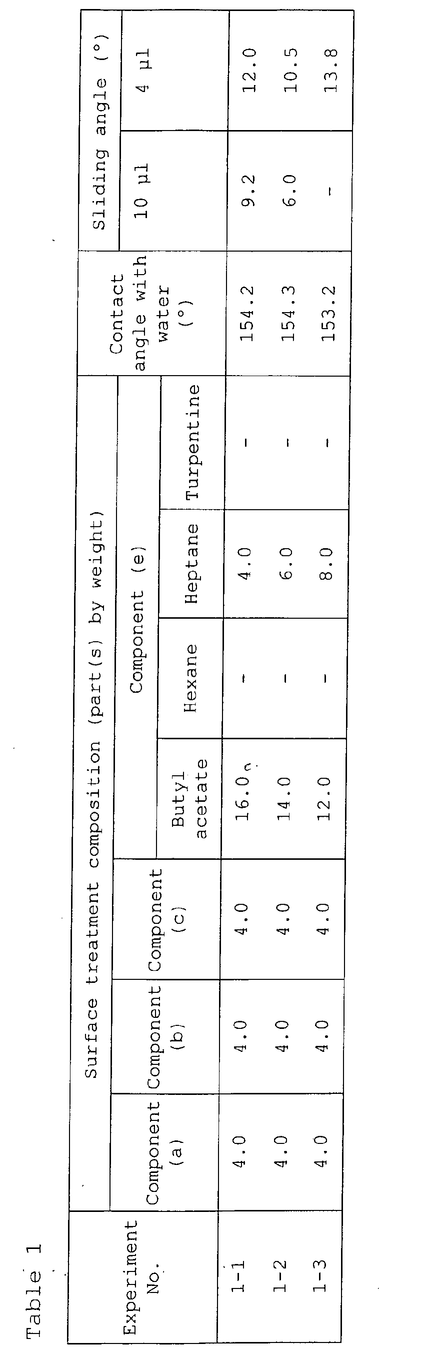

### Test Example 1

A surface treatment composition was prepared and applied to prepare a coating plate for the test in the same manner as in Test Example 1, except that, in the above Comparative Test Example 1, the components (a), (b), (c), and (e) were added at a ratio shown in Table 2, and particles shown in Table 2 were further added as inorganic particles with a low heat capacity (d) in an amount shown in the same table. As the stirring method, ultrasonic stirring was employed.

The contact angle with water and the sliding angle were examined for the coating plate in the same manner as in Comparative Test Example 1. The results are shown in Table 2. The results show that addition of the inorganic particles with a low heat capacity (d) can improve sliding properties.

The inorganic particles with a low heat capacity (d) in Table 2 are as follows.
CB: Carbon black (manufactured by Sigma-Aldrich Co., primary mean particle diameter: 2 to 12 µm)
GF: Natural graphite (primary mean particle diameter: 3 µm)

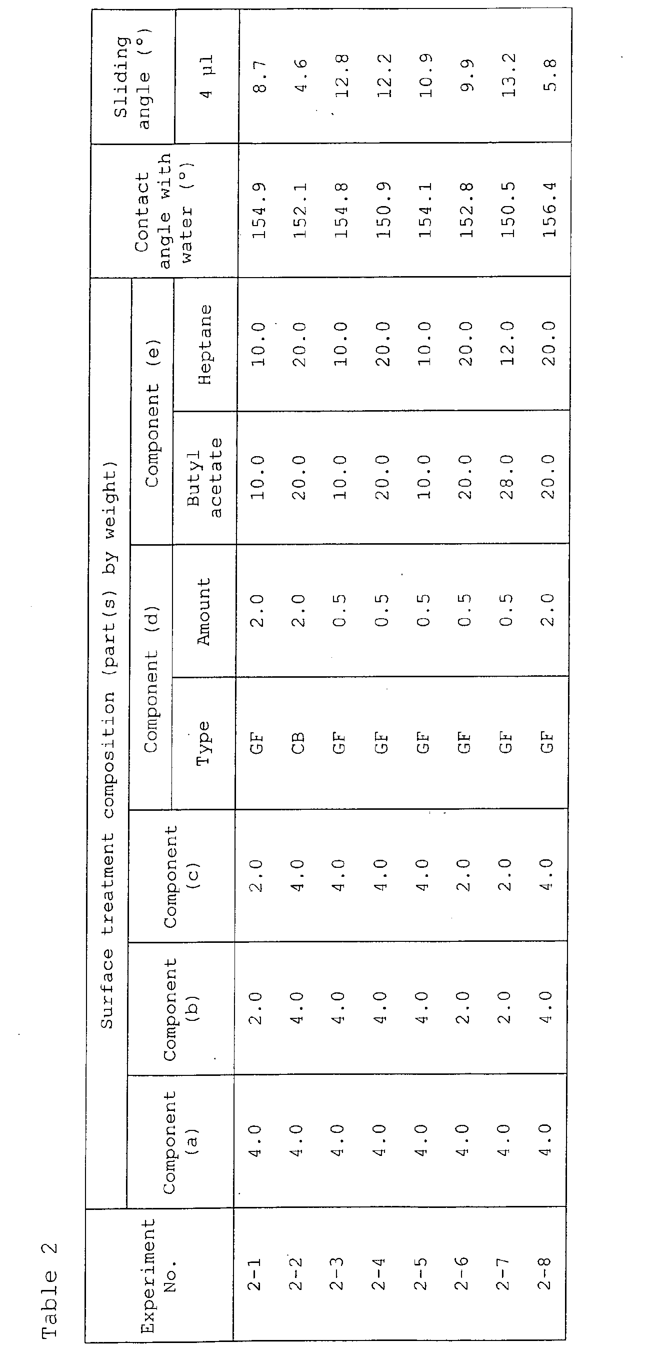

### Test Example 2

In the experiment No. 2-2 (carbon black particles) and the experiment No. 2-8 (natural graphite particles) of Test Example 1, the resulting film was cured with heat at 120°C for 10 hours to prepare a coating plate for the test.

The contact angle with water and the sliding angle were examined for the heat-cured coating plate in the same manner as in Comparative Test Example 1. The results are shown in Table 3. It is found that the film of Test Example 2 also can have sliding properties improved than that of Comparative Test Example 1.

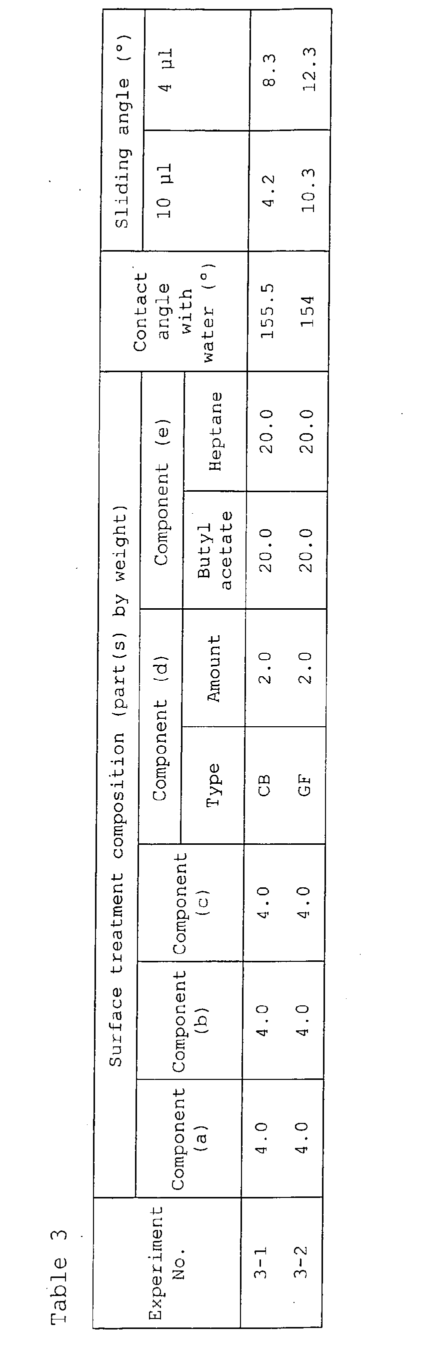

### Test Example 3

4.0 g of ZEFFLE GK-510 manufactured by Daikin Industries, Ltd. was used as a water-repellent binder resin (a), 4.0 g of CEFRAL LUBE (trade name, modified PTFE with a mean primary particle diameter of 5 to 10 µm, weight average molecular weight: 1,500 to 20,000) manufactured by Central Glass Co., Ltd. was used as PTFE particles (b), 4.0 g of UNIDYNE TG-656 manufactured by Daikin Industries, Ltd. was used as a dispersing agent (c), and 2.0 g of carbon black (manufactured by Sigma-Aldrich Co., mean particle diameter: 2 to 12 µm) was used as inorganic particles with a low heat capacity (d). The components were fed into a mixed solvent of 20 g of butyl acetate and 20 g of heptane, and the components were stirred and mixed using ultrasonic stirring to prepare a surface treatment composition.

The resulting surface treatment composition was applied to an aluminum plate (A1200 of JIS H4000, 100 mm × 100 mm) by spraying, and the film was left alone at room temperature for one day to cure the film. Then, the surface of the film was dried without washing to prepare a coating plate for the test (film thickness of the film: 20 to 30 µm).

The contact angle with water and the sliding angle (4 µL) were examined for the coating plate in the same manner as in Comparative Test Example 1 as described above to find that the contact angle with water was 152.1° and the sliding angle was 4.6°.

Next, the frost-defrost test was carried out in the following procedure.

First, the sample plate is vertically fixed in a wind tunnel, and the surface temperature of the sample plate is maintained at -7 ± 2°C.

In the wind tunnel, air containing moisture at a relative humidity of 87 ± 30 (temperature: 7 ± 0.2°C) is caused to flow in parallel with the surface of the sample plate at a wind speed of 1 m/sec, and frost is forcibly formed on the surface of the sample plate. This frost operation lasts for 20 minutes.

The surface of the sample plate is heated to 5°C immediately after the frost operation to initiate defrost operation. The same air as in the frost operation is caused to flow under the same conditions. The defrost operation lasts for two minutes.

Two cycles of such frost operation-defrost operation are continuously carried out.

That is the procedure for the frost-defrost test.

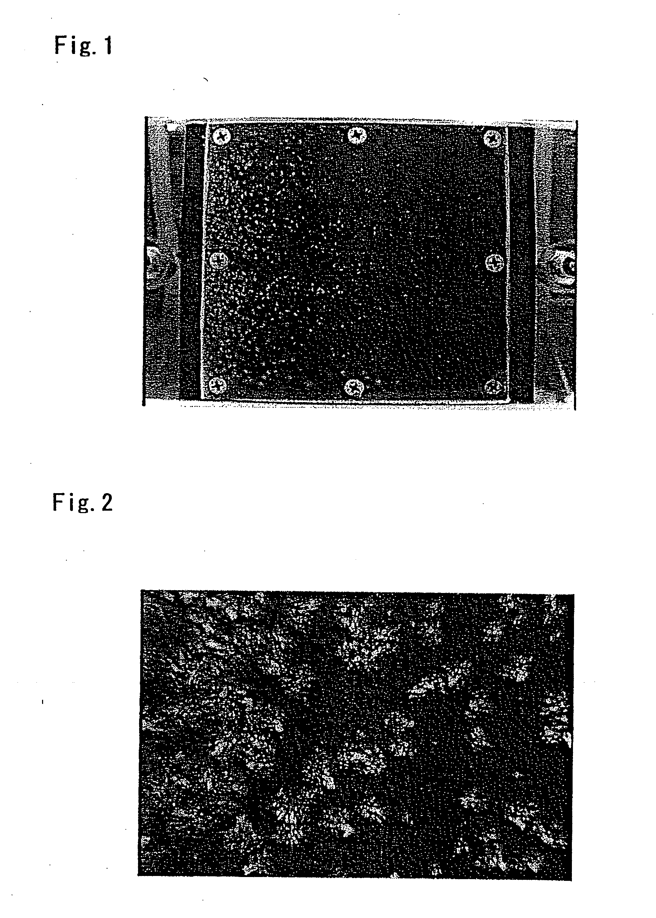

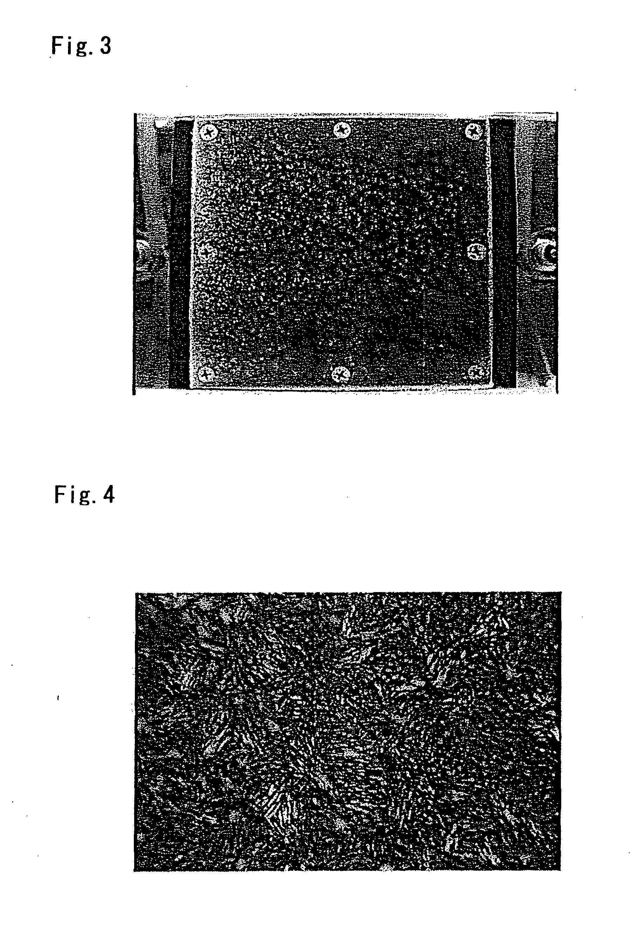

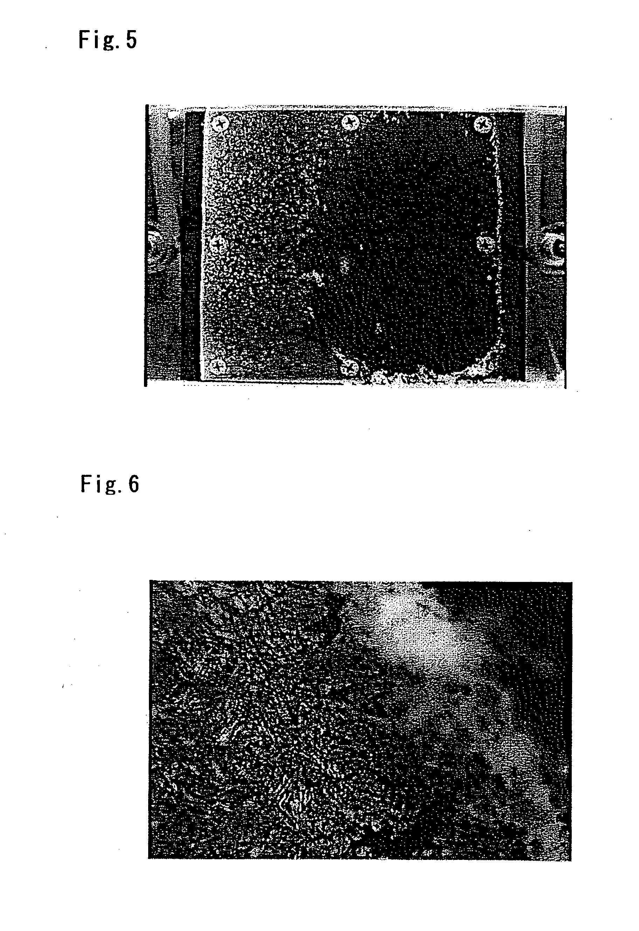

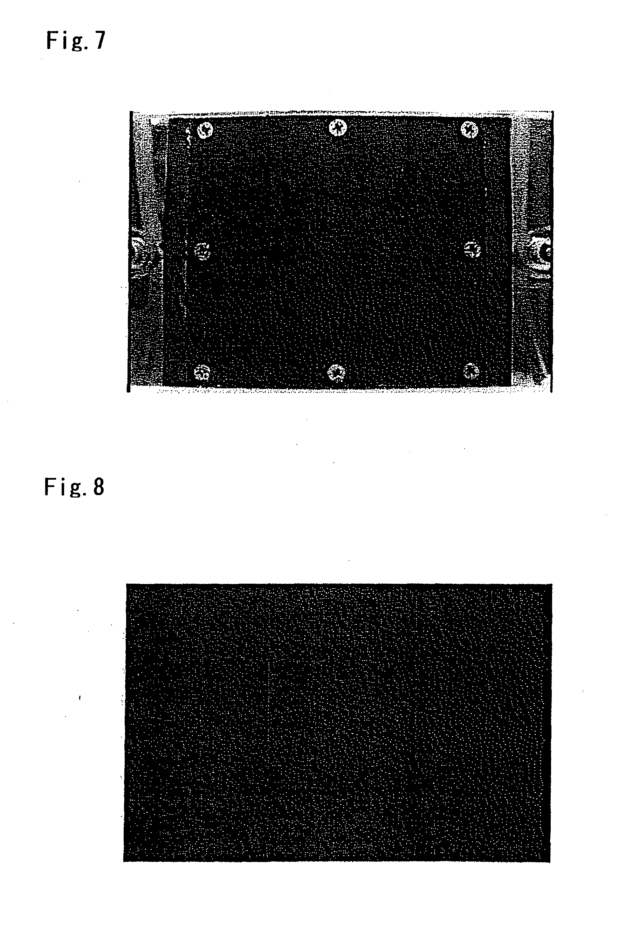

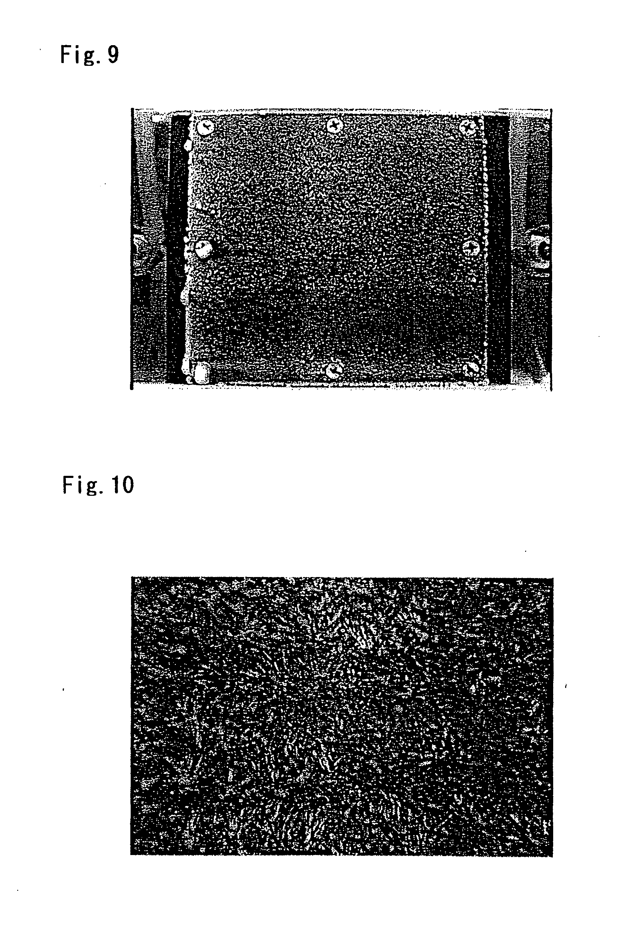

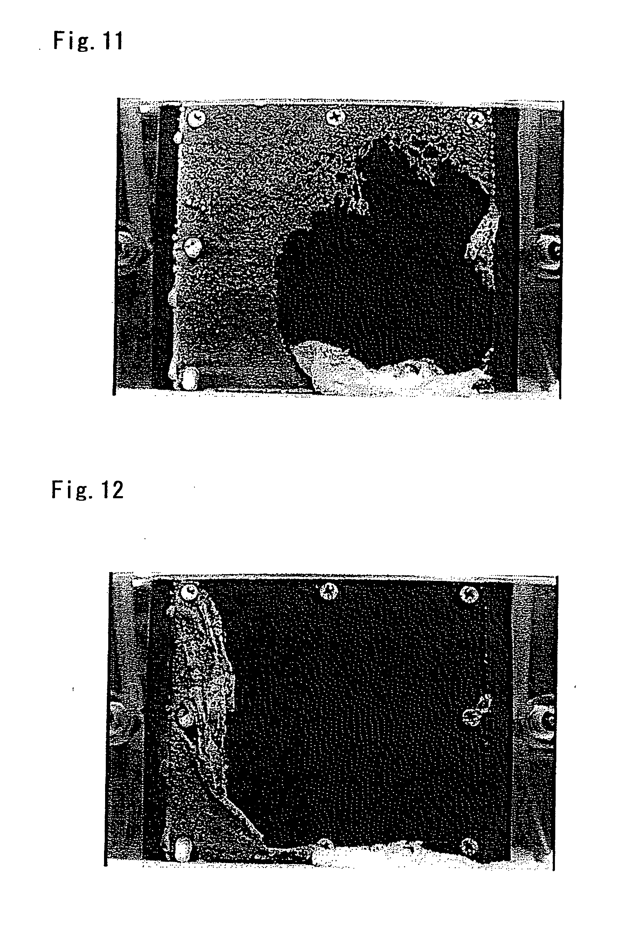

The following results were obtained from the above frost-defrost test.
(1) Frosting started 10 minutes after frost operation of the first cycle started. Photographs taken by a CCD camera (CN401 manufactured by ELMO Co., Ltd., trade name) of the state of the surface of the sample plate when frosting started are shown in Fig. 1 (overall) and Fig. 2 (enlarged, magnification: 1.2, hereinafter the same).
   Photographs taken by a CCD camera of the frosting state of the surface of the sample plate when the frost operation finished 20 minutes after the frost operation started are shown in Fig. 3 (overall) and Fig. 4 (enlarged). As is clear from the photographs, frost or ice formed on the surface of the sample plate was flocculent (an aggregate of needle-like crystals).
(2) In defrost operation of the first cycle, frost or ice formed began to be released immediately after the defrost operation started. Photographs taken by a CCD camera of the state of the surface of the sample plate when frost or ice began to be released are shown in Fig. 5 (overall) and Fig. 6 (enlarged). As is clear from these photographs, in this Test Example 3, ice slides down as a mass. In a conventional heat exchanger, ice slides down in an almost melting state, or a mass of ice does not slide down until the ice almost melts.
   Further, when the defrost operation of the first cycle finished two minutes after the defrost operation started, frost or ice was completely released from the surface of the sample plate. Photographs taken by a CCD camera of the state of the surface of the sample plate when the defrost operation finished are shown in Fig. 7 (overall) and Fig. 8 (enlarged). As is clear from these photographs, no water droplets could be visually observed on the surface of the sample plate when the defrost operation finished.
(3) In the subsequent second cycle, frosting started six minutes after frost operation started.
   Photographs taken by a CCD camera of the state of the surface of the sample plate when the frost operation of the second cycle finished 20 minutes after the frost operation started are shown in Fig. 9 (overall) and Fig. 10 (enlarged). As is clear from these photographs, the state does not differ from the state in the first frost operation.
(4) In defrost operation of the second cycle subsequently carried out, frost or ice began to be released immediately after the defrost operation started. A photograph taken by a CCD camera of the state of the surface of the sample plate when frost or ice began to be released is shown in Fig. 11 (overall).

Further, 30 seconds after the defrost operation of the second cycle started, frost or ice attached to the surface of the sample plate was almost completely released. A photograph taken by a CCD camera of the state of the surface of the sample plate when frost or ice was almost completely released is shown in Fig. 12 (overall). As is clear from these photographs, in the defrost operation of the second cycle, frost or ice slides down again as a mass.

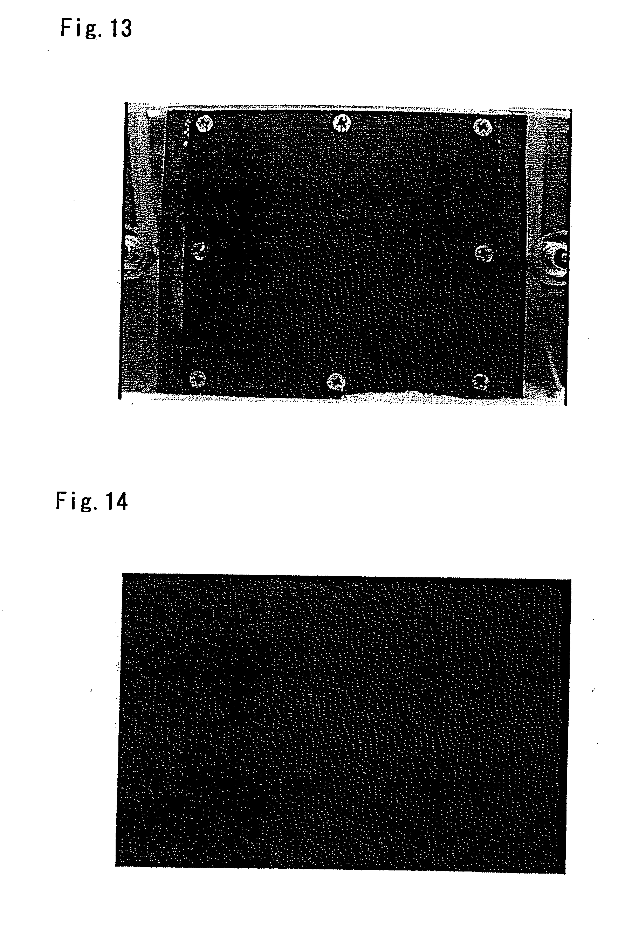

Photographs taken by a CCD camera of the state of the surface of the sample plate when the defrost operation of the second cycle finished two minutes after the defrost operation started are shown in Fig. 13 (overall) and Fig. 14 (enlarged). As is clear from these photographs, no water droplets could be visually observed on the surface of the sample plate as well after the defrost operation of the second cycle finished.

### Comparative Test Example 2

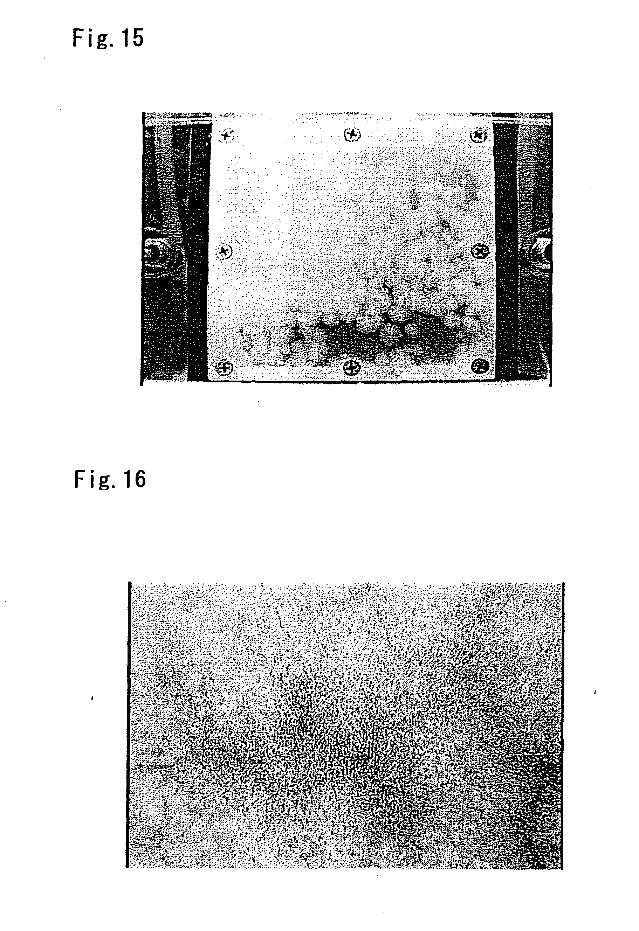

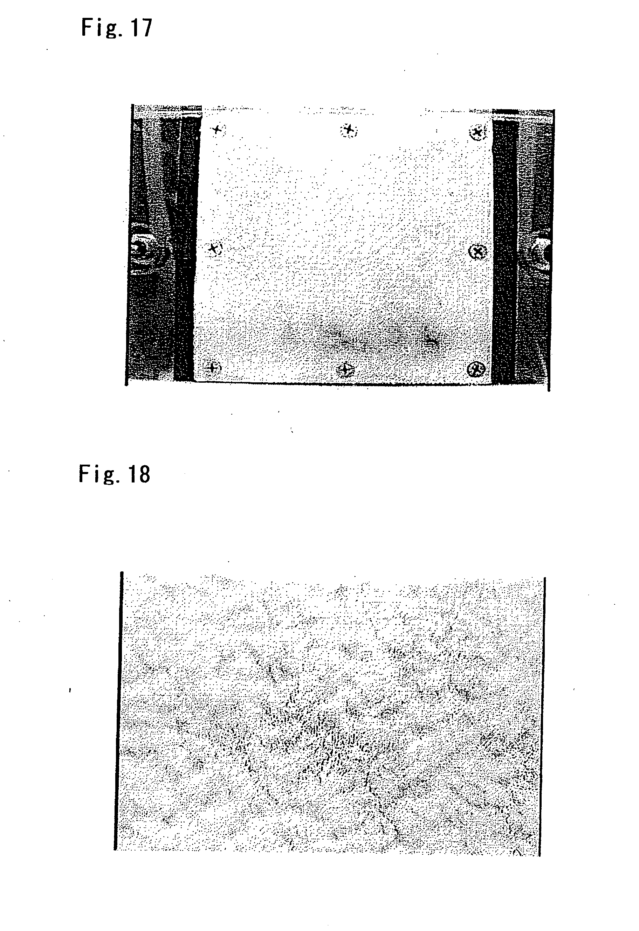

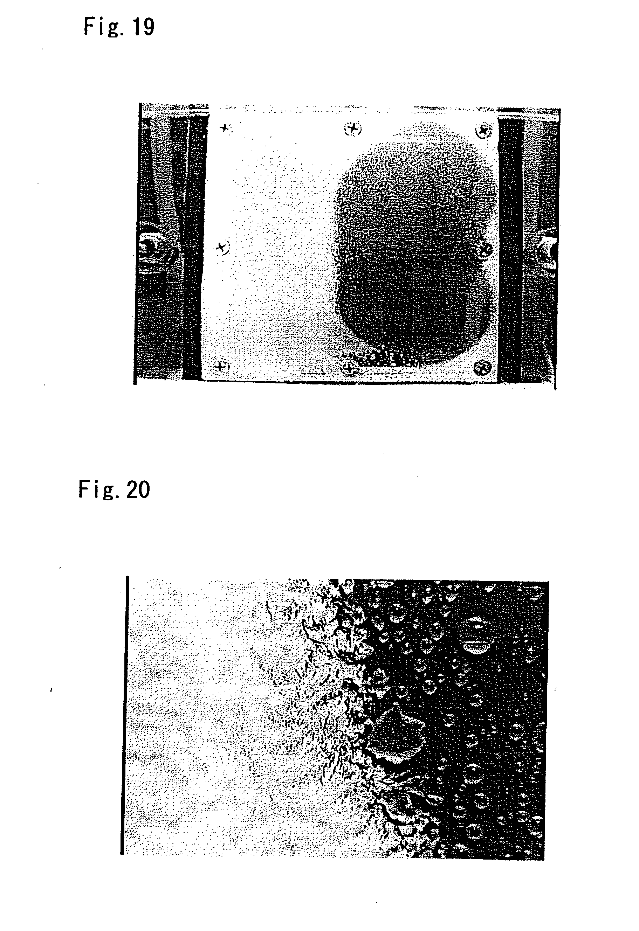

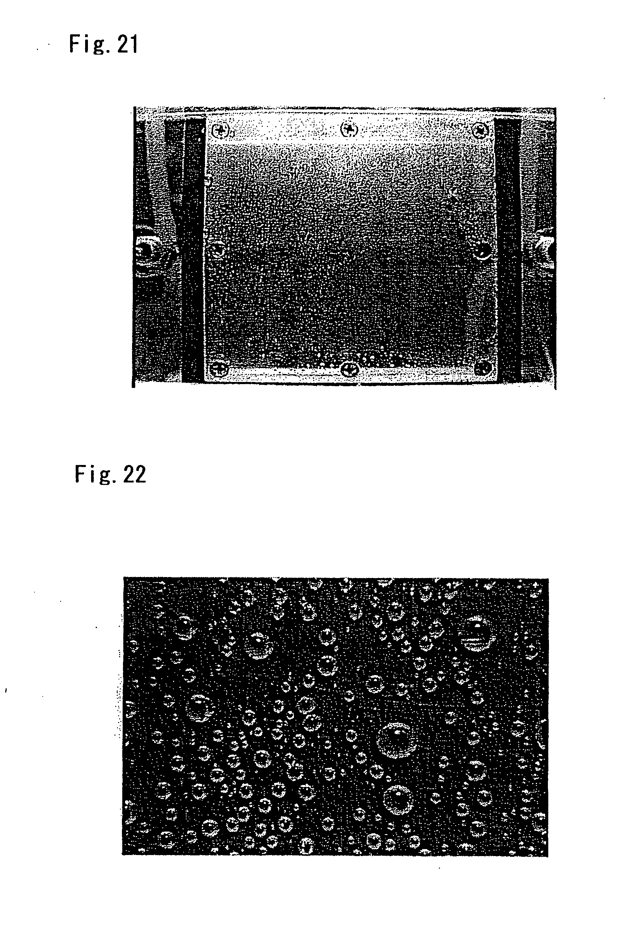

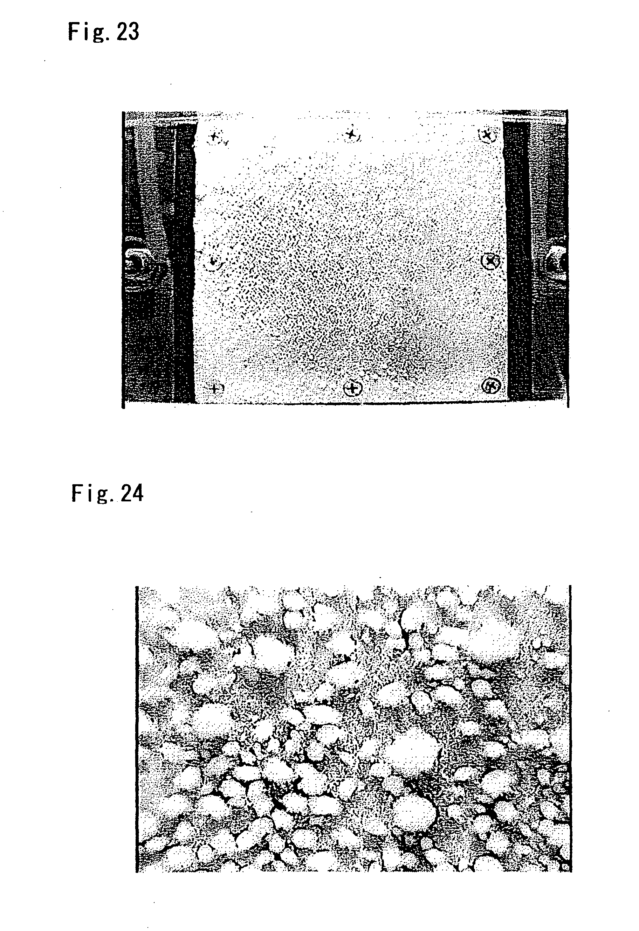

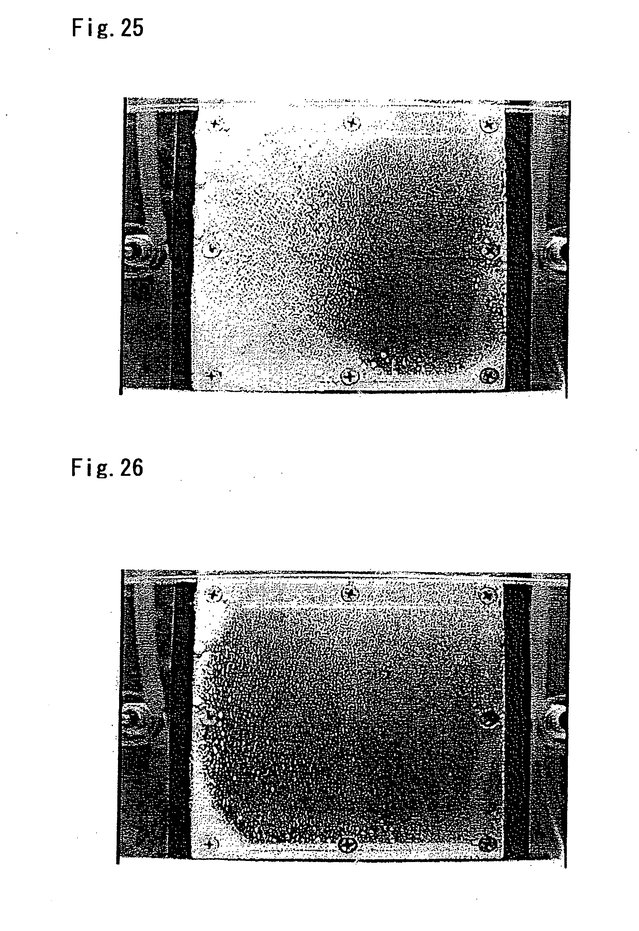

A surface treatment composition prepared was used to prepare a sample plate in the same manner as in Test Example 3, and a frost-defrost test was carried out in the same manner as in Test Example 3, except that, in Test Example 3, the inorganic particles with a low heat capacity (d) were not added. The results were as follows.
(1) Frosting started about five minutes after frost operation of the first cycle started, and ice was formed on almost the whole surface about ten minutes after the frost operation of the first cycle started. Photographs taken by a CCD camera of the state of the surface of the sample plate when the whole surface was frosted about 10 minutes after the frost operation started are shown in Fig. 15 (overall) and Fig. 16 (enlarged).
   Photographs taken by a CCD camera of the frosting state of the surface of the sample plate when the frost operation of the first cycle finished 20 minutes after the frost operation started are shown in Fig. 17 (overall) and Fig. 18 (enlarged).
   It is found that, as compared with the above-described Test Example 3, the amount of frost formed is larger when the frost operation finished. The fact can be explained to show that, since water droplets condensed on the surface of the sample plate of Test Example 3 are carried downstream or easily fall downward by the wind pressure, only a small amount of the water droplets are frozen by the frost operation on the surface of the sample plate.
(2) In defrost operation of the first cycle, frost or ice formed began to melt immediately after the defrost operation started. Photographs taken by a CCD camera of the state of the surface of the sample plate when frost or ice began to melt are shown in Fig. 19 (overall) and Fig. 20 (enlarged). As is clear from these photographs, polka-dotted water droplets are attached to the areas from which ice has been released, so that frost or ice completely melts. This situation differs from the situation in Test Example 3 where a mass of ice slides down.
   Further, when the defrost operation of the first cycle finished two minutes after the defrost operation started, frost or ice completely melted. Photographs taken of the state of the surface of the sample plate when the defrost operation finished are shown in Fig. 21 (overall) and Fig. 22 (enlarged). As is clear from these photographs, unlike the above-described Test Example 3, many large or small water droplets could be visually observed on the surface of the sample plate after the defrost operation finished.
(3) In the subsequent second cycle, frosting started six minutes after operation started.
   Photographs taken by a CCD camera of the state of the surface of the sample plate when the frost operation of the second cycle finished 20 minutes after the frost operation started are shown in Fig. 23 (overall) and Fig. 24 (enlarged). As is clear from these photographs, large water droplets were frozen. It is found that, in this respect, there is a large difference from the state in the first frost operation. It is presumed that large water droplets having been attached to the surface of the sample plate after the first defrost operation finished were frozen.
(4) In defrost operation of the second cycle subsequently carried out, frost or ice began to melt immediately after the defrost operation started. A photograph taken by a CCD camera of the state of the surface of the sample plate when frost or ice began to melt immediately after the defrost operation started is shown in Fig. 25 (overall). One minute after the defrost operation started, frost or ice almost completely melted. A photograph taken of the state of the surface of the sample plate at that time is shown in Fig. 26 (overall). As is clear from these photographs, the attached frost or ice melts as a mass without sliding down.

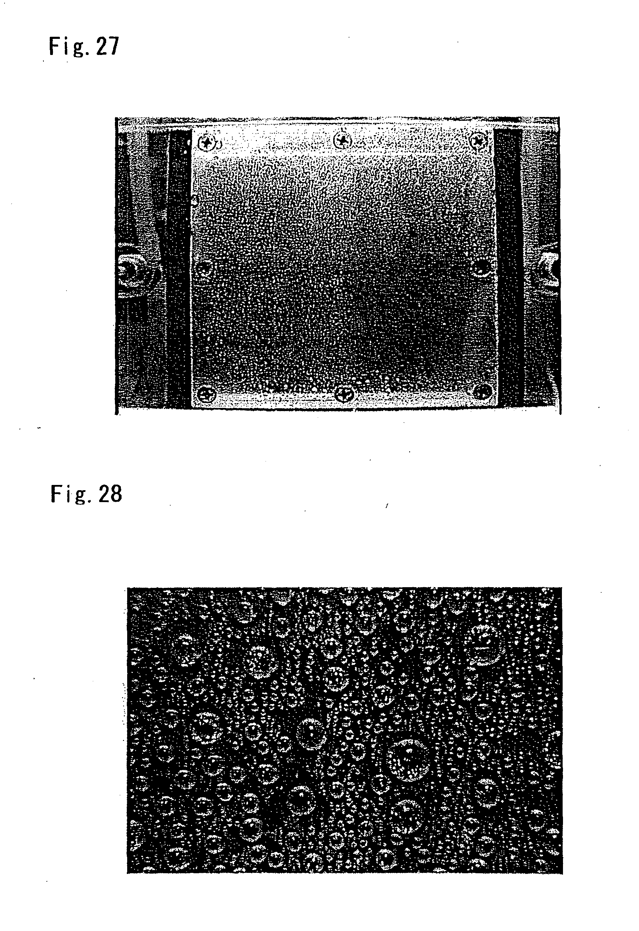

Photographs taken by a CCD camera of the state of the surface of the sample plate when the defrost operation of the second cycle finished two minutes after the defrost operation started are shown in Fig. 27 (overall) and Fig. 28 (enlarged). As is clear from these photographs, many more large or small water droplets remained on the surface as compared with the surface when the above-described first defrost operation finished.

### Test Example 4

4.0 g of a TFE copolymer having a chemically curable group (hereinafter called "binder resin A1") was used as a water-repellent binder resin (A), 2.0 g of a simple carbon substance with an amount of DPB absorbed and a specific surface area by nitrogen adsorption shown in Table 4 (B1 to B16) was used as a simple carbon substance (B), and 4.0 g of a fluorine-containing graft copolymer (weight average molecular weight: 7,000, C-1) was used as a dispersing agent (C). The components were fed into 40.0 g of an organic solvent (D)(butyl acetate/heptane = 1/1, weight ratio), and the components were stirred and mixed using ultrasonic stirring to prepare a surface treatment composition.

Each of the resulting surface treatment composition was applied to an aluminum plate (A1200 of JIS H4000, 100 mm × 100 mm) by spraying, and the film was left alone at room temperature for one day to cure the film. Then, the surface of the film was dried without washing to prepare a coating plate for the test (film thickness of the film: 20 µm). For the coating plate, the contact angle with water and the sliding angle (4 µL) were examined by the above methods, and the sliding angle of ultrafine water droplets (1 µL) was examined by the following method. The results are shown in Table 4.

### (Method for measuring sliding angle of ultrafine water droplets)

The coating plate is horizontally fixed to a contact angle measuring device manufactured by Kyowa Interface Science Co., Ltd. (CA-VP, trade name). 1 µL of distilled water is added dropwise onto the sample plate horizontally placed under environmental conditions of a temperature of 17 ± 1°C and a relative humidity of 60 ± 2%, using a pneumatic delivery syringe (precision needle valve micro-dispenser, 740MD-SS manufactured by EDF of the United States, trade name) to form water droplets. Then, the sample plate is inclined at increasing angles with an increment of 0.1° to measure the angle of the sample plate at which the water droplets begin to roll down. Measurement values shown in Table 4 are initial sliding angles of ultrafine water droplets. As the sliding angle is smaller, ultrafine water droplet sliding properties (water sliding properties) are better.

**Table 4**

| Experiment No. | Simple carbon substance (B) | | | Contact angle with water (°) | Sliding angle (°) | |
|---|---|---|---|---|---|---|
| | No. | Amount of DBP absorbed (cm³/100 g) | Specific surface area by nitrogen adsorption (m²/g) | | 4 µl | 1 µl |
| X1-1 | B1 | 180 | 65 | 157.6 | 1.3 | 1.7 |
| X1-2 | B2 | 169 | 38 | 158.0 | 1.2 | 3.6 |
| X1-3 | B3 | 168 | 58 | 158.8 | 1.7 | 2.7 |
| X1-4 | B4 | 165 | 125 | 158.4 | 1.4 | 2.5 |
| X1-5 | B5 | 161 | 57 | 157.2 | 1.5 | 4.1 |
| X1-6 | B6 | 155 | 225 | 158.4 | 1.3 | 1.6 |
| X1-7 | B7 | 142 | 33 | 157.8 | 1.5 | 3.3 |
| X1-8 | B8 | 140 | 220 | 158.4 | 2.2 | 2.7 |
| X1-9 | B9 | 135 | 50 | 157.6 | 2.1 | 2.7 |
| X1-10 | B10 | 130 | 32 | 158.8 | 1.5 | 2.4 |
| X1-11 | B11 | 113 | 74 | 157.6 | 1.2 | 1.8 |
| X1-12 | B12 | 110 | 115 | 158.0 | 1.2 | 1.7 |
| X1-13 | B13 | 100 | 110 | 157.0 | 1.3 | 3.0 |
| X1-14 | B14 | 93 | 36 | 157.2 | 1.7 | 4.0 |
| X1-15 | B15 | 56 | 250 | 156.6 | 3.3 | 6.6 |
| X1-16 | B16 | 45 | 125 | 157.1 | 2.4 | 5.5 |

### Test Example 5

A surface treatment composition was prepared in the same manner as in Test Example 4, except that, in the experiment No. X1-3 of Test Example 4, a TFE copolymer not having a chemically curable group (hereinafter called "binder resin A2") was used as a binder resin. The composition was applied in the same manner as in Test Example 4, and the resulting film was left alone at room temperature for 24 hours to prepare a coating plate for the test.

The contact angle with water, the sliding angle (4 µL), and the sliding angle of ultrafine water droplets (1 µL) were measured for the coating plate in the same manner as in Test Example 4. The results are shown in Table 5 as X-2, together with the results of the experiment No. X1-3 of Test Example 4.

### Test Example 6

A surface treatment composition was prepared in the same manner as in Test Example 4, except that, in the experiment No. X1-3 of Test Example 4, 3.2 parts by weight of the binder resin A1 having a chemically curable group and 0.8 part by weight of the binder resin A2 not having a chemically curable group were used as binder resins. The composition was applied in the same manner as in Test Example 4, and the resulting film was left alone at room temperature for 24 hours to prepare a coating plate for the test.

The contact angle with water, the sliding angle (4 µL), and the sliding angle of ultrafine water droplets (1 µL) were measured for the coating plate in the same manner as in Test Example 4. The results are shown in Table 5 as X-3.

**Table 5**

| Experiment No. | Surface treatment composition (part (s) by weight) | | Contact angle with water (°) | Sliding angle (°) | Sliding angle (°) |
|---|---|---|---|---|---|
| | Component (A1) | Component (A2) | | 4 µl | 1 µl |
| X1-3 | 4.0 | - | 158.8 | 1.7 | 2.7 |
| X2 | - | 4.0 | 157.8 | 1.4 | 3.8 |
| X3 | 2.0 | 2.0 | 155.1 | 1.7 | 3.4 |

### Test Example 7

The binder resin A1 containing a chemically curable group was used as a water-repellent binder resin (A), the carbon black particles B3 were used as a simple carbon substance (B), the fluorine-containing graft copolymer (C-1) was used as a dispersing agent (C), and an isocyanate crosslinking agent was used as a crosslinking agent (E). Amounts described in Table 5 (the same as in the experiment No. X1-3 of Test Example 4 except for the crosslinking agent) of the components were fed into butyl acetate/heptane (1/1, weight ratio), and the components were stirred and mixed using ultrasonic stirring to prepare a surface treatment composition.

The resulting surface treatment composition was applied to an aluminum plate (A1200 of JIS H4000, 100 mm × 100 mm) by spraying, and the film was left alone at room temperature for 24 hours to cure the film. Then, the surface of the film was dried without washing to prepare a coating plate for the test (film thickness of the film: 20 µm).

For the coating plate, the contact angle with water, the sliding angle (4 µL), and the ultrafine water droplet sliding angle were measured in the same manner as in Test Example 4, and the pencil hardness was examined in accordance with JIS K5600-5-4 (1999). The results are shown in Table 6, together with those of the experiment No. X1-3 of Test Example 4.

**Table 6**

| Experiment No. | Surface treatment composition (part(s) by weight) | | Contact angle with water (°) | Sliding angle (°) | | Pencil hardness |
|---|---|---|---|---|---|---|
| | Component (A1) | Component (E) | | 4 µl | 1 µl | |
| X1-3 | 4.0 | - | 158.8 | 1.7 | 2.7 | 3B |
| X4 | 4.0 | 0.073 | 158.2 | 1.3 | 1.9 | B |

### Test Example 8

A surface treatment composition was prepared in the same manner as in Test Example 4, except that, in the experiment No. X1-3 of Test Example 4, compounds shown in Table 4 (C-1 to C-4) were used as a dispersing agent (C). The composition was applied in the same manner as in Test Example 4, and the resulting film was left alone at room temperature for 24 hours to prepare a coating plate for the test.

The contact angle with water, the sliding angle (4 µL), and the sliding angle of ultrafine water droplets (1 µL) were measured for the coating plate in the same manner as in Test Example 4. The results are shown in Table 7, together with the results of the experiment No. X1-3 of Test Example 4.

The dispersing agents in Table 7 are as follows.
C-1: Fluorine-containing graft copolymer produced according to Example 3 described in Japanese Laid-Open Patent Publication No. 2001-158811 (weight average molecular weight: 7,000)
C-2: Fluorine-containing polymer (weight average molecular weight: 20,000)
C-3: Silicone oil
C-4: Paraffin (mp = 60 to 62°C)

**Table 7**

| Experiment No. | Dispersing angle (C) | Contact with water (°) | Sliding angle (°) | |
|---|---|---|---|---|
| | | | 4 µl | 1 µl |
| X5-1 | C-1 | 158.8 | 1.7 | 2.7 |
| X5-2 | C-2 | 157.1 | 2.2 | 4.5 |
| X5-3 | C-3 | 155.0 | 5.8 | 28.1 |
| X5-4 | C-4 | 151.8 | 50.7 | 90.0 |
| | | | | (Not |
| | | | | sliding) |

As described above, when the surface structure of the present invention is applied to the heat exchange surface, the heat exchange surface exhibit excellent water repellency, water sliding properties, and easy frost/ice release properties.

Next, embodiments in which the above surface structure is applied to a heat exchanger for a refrigeration apparatus will be described.

### (Embodiment 1)

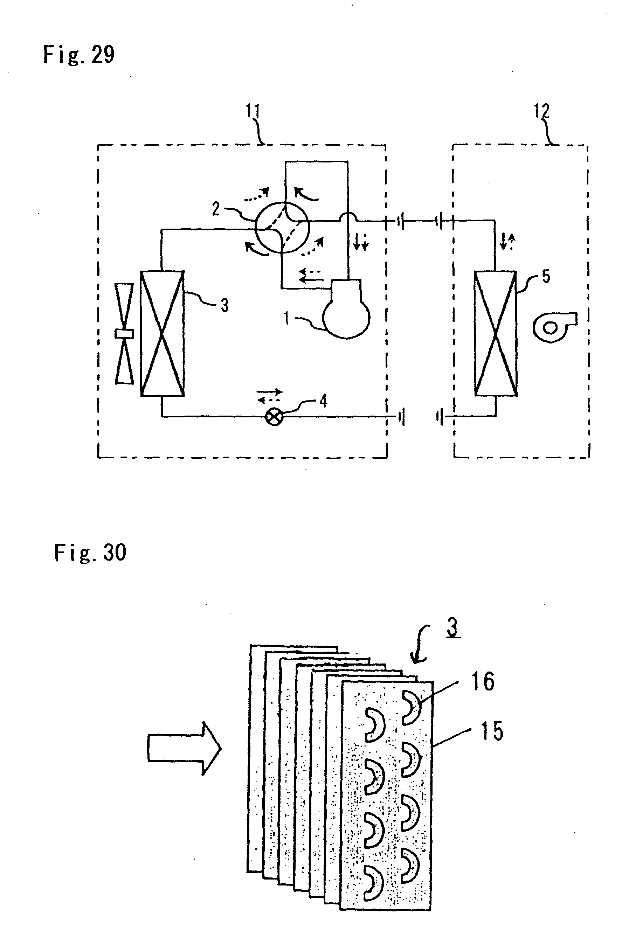

Embodiment 1 will be described with reference to Figs. 29 and 30. Fig. 29 is a view showing a refrigerant circuit of the refrigeration apparatus of Embodiment 1. Fig. 30 is a perspective view showing an outdoor heat exchanger used in the same refrigeration apparatus.

The refrigeration apparatus of Embodiment 1 is a separate heat pump air conditioner, as shown in Fig. 29. The discharge side and the suction side of a compressor 1 are connected to a discharge port 2a and a suction port 2b of a four-way selector valve 2. Between switching ports 2c and 2d of the four-way selector valve 2, an outdoor heat exchanger 3, an expansion mechanism 4, and an indoor heat exchanger 5 are connected to each other. The compressor 1, the four-way selector valve 2, and the outdoor heat exchanger 3 are stored in an outdoor unit 11, and the indoor heat exchanger 5 is stored in an indoor unit 12. By switching the four-way selector valve 2, during cooling, a refrigerant is caused to flow as indicated by the solid arrow shown in Fig. 29, so that the indoor heat exchanger 5 functions as an evaporator, and the outdoor heat exchanger 3 functions as a condenser. During heating, a refrigerant is caused to flow as indicated by the broken arrow shown in Fig. 29, so that the indoor heat exchanger 5 functions as a condenser, and the outdoor heat exchanger 3 functions as an evaporator. During heating, since the outside air temperature is low and the evaporation temperature is 0°C or lower, the outdoor heat exchanger 3 is frosted when refrigerating operation is maintained.

The outdoor heat exchanger 3 is, as shown in Fig. 30, an air heat exchanger having flat plate fins (flat fins) 15 and heat exchange pipes 16 that are thermally conductively connected to the flat plate fins 15, specifically, inserted into heat exchange pipe holes of the flat plate fins 15. On the heat exchange surface, specifically, the surface of the flat plate fins 15, a surface structure coated with the above-described surface treatment composition.

Because of this, according to this embodiment, since two kinds of surface portions, i.e. surface portions A with a low heat capacity and surface portions B to which frost or ice is poorly bound or attached, are discretely distributed, the heat exchange surface of the outdoor heat exchanger 3 exhibits excellent water repellency and sliding properties. Thus, condensed water condensed on and attached to the surface of the outdoor heat exchanger 3 is made globular, and thus is blown off easily by the pressure of wind passing through the outdoor heat exchanger 3. In addition, the condensed water attached to the heat exchange surface is supercooled, and is thus frozen only with difficulty. Accordingly, the growth rate of frost attached to the heat exchange surface of the outdoor heat exchanger 3 can be reduced, and the time for heating operation until the amount of frost formed requires defrosting can be extended.

According to this embodiment, since the heat exchange surface of the outdoor heat exchanger 3 has the surface portions A and the surface portions B discretely distributed, during defrost operation, frost or ice on the surface portions A is released by melting interfacial frost or ice in contact with the surface portions A. Further, the released frost or ice and frost or ice on the surface portions B are at least partially bound to each other, and the frost or ice on the surface portions B is released by its own weight. Accordingly, in the air heat exchanger, it is not necessary to thoroughly melt frost or ice attached to the heat exchange surface as in a conventional one, and the time for defrost operation can be reduced.

According to this embodiment, since the heat exchange surface of the outdoor heat exchanger 3 has easy frost/ice release properties, during defrost operation, frost or ice on the heat exchange surface is released (detached) as a mass by its own weight, and thus no water droplets remain on the heat exchange surface from which the frost or ice has melted or has been released. Thus, the amount of frost or ice formed after resuming refrigerating operation can be reduced, the time for refrigerating operation can be extended continuously, and the time for defrost operation can be reduced continuously.

According to this embodiment, the outdoor heat exchanger 3 comprises the flat plate fins 15, and thus can be produced at a low cost and used in wide applications.

As described above, this embodiment can extend the time for heating operation and reduce the time for defrost operation. Thus, the embodiment can provide improved heating comfort and exhibit improved energy efficiency.

### (Embodiment 2)

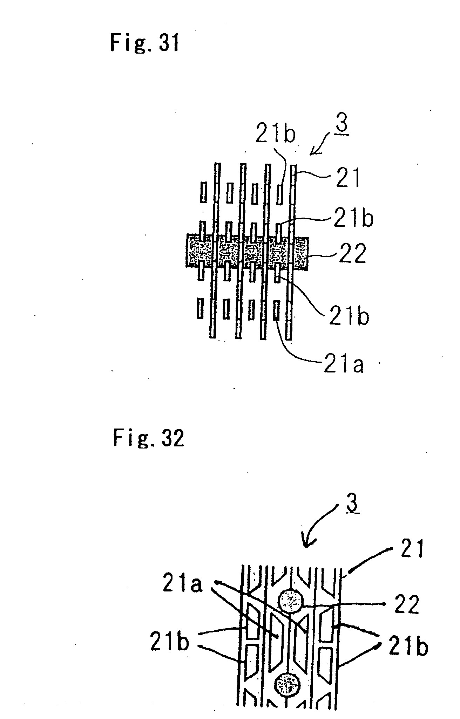

Embodiment 2 is a refrigeration apparatus using slit plate fins (slit fins) 21 instead of the flat plate fins 15 in Embodiment 1. Fig. 31 is a cross-sectional view of an outdoor heat exchanger 3 of the refrigeration apparatus of this Embodiment 2 cut with the cross-section of slit plate fins 21. Fig. 32 is a cross-sectional view of an outdoor heat exchanger 3 of the refrigeration apparatus of Embodiment 2 cut with the plane of a slit plate fin 21. Fig. 32 shows only the slit plate fin 21 for one row of heat exchange pipes 22.

As shown in the figures, in the slit plate fins 21 of the outdoor heat exchanger 3 in this embodiment, large or small trapezoid slits 21a and 21b are formed between the adjacent heat exchange pipes 22.

According to the refrigeration apparatus of this Embodiment 2, since the heat exchange surface of the outdoor heat exchanger 3 has the same surface structure as in Embodiment 1, the embodiment can exhibit the same effect as in Embodiment 1.

Since the refrigeration apparatus of this Embodiment 2 uses the slit plate fins 21, frost or ice can be easily cut with the slits 21a and 21b during defrost operation. Thus, a mass of frost or ice attached to the heat exchange surface can be made suitably small and fall down easily by its own weight.

### (Embodiment 3)

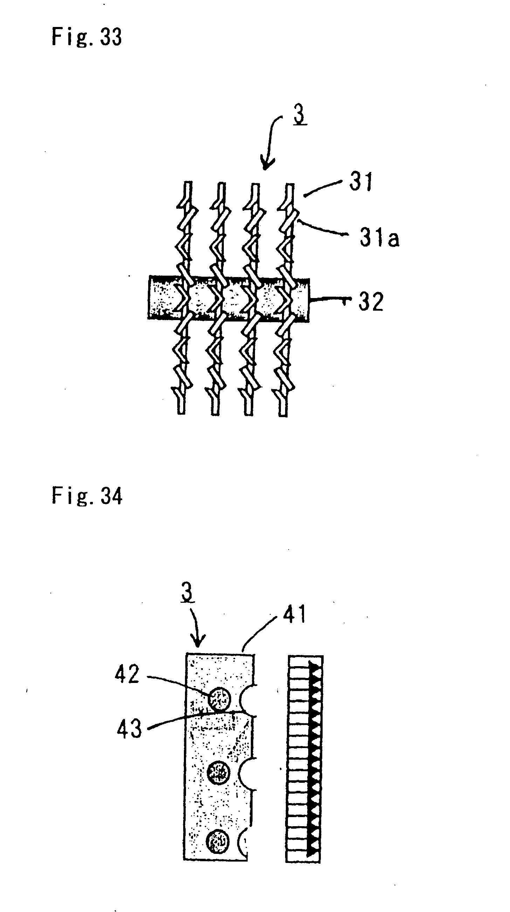

Embodiment 3 is a refrigeration apparatus using louver plate fins (louver fins) 31 instead of the flat plate fins 15 in Embodiment 1. Fig. 33 is a cross-sectional view of an outdoor heat exchanger 3 of the refrigeration apparatus of this Embodiment 3 cut with the cross-section of louver plate fins 31.

As shown in the figure, in the louver plate fins 31 of the outdoor heat exchanger 3 in this embodiment, louvers 31a are formed at a predetermined pitch.

Because of this, according to the refrigeration apparatus of this Embodiment 3, since the heat exchange surface of the outdoor heat exchanger 3 has the same surface structure as in Embodiment 1, the embodiment can exhibit the same effect as in Embodiment 1.

Since the refrigeration apparatus of this Embodiment 3 uses the louver plate fins 31, frost or ice can be easily cut with the louvers 31a during defrost operation. Thus, a mass of frost or ice attached to the heat exchange surface can be made suitably small and fall down easily by its own weight.

### (Embodiment 4)

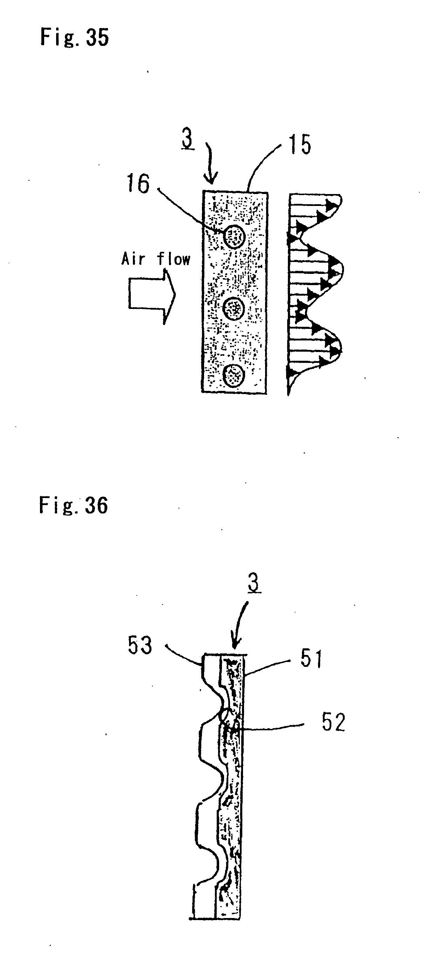

Embodiment 4 is a refrigeration apparatus using flat plate fins 41 comprising notches 43 at the rear of heat exchange pipes 42 in the direction along which air passes, as shown in Fig. 34, instead of the flat plate fins 15 in Embodiment 1. Fig. 34 shows the wind speed distribution at the end of an outdoor heat exchanger 3 from which air flows out of the refrigeration apparatus of this Embodiment 4. Fig. 35 shows the wind speed distribution at the end of an outdoor heat exchanger 3 from which air flows out when the flat plate fins 15 as in Embodiment 1 are used.

As shown in Fig. 35, when the typical flat plate fins 15 as in the case of Embodiment 1 are used, the wind speed distribution at the back of the heat exchange pipes 16 is small, and thus condensed water attached to this part is blown off only with difficulty, thereby increasing the growth rate of frost. Accordingly, frost or ice easily remains when defrosted, which is a problem to be solved. However, in the configuration of this Embodiment 4, not only can the area of the fins at the rear of the heat exchange pipes 42 be made smaller, thereby reducing the amount of condensed water attached, but also the wind can easily go around due to the notches 43, thereby improving uniformity of the wind speed distribution. Accordingly, the problem in which frost or ice remains unmelted at the rear of the heat exchange pipes 42 can be solved.

According to the refrigeration apparatus of this Embodiment 4, since the heat exchange surface of the outdoor heat exchanger 3 has the same surface structure as in Embodiment 1, the embodiment can exhibit the same effect as in Embodiment 1.

### (Embodiment 5)

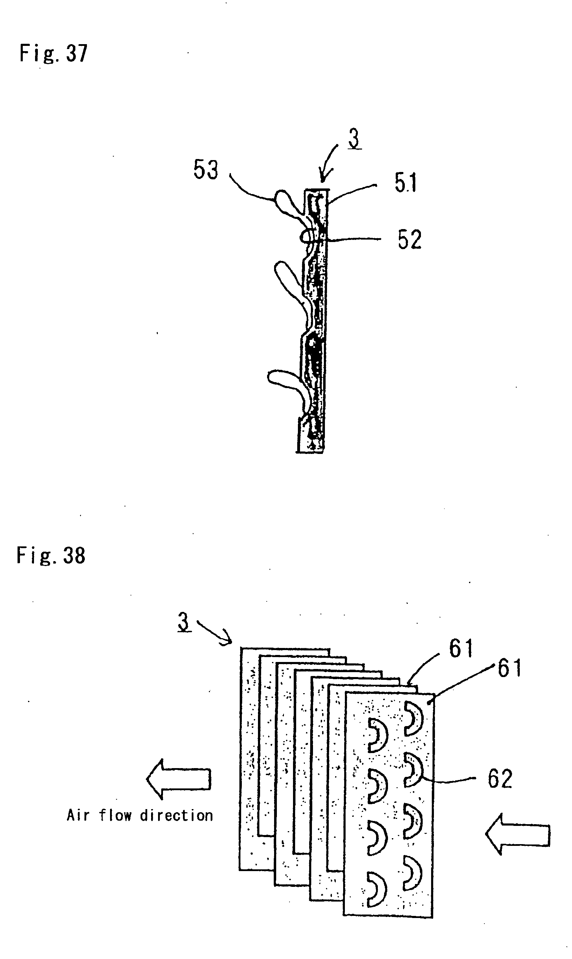

Embodiment 5 is a refrigeration apparatus in which many dimples 52 are formed on the heat exchange surface of the flat plate fins 15 in Embodiment 1. Fig. 36 is a cross-sectional view showing a plate fin 51 in a frosted state in an outdoor heat exchanger 3 of the refrigeration apparatus of this Embodiment 4. Fig. 37 is a cross-sectional view showing the same plate fin 51 in which frost or ice is released during defrost operation.

As shown in these figures, on the surface of the plate fins 51 of the outside heat exchanger 3 in this embodiment, many dimples 52 are formed.

Because of this, according to the refrigeration apparatus of this Embodiment 5, since the heat exchange surface of the outdoor heat exchanger 3 has the same surface structure as in Embodiment 1, the embodiment can exhibit the same effect as in Embodiment 1.

According to the refrigeration apparatus of this Embodiment 5, since the contact rate with air passing through is reduced due to the many dimples 52, the amount of frost or ice 53 attached to the flat surface of the plate fins 51 increases as shown in Fig. 36. Since the area of the heat exchange surface of the fins for heat exchange with frost is large as compared with the amount of frost formed, interfacial frost or ice in surface portions A can melt earlier, and the time for defrost operation can be further reduced. During the defrost operation, as shown in Fig. 37, thick frost or ice on the flat surface of the plate fins 51 fall down along the dimples 52 by its own weight.

### (Embodiment 6)

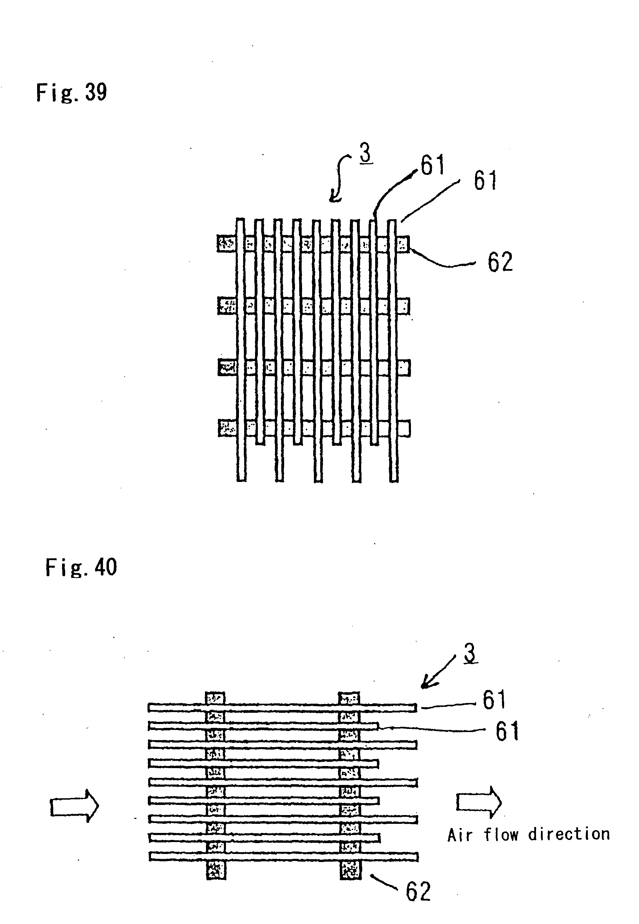

In Embodiment 1, as shown in Fig. 30, even the lower ends and the ends from which air flows out of the flat plate fins 15 are constituted at the same fin pitch as in other parts. However, Embodiment 6 is constitutes so that, as shown in Figs. 38 to 40, the fin pitch is made larger at the lower ends and the ends from which air flows out. Fig. 38 is a perspective view showing an outdoor heat exchanger 3 of the refrigeration apparatus of Embodiment 6, Fig. 39 is a front view showing the same outdoor heat exchanger 3, and Fig. 40 is a plan view showing the same outdoor heat exchanger.

Specifically, the outdoor heat exchanger 3 in this Embodiment 6 uses flat plate fins 61 the same as in Embodiment 1. As shown in Figs. 38 and 39, the flat plate fins 61 are formed so that the dimension in the height direction is made smaller every other sheet, and the positions of the lower ends differ every other sheet by making the heights of the upper ends uniform. The outdoor heat exchanger 3 in this Embodiment 6 has, as shown in Figs. 38 and 40, the flat plate fins 61 in which the dimensions in the direction along which air passes made smaller every other sheet, and the positions of the ends from which air flows out differ every other sheet by making the positions of the front ends uniform.

The outdoor heat exchanger 3 in Embodiment 6 with such a configuration has, as shown in Figs. 38 to 40, have a large fin pitch formed at the lower end and at the end from which air flows out.

In Figs. 38 to 40, the symbol 62 shows a heat exchange pipe in this Embodiment 6. However, the heat exchange pipe 62 may be the same as the heat exchange pipe 16 in Embodiment 1.

Because of this, according to the refrigeration apparatus of this Embodiment 6, since the heat exchange surface of the outdoor heat exchanger 3 has the same surface structure as in Embodiment 1, the embodiment can exhibit the same effect as in Embodiment 1.

Further, according to the refrigeration apparatus according to this Embodiment. 6, since the lower end of the outdoor heat exchanger 3 is formed at a large fin pitch, frost or ice released and falling down by its own weight is retained only with difficulty at the lower end of the heat exchanger, and the time for defrost operation can be surely reduced.

Further, according to the refrigeration apparatus according to this Embodiment 6, since the end from which air flows out of the outdoor heat exchanger 3 is formed at a large fin pitch, frost or ice released and carried by the wind pressure to the side from which air flows out is retained only with difficulty at the side from which air flows out, and the time for defrost operation can be surely reduced.

### (Embodiment 7)

Embodiment 7 standardizes the flat plate fins in Embodiment 6.

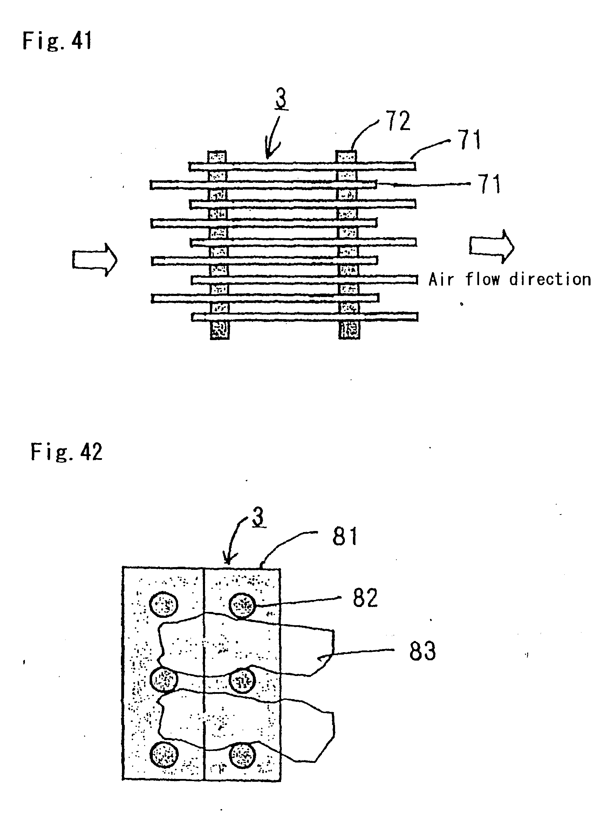

Specifically, as Fig. 41 shows a plan view of an outdoor heat exchanger of Embodiment 7, flat plate fins 71 have an uniform size in the direction along which air passes, and have their ends toward which air flows in positioned alternatingly. Thus, the flat plate fins 71 have also their ends from which air flows out positioned alternatingly, and have a large fin pitch formed at the ends from which air flows out.

In Fig. 41, the symbol 72 shows a heat exchange pipe in this Embodiment 7. However, the heat exchange pipe 72 may be the same as the heat exchange pipe 16 in Embodiment 1.

As described above, Embodiment 7 has the flat plate fins 71 with the same dimension in the direction along which air passes, and thus can standardize the basic shape of the flat plate fins 71 and contribute to the cost reduction.

Further, since the heat exchange surface of the outdoor heat exchanger 3 has the same surface structure as in Embodiment 1, Embodiment 7 also can exhibit the same effect as in Embodiment 1.

### (Embodiment 8)

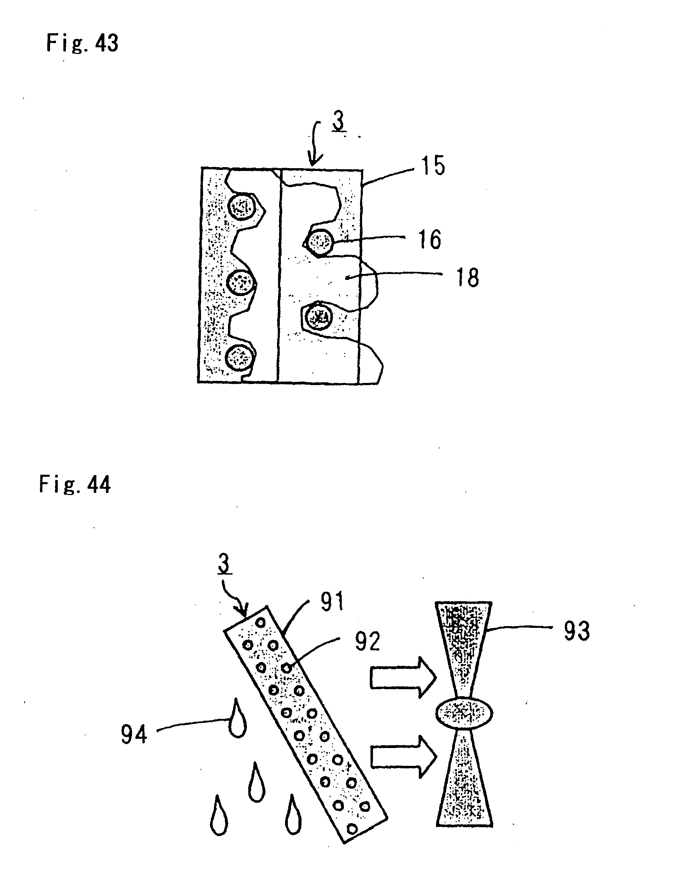

Embodiment 8 differs from Embodiment 1 in that heat exchange pipes are located in different places. Fig. 42 is an explanatory view showing the location of heat exchange pipes in an outdoor heat exchanger of the refrigeration apparatus of Embodiment 8, and Fig. 43 is an explanatory view for comparison with Embodiment 8 showing the location of heat exchange pipes in an outdoor heat exchanger of the refrigeration apparatus of Embodiment 1.

Specifically, the outdoor heat exchanger 3 in Embodiment 8 has, as shown in Fig. 42, heat exchange pipes 82 located in grids with respect to flat plate fins 81 and inserted and fixed into the flat plate fins 81. On the other hand, the outdoor heat exchanger 3 in the above-described Embodiment 1 has, as shown in Fig. 43, the heat exchange pipes 16 located in a zigzag manner with respect to the flat plate fins 15 and inserted and fixed into the flat plate fins 15.

Accordingly, in the case of Embodiment 1, when defrost operation is carried out, the heat exchange pipes 16 on the wake side may be an obstacle to the effect of pushing frost or ice 18 released from the flat plate fins 15 into the end from which air flows out. On the other hand, in Embodiment 8, during defrost operation, frost or ice 83 released from the flat plate fins 81 can be smoothly pushed into the end from which air flows out. Accordingly, the frost or ice 83 attached to the heat exchange surface of the outdoor heat exchanger 3 can flow downwind, and defrosting can be carried out easily. As a result, the refrigeration apparatus can extend the time for refrigerating operation and reduce the time for defrost operation. Thus, the apparatus can exhibit an effect of refrigerating operation sufficiently and improve energy efficiency.

Further, since the heat exchange surface of the outdoor heat exchanger 3 has the same surface structure as in Embodiment 1, Embodiment 8 also can exhibit the same effect as in Embodiment 1.

### (Embodiment 9)

Embodiment 9 differs from Embodiment 1 in that the state in which the outdoor heat exchanger 3 is installed is changed. Fig. 44 is an explanatory view showing a state of an outdoor heat exchanger of the refrigeration apparatus of Embodiment 9.

Specifically, the outdoor heat exchanger 3 in Embodiment 9 is, as shown in Fig. 44, obliquely installed so that rectangular plate fins 91 are made oblique. A blower 93 causes air for heat exchange to blow horizontally. On the contrary, the outdoor heat exchanger 3 in the above-described Embodiment 1 is, as shown in Fig. 30, vertically installed so that the rectangular flat plate fins 15 are made vertical.

In Fig. 44, the symbol 92 shows a heat exchange pipe in this Embodiment 9. However, the heat exchange pipe 92 may be the same as the heat exchange pipe 16 in Embodiment 1.

Accordingly, in the case of the present Embodiment 9, as compared with the case of Embodiment 1, water droplets 94 condensed on and attached to the heat exchange surface of the outdoor heat exchanger 3 during heating operation can easily fall down. In addition, during defrost operation, frost attached to the heat exchange surface of the outdoor heat exchanger 3 can easily fall down by its own weight. Accordingly, the time for refrigerating operation can be further extended, and the time for defrost operation can be further reduced.

Further, since the heat exchange surface of the outdoor heat exchanger 3 has the same surface structure as in Embodiment 1, Embodiment 8 also can exhibit the same effect as in Embodiment 1.

### (Embodiment 10)

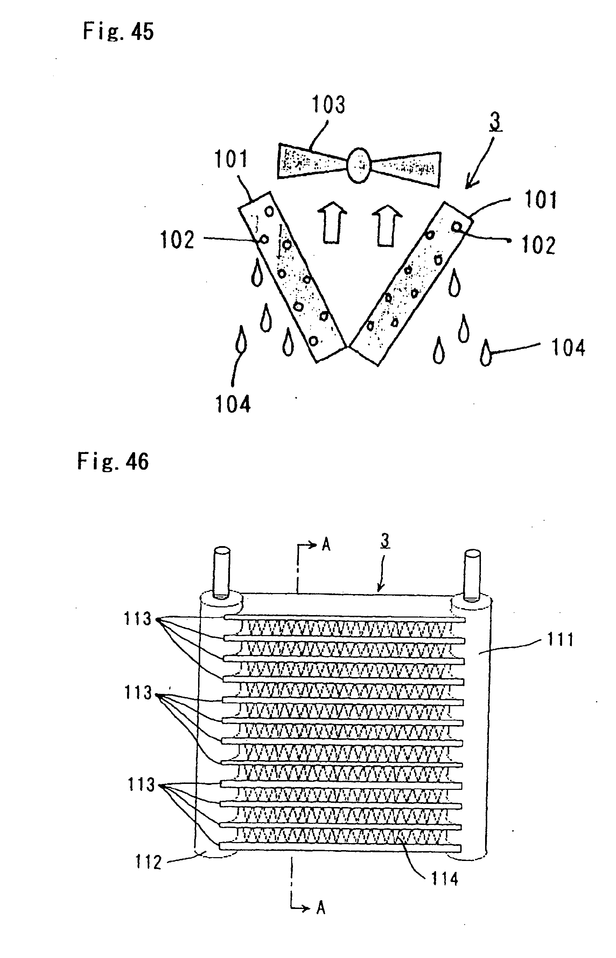

Embodiment 10 differs from Embodiment 1 in that the location of the outdoor heat exchanger 3 is changed in a manner differing from Embodiment 9. Fig. 45 is an explanatory view showing a state in which an outdoor heat exchanger of the refrigeration apparatus is located of Embodiment 10.

Specifically, the outdoor heat exchange 3 in Embodiment 10 is, as shown in Fig. 45, divided in two, and rectangular plate fins 101 of each of the divided heat exchangers are made oblique, and the heat exchangers divided in two are located to form a V-shape. A blower 103 causes air for heat exchange to blow vertically.

In Fig. 45, the symbol 102 shows a heat exchange pipe in this Embodiment 10. However, the heat exchange pipe 102 may be the same as the heat exchange pipe 16 in Embodiment 1.

Accordingly, in the case of the present Embodiment 10, as compared with the case of Embodiment 1, water droplets 104 condensed on and attached to the heat exchange surface of the outdoor heat exchanger 3 during heating operation can easily fall down. In addition, during defrost operation, frost attached to the heat exchange surface of the outdoor heat exchanger 3 can easily fall down by its own weight. Accordingly, the time for refrigerating operation can be further extended; and the time for defrost operation can be further reduced.

Further, since the heat exchange surface of the outdoor heat exchanger 3 has the same surface structure as in Embodiment 1, this Embodiment 10 also can exhibit the same effect as in Embodiment 1.

### (Embodiment 11)

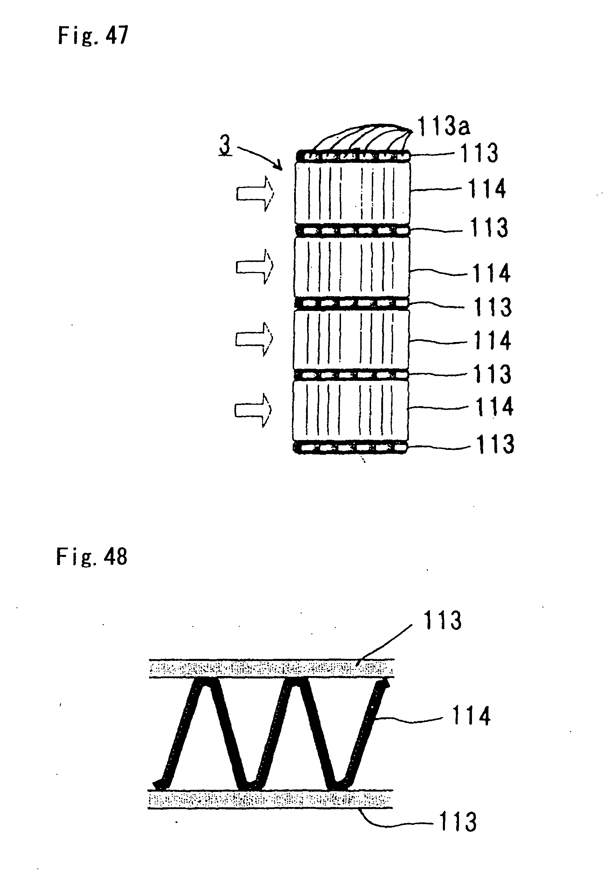

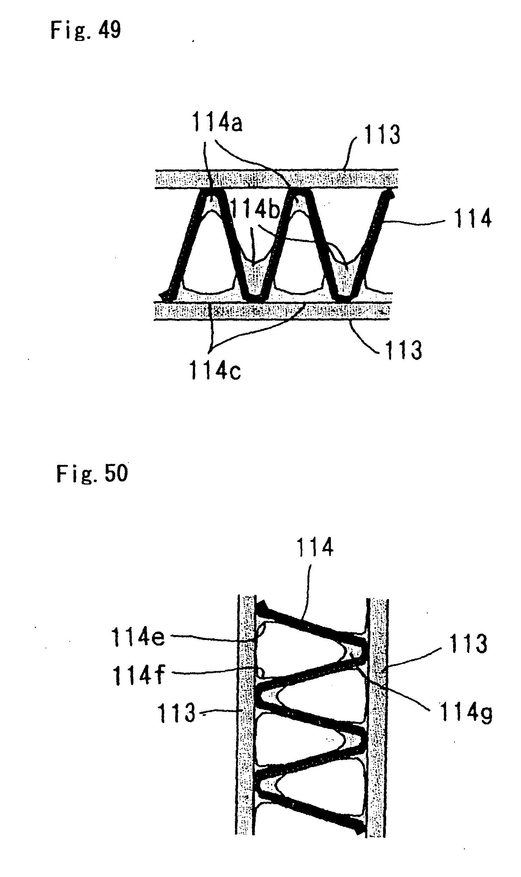

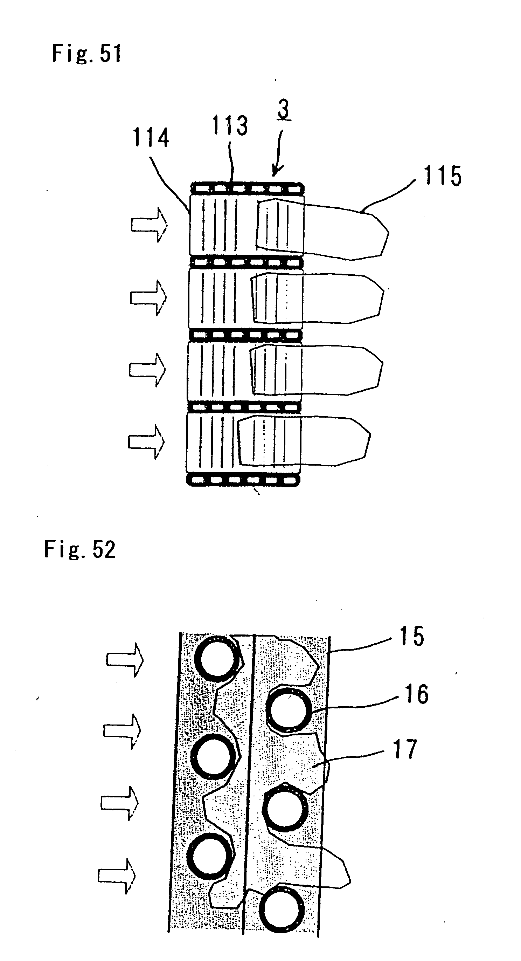

Embodiment 11 employs a stacked heat exchanger 3 using corrugate fins instead of the outdoor heat exchanger 3 using the flat plate fins 15 in Embodiment 1. Fig. 46 is a front view showing this stacked heat exchanger. Fig. 47 is an A-A cross-sectional view of Fig. 46. Fig. 48 is a partially enlarged view of the same heat exchanger viewing from the front. Fig. 49 is a view showing a state in which water droplets are attached to the same heat exchanger. Fig. 50 is a view showing a state in which water droplets are attached to the heat exchanger shown in Fig. 46 when vertically used. Fig. 51 is a view showing a state in which frost or ice drops out from the same heat exchanger. Fig. 52 is a reference view showing a state in which frost or ice drops out from the heat exchanger of Embodiment 1.

The refrigeration apparatus of Embodiment 11 is the same as that of Embodiment 1, except that a stacked heat exchanger shown in Figs. 46 to 52 is used as an outdoor heat exchanger 3. The stacked heat exchanger 3 (outdoor heat exchanger 3) is provided with a header 111 for separating a refrigerant on the right side in Fig. 46 and a header 112 for collecting a refrigerant on the left side of the same figure. Multiple rows of flat heat exchanger pipes 113 are formed between the two headers 111 and 112. A plurality of refrigerant passages 113a are formed in the flat heat exchanger pipes 113. Between the flat heat exchanger pipes 113, corrugate fins 114 are located. In this case, the corrugate fins 114 are located so that the edge lines of the waveform parts are perpendicular to the flat heat exchanger pipes 113, and the spaces in parallel with the edge lines are formed as air passages. In the stacked heat exchanger 3, in many cases, the headers 111 and 112 are located left and right as in Fig. 46, and the corrugate fins 114 are located meandering up and down as shown in Fig. 48. However, as shown in Fig. 50, the corrugate fins 114 may be located meandering left and right as shown in Fig. 50, and the headers 111 and 112 may be located up and down.

In this Embodiment 11, the heat exchange surface of the stacked heat exchanger 3 is coated with a surface treatment composition as in the case of Embodiment 1. Specifically, the heat exchange surface of the stacked heat exchanger 3 has surface portions A and surface portions B discretely distributed, and is formed to have easy frost/ice release properties.

Conventionally, the stacked heat exchanger 3 has not been used as an evaporator. This is because, when the stacked heat exchanger 3 is used as an evaporator, if the corrugate fins 114 are installed meandering up and down, water droplets 114a, 114b, and 114c are attached to the waveform valleys as shown in Fig. 49, and, if the corrugate fins 114 are installed meandering left and right, water droplets 114a, 114b, and 114c are attached to the waveform valleys as shown in Fig. 50. The water droplets are retained in the lower part without falling down, and thus the heat exchange capacity decreases and the time until frost is formed is reduced.

However, in this embodiment, since the heat exchange surface of the stacked heat exchanger 3 is coated with a surface treatment composition as in the case of Embodiment 1, the water droplets 114a, 114b, and 114c are blown off to the wake side in the air flow of the corrugate fins 114 when the amount of the droplets is small. Accordingly, a large amount of water droplets are not attached during use for a short period of time, and thus a decrease in heat exchange capacity can be avoided.

In the stacked heat exchanger 3, when the water droplets 114a, 114b, and 114c attached to the corrugate fins 114 grow into frost or ice, defrost operation is carried out. The heat exchange surface of the stacked heat exchanger 3 is coated with a surface treatment composition as in the case of Embodiment 1, the air passages of the corrugate fins 114 are formed linear and planar. Thus, the frost or ice 115 is, in a continuous state, pushed into the side from which air is discharged (see Fig. 51).

In the plate fin heat exchanger 3 in the case of Embodiment 1, the heat exchange pipes 16 located on the side from which air is discharged function to prevent continuous frost or ice 17 from being pushed into the side from which air is discharged (see Fig. 52). Accordingly, in the plate fin heat exchanger 3 in the case of Embodiment 1, it is difficult to push the frost or ice 17 in a continuous state into the side from which air is discharged.

As described above, the stacked heat exchanger 3 of Embodiment 11 can drift downwind by the wind force water droplets or frost attached to the surface of the corrugate fins. Accordingly, the stacked heat exchanger 3 of Embodiment 11 is an air heat exchanger that has smaller ventilation resistance, has higher performance, and is cheaper as compared with the case of the cross fin heat exchanger 3 of Embodiment 1, and can also be used as an evaporator for a general-purpose air conditioner.

### (Embodiment 12)

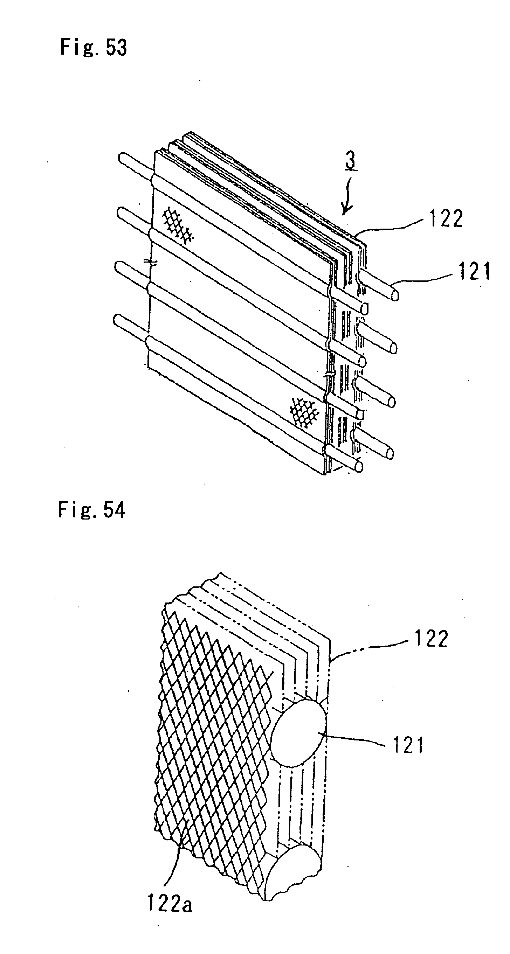

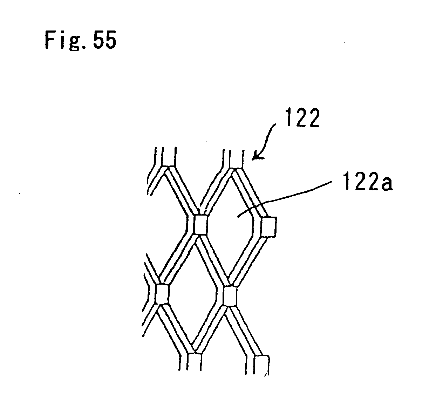

Embodiment 12 employs a heat exchanger using mesh fins instead of the outdoor heat exchanger 3 using the flat plate fins 15 in Embodiment 1. Fig. 53 is a front perspective view showing this mesh fin heat exchanger. Fig. 54 is a partially enlarged front perspective view showing the same mesh fin heat exchanger. Fig. 55 is a partially enlarged view showing a mesh fin used in the same mesh fin heat exchanger.

The refrigeration apparatus of Embodiment 12 is the same as that of Embodiment 1, except that a mesh fin heat exchanger shown in Figs. 53 to 55 is used as an outdoor heat exchanger 3.

In the mesh fin heat exchanger 3 (outdoor heat exchanger 3), heat exchange pipes 121 are horizontally located so that the pipes form a right angle with the air flow. The mesh fin 122 is formed by expanding the cut of an aluminum plate made with a cut, and is formed as a surface member comprising openings 122a as shown in a perspective view of Fig. 55. In such a mesh fin heat exchanger 3, the surface of the member forming the mesh fins 122 forms a heat exchange surface, and the openings 122a form air passages. The heat exchange surface of the mesh fin heat exchanger 3 is formed by having two kinds of surface portions discretely distributed, i.e. surface portions A with a low heat capacity and surface portions B to which frost or ice is poorly bound or attached.

Incidentally, when a conventional mesh fin heat exchanger is used as an evaporator, frost or ice grows to clog openings 122a, and ventilation resistance easily increases in a short time, and thus it is difficult to use the heat exchanger as a low-temperature evaporator.

However, in the mesh fin heat exchanger 3 of this Embodiment 12, since the heat exchange surface of the mesh fins 122 has two kinds of surface portions discretely distributed as described above, i.e. the surface portions A with a low heat capacity and the surface portions B to which frost or ice is poorly bound or attached, the heat exchange surface exhibits excellent water repellency and sliding properties. Thus, the mesh fin heat exchanger 3 of Embodiment 12 makes condensed water attached to the surface of the mesh fins 122 globular so that the water is blown off easily, and can be used without frosting over a long time.

Therefore, according to Embodiment 12, the inexpensive mesh fin heat exchanger 3 can be used at a high efficiency for a long time.

### (Embodiment 13)

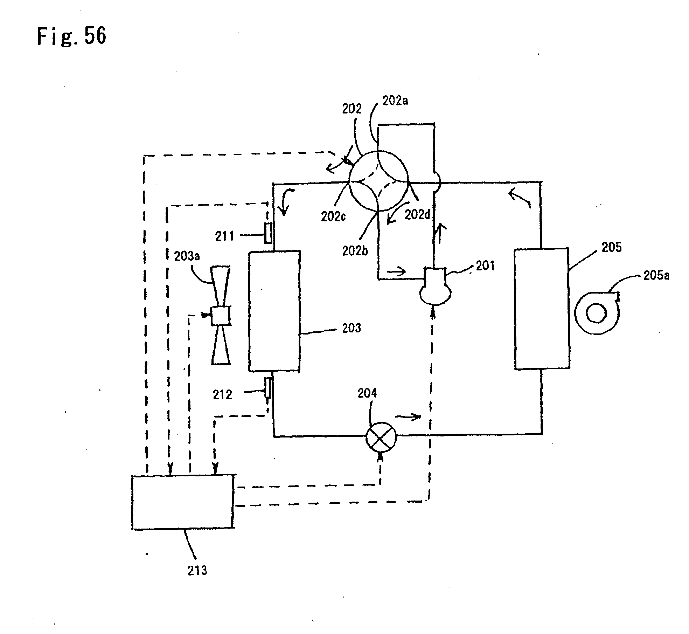

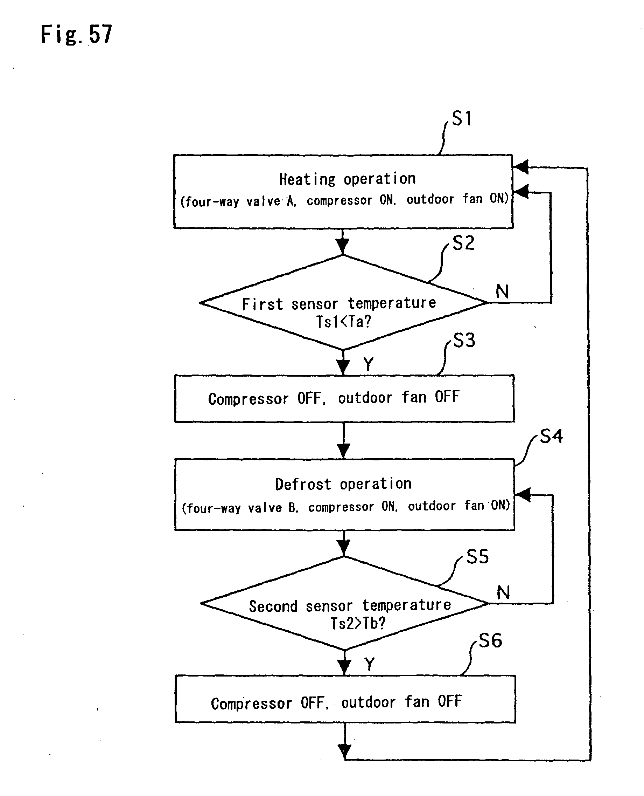

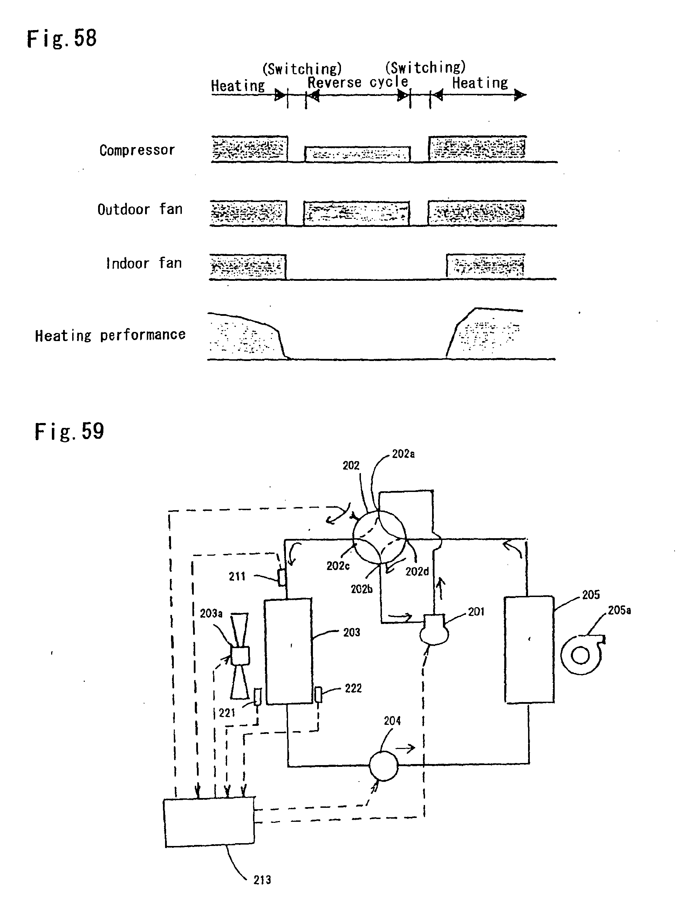

Next, the refrigeration apparatus of Embodiment 13 will be described with reference to Figs. 56 to 58. Fig. 56 is a view showing a refrigerant circuit of the refrigeration apparatus of Embodiment 13. Fig. 57 is a control flow chart during defrost operation by a control unit of the same refrigeration apparatus. Fig. 58 is a control timing chart during defrost operation by the same control unit. In Fig. 56, the solid arrows show the flow of a refrigerant during defrost operation.

The refrigeration apparatus of Embodiment 13 is a separate heat pump air conditioner, as shown in Fig. 56. The discharge side and the suction side of a compressor 201 are connected to a discharge port 202a and a suction port 202b of a four-way selector valve 202. Between switching ports 202c and 202d of the four-way selector valve 202, an outdoor heat exchanger 203, an expansion mechanism 204, and an indoor heat exchanger 205 are connected to each other. The compressor 201, the four-way selector valve 202, and the outdoor heat exchanger 203 are stored in an outdoor unit (not shown), and the indoor heat exchanger 205 is stored in an indoor unit (not shown). In Fig. 56, the symbol 203a denotes an outdoor fan for blowing external air into the outdoor heat exchanger 203, and the symbol 205a denotes an indoor fan for blowing internal air into the indoor heat exchanger 205.

In the outdoor heat exchanger 203, heat exchange pipes are inserted into flat plate fins. The heat exchange surface of the flat plate fins is coated with the above-described surface treatment composition to form the above-described surface structure. Accordingly, the heat exchange surface of the outdoor heat exchanger 203 has two kinds of surface portions discretely distributed, i.e. surface portions A with a low heat capacity and surface portions B to which frost or ice is poorly bound or attached. To the outlet (four-way selector valve 202) during heating operation of the outdoor heat exchanger 203 (see the heating cycle described later), a first sensor 211 for detecting the outlet refrigerant temperature Ts1 during the heating operation is attached. To the outlet (expansion mechanism 204 side) during defrost operation of the same heat exchanger 3 (see the defrost cycle described later), a second sensor 212 for detecting the outlet refrigerant temperature Ts2 during the defrost operation is attached.

The refrigeration apparatus with the above configuration can be operated by a control unit 213 as follows. During cooling operation, by switching to the four-way selector valve 202 to the cooling cycle (B side), a refrigerant is circulated to the compressor 201, the four-way selector valve 202, the outdoor heat exchanger 203, the expansion mechanism 204, the indoor heat exchanger 205, the four-way selector valve 202, and the compressor 201 in this order (cooling cycle). By circulating a refrigerant in this manner, the indoor heat exchanger 205 functions as an evaporator, and the outdoor heat exchanger 203 functions as a condenser to carry out cooling.

During heating operation, by switching to the four-way selector valve 202 to the heating cycle (A side), a refrigerant is circulated to the compressor 201, the four-way selector valve 202, the indoor heat exchanger 205, the expansion mechanism 204, the outdoor heat exchanger 203, the four-way selector valve 202, and the compressor 201 in this order (heating cycle). By circulating a refrigerant in this manner, the indoor heat exchanger 205 functions as a condenser, and the outdoor heat exchanger 203 functions as an evaporator to carry out heating. During heating operation, since the outside air temperature is low and the evaporation temperature is 0°C or lower, the outdoor heat exchanger 203 is frosted when heating operation is maintained.

During the heating operation (step S1 in Fig. 57), as the amount of frost formed in the outdoor heat exchanger 203 increases, the outlet refrigerant temperature Ts1 of the outdoor heat exchanger 203 is reduced, and thus heating performance is reduced (see the change in heating performance in Fig. 58). Accordingly, when the refrigerant temperature Ts1 detected by the first sensor 211 reaches a predetermined temperature Ta (step S2), the heating operation is stopped once (step S3), and the four-way selector valve 202 is switched to the B side to carry out defrost operation in a defrost cycle (step S4).

The defrost cycle is a reverse cycle system in which a refrigerant is circulated in the direction reverse to that of the heating cycle. Specifically, the defrost cycle in this Embodiment 13 circulates a refrigerant in the cooling cycle (see the solid arrow in Fig. 56). Further, in this defrost operation, unlike defrost operation in a conventional refrigeration apparatus, a blower (outdoor fan) 203a for the outdoor heat exchanger 203 is operated. In this defrost operation, an indoor fan 205a is stopped.

When defrost operation is carried out in this manner so that interfacial frost or ice in contact with surface portions A on the heat exchange surface of the outdoor heat exchanger 203 melts, wind pressure acts on the frost or ice on the surface portions A. Since the heat exchange surface of the outdoor heat exchanger 203 has excellent water repellency and sliding properties, frost or ice in contact with the surface portions A and frost or ice attached are surface portions B partially join to each other and released by their own weight and the wind pressure. As the release of frost or ice on the heat exchange surface of the outdoor heat exchanger 203 proceeds in this manner, the refrigerant temperature Ts2 at the outlet of the outdoor heat exchanger 203 increases. When the refrigerant temperature Ts2 at the outlet of the outdoor heat exchanger 203 exceeds a predetermined value Tb preliminarily set as a temperature when defrost operation is to finish, it can be judged that defrosting is completed (step S5). Thus, operation of the compressor 201 and the outdoor fan 203a is stopped so that the defrost operation finishes (step S6). After the defrost operation finishes, the four-way selector valve 202 is switched to return the cycle to the normal heating operation cycle, and thus the heating operation is resumed (see Fig. 58).

This Embodiment 13 is configured as above, and therefore can exhibit the following effects.

Since the heat exchange surface of the outdoor heat exchanger 203 has excellent water repellency and sliding properties, condensed water condensed on and attached to the surface of the outdoor heat exchanger 203 is made globular and is blown off easily by the pressure of wind passing through the outdoor heat exchanger 203. In addition, the condensed water attached to the heat exchange surface is supercooled, and is thus frozen only with difficulty. Accordingly, the growth rate of frost attached to the heat exchange surface of the outdoor heat exchanger 203 can be reduced, and the time for heating operation until the amount of frost formed requires defrosting can be extended.

According to this Embodiment 13, since the heat exchange surface of the outdoor heat exchanger 203 has the surface portions A and the surface portions B discretely distributed, during defrost operation, frost or ice on the surface portions A is released by melting interfacial frost or ice in contact with the surface portions A. Further, the released frost or ice and frost or ice on the surface portions B are at least partially bound to each other, and the frost or ice on the surface portions B is released by its own weight. Accordingly, in the outdoor heat exchanger 203, it is not necessary to thoroughly melt frost or ice attached to the heat exchange surface as in a conventional one, and the time for defrost operation can be reduced.

According to this Embodiment 13, since the heat exchange surface of the outdoor heat exchanger 203 has easy frost/ice release properties, during defrost operation, frost or ice on the heat exchange surface is released (detached) as a mass by its own weight, and thus no water droplets remain on the heat exchange surface from which the frost or ice has melted or has been released. Thus, the amount of frost or ice formed after resuming refrigerating operation can be reduced, the time for refrigerating operation can be extended continuously, and the time for defrost operation can be reduced continuously. Accordingly, the heat energy required for defrosting can be saved, and the time for defrost operation can be reduced.

Furthermore, in the refrigeration apparatus of the present invention, since the outdoor fan 203a is operated in defrost operation in which a gas discharged from the compressor is supplied to the outdoor heat exchanger 203, when interfacial frost or ice in contact with the heat exchange surface of the outdoor heat exchanger 203 melts, frost or ice on the heat exchange surface can be blown off by the wind pressure. Thus, the time for defrost operation can be reduced, and the heat energy necessary for defrosting can be further reduced.

As described above, Embodiment 13 can extend the time for heating operation and reduce the time for defrost operation. Thus, the embodiment can provide improved heating comfort and exhibit improved energy efficiency.

### (Embodiment 14)

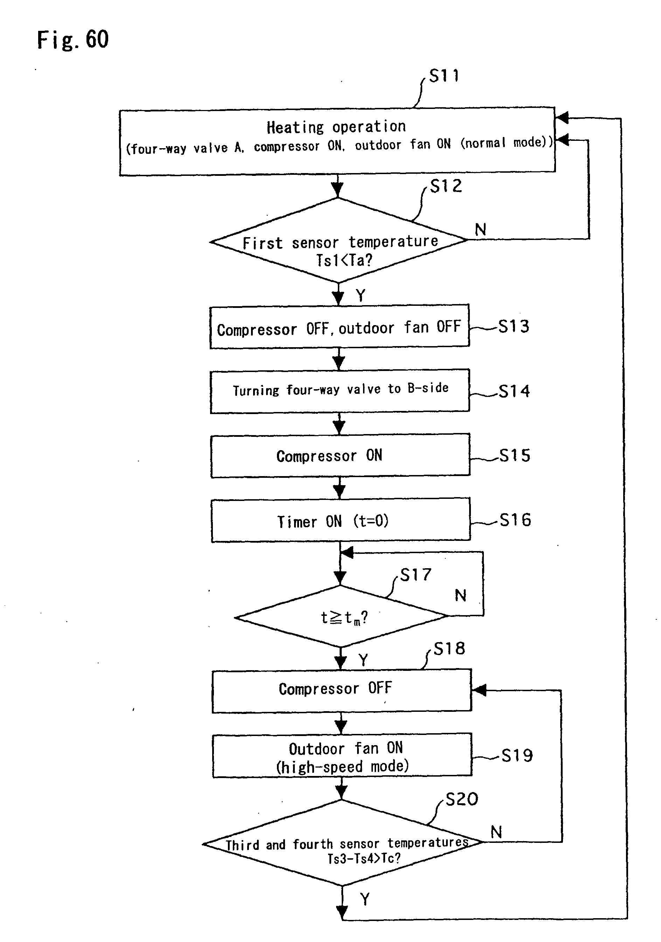

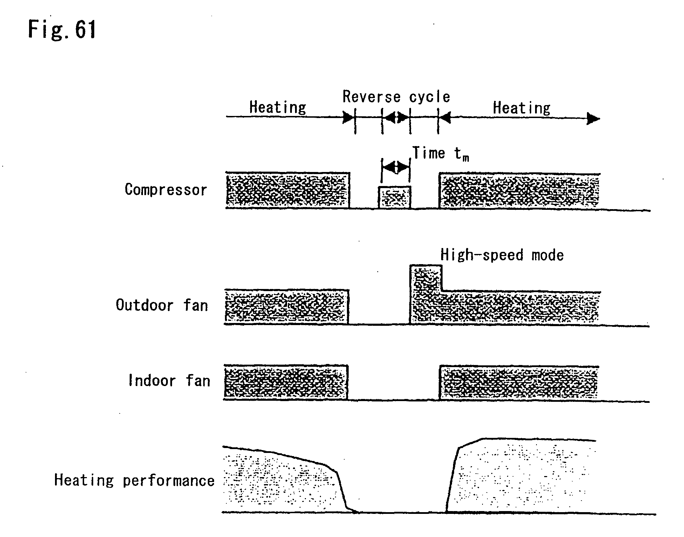

In Embodiment 14, during defrost operation, an outdoor fan is operated only for the time necessary for the operation. The content of the embodiment will be described with reference to Figs. 59 to 61. Fig. 59 is a view showing a refrigerant circuit of the refrigeration apparatus of Embodiment 14, Fig. 60 is a control flow chart during defrost operation by a control unit of the same refrigeration apparatus, and Fig. 61 is a control timing chart during defrost operation by the same control unit.

Embodiment 14 has a cooling cycle, a heating cycle, and a defrost cycle the same as in Embodiment 13, but comprises a third sensor 221 for detecting the inlet air temperature Ts3 of the outdoor heat exchanger 203 during defrost operation and a fourth sensor 222 for detecting the outlet air temperature Ts4 of the outdoor heat exchanger 203 during defrost operation, instead of the second sensor 212 in Embodiment 13. An outdoor fan 203a is configured so that the fan can be driven in a high-speed mode. The high-speed mode rotates the fan at a speed higher than in heating operation (see the wind speed of the outdoor fan 203a in Fig. 61).

Defrost operation is carried out as follows.

During heating operation (step S11 in Fig. 60), as the amount of frost formed in the outdoor heat exchanger 203 increases, the outlet refrigerant temperature Ts1 of the outdoor heat exchanger 203 is reduced, and thus heating performance is reduced. When the refrigerant temperature Ts1 detected by the first sensor 211 reaches a predetermined temperature Ta (step S12), the heating operation is stopped (step S13), a four-way selector valve 202 is switched to the B side (step S14), a compressor 201 is operated (step S15), and a timer incorporated in the control unit 213 is activated (step S16) to carry out defrost operation in the defrost cycle.

A predetermined time tm is preliminarily set so that, when the predetermined time tm has passed since the defrost operation starts, interfacial frost or ice in contact with surface portions A can melt. When the predetermined time has passed (step S17), the compressor 201 is stopped (step S18), and the outdoor fan 203a is driven in a high-speed mode (step S19). Thus, the wind pressure acts on frost or ice on the surface portions A in which the interfacial frost or ice has melted. On the other hand, since the heat exchange surface of the outdoor heat exchanger 203 has excellent water repellency and sliding properties, frost or ice in contact with the surface portions A and frost or ice attached are surface portions B partially join to each other and released by their own weight and the wind pressure.

As the release of frost or ice on the heat exchange surface of the outdoor heat exchanger 203 proceeds in this manner, the temperature of the outdoor heat exchanger 203 increases. At the beginning of the defrost operation, since frost or ice is attached to the outdoor heat exchanger 203, the air temperature difference Ts3-Ts4 between the inlet and the outlet in the outdoor heat exchanger 203 is significant. However, as the frost or ice attached to the outdoor heat exchanger 203 drops out, the temperature of the outdoor heat exchanger 203 increases, and thus the air temperature difference Ts3-Ts4 between the inlet and the outlet in the outdoor heat exchanger 203 is reduced. Accordingly, the air temperature difference Ts3-Ts4 between the inlet and the outlet in the outdoor heat exchanger 203 is preliminarily set so that, when the temperature difference Ts3-Ts4 is below a predetermined value Tc, the defrost operation is completed. When the temperature difference Ts3-Ts4 is below the predetermined value Tc, the defrost operation finishes (step S20). After the defrost operation finishes, the four-way selector valve 202 is switched to the A side to return the cycle to the normal heating operation cycle, and thus the heating operation is resumed (step S20 to step S11, see Fig. 61).

This Embodiment 14 is configured as above, and therefore can exhibit the same effects as in Embodiment 13.

According to this Embodiment 14, during defrost operation, since the outdoor fan 203a is operated by the control unit 213 at a speed higher than that in the heating operation, a larger amount of frost or ice on the heat exchange surface having melted on the interface with the heat exchange surface can be blown off by the wind pressure.

Since the refrigeration apparatus of Embodiment 14 activates the defrost cycle and stops the outdoor fan 203a until interfacial frost or ice in contact with the surface portions A melts during defrost operation, the fan blows wind only when frost or ice attached to the heat exchange surface is intended to be blown off by the wind pressure, and can further improve energy efficiency.

### (Embodiment 15)

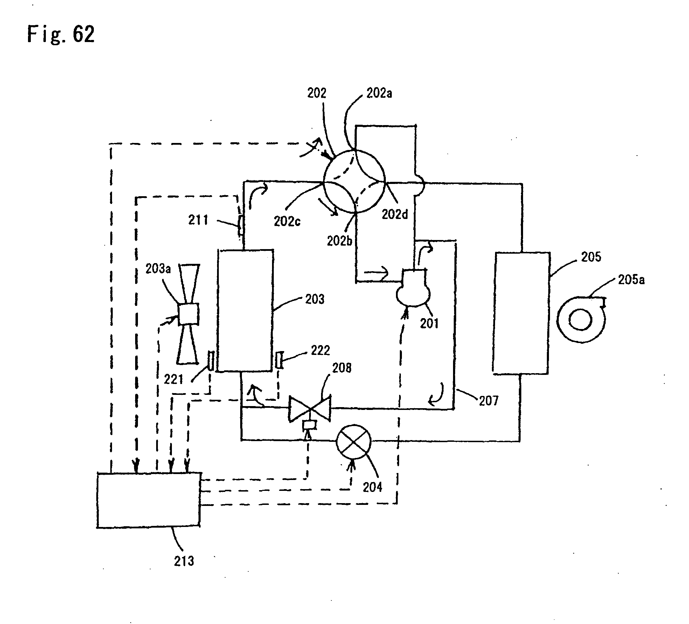

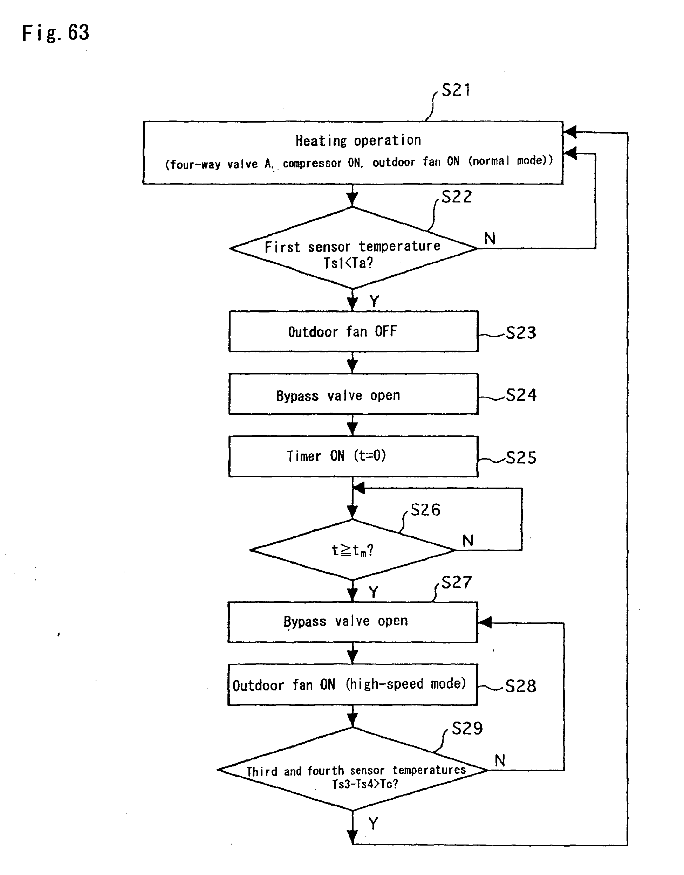

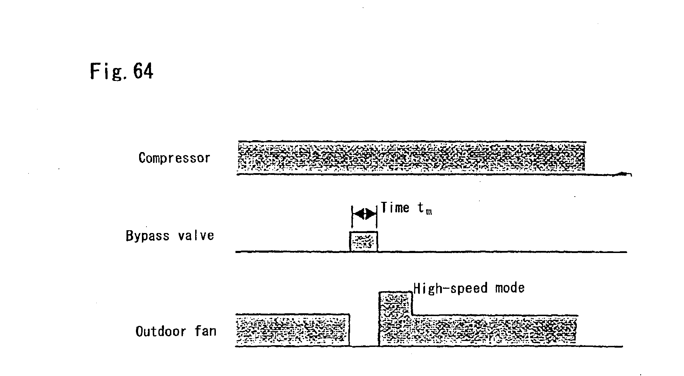

Embodiment 15 uses a simple hot gas bypass system instead of the defrost cycle in Embodiment 14. The content of the embodiment will be described with reference to Figs. 62 to 64. Fig. 62 is a view showing a refrigerant circuit of the refrigeration apparatus of Embodiment 15, Fig. 63 is a control flow chart during defrost operation by a control unit of the same refrigeration apparatus, and Fig. 64 is a control timing chart during defrost operation by the same control unit.

Embodiment 15 comprises a cooling cycle, a heating cycle, a first sensor 211 for detecting frosting, and a third sensor 221 and a fourth sensor 22 for detecting completion of defrost operation, which are the same as in Embodiment 14.

The refrigerant circuit is provided with a hot gas bypass circuit 207 from a discharge pipe of a compressor 201 to the inlet of an outdoor heat exchanger 203 in the heating cycle, and the hot gas bypass cycle 207 is provided with a bypass valve 208 such as a solenoid valve therein.

Defrost operation is carried out as follows.

During heating operation (step S21 in Fig. 63), as the amount of frost formed in the outdoor heat exchanger 203 increases, the outlet refrigerant temperature Ts1 of the outdoor heat exchanger 203 is reduced, and thus heating performance is reduced. When the refrigerant temperature Ts1 detected by the first sensor 211 reaches a predetermined temperature Ta (step S22), the heating operation is stopped, an expansion mechanism 204 is closed, and the operation is switched to defrost operation. In this switching, an outdoor fan 203a is stopped while maintaining continued operation of the compressor 201 (step S23) to stop the heating operation, and the bypass valve 208 is opened (step S24) and thus a gas discharged from the compressor 201 is caused to flow to the inlet of the outdoor heat exchanger 203 to initiate the defrost operation. At the same time, a timer incorporated in the control unit 213 is activated (step S25). In this time, since the expansion mechanism 204 does not exist in the refrigerant circulation circuit, and the difference between high and low pressures in the compressor 201 is small, the discharge amount from the compressor 201 significantly increases. Accordingly, since all of the gas discharged from the compressor 201 is supplied to the outdoor heat exchanger 203, the heat energy accumulated on the high pressure side of the refrigerant circuit is supplied at a burst for heating the outdoor heat exchanger 203. This circuit is a defrost cycle in the present Embodiment 15, which is called a simple hot gas cycle system.

A predetermined time tm is preliminarily set so that, when the predetermined time tm has passed since the defrost operation by the defrost cycle starts, interfacial frost or ice in contact with surface portions A can melt. When the predetermined time has passed (step S26), the bypass valve 208 is closed (step S27), and the outdoor fan 203a is driven in a high-speed mode (step S28). Thus, the wind pressure acts on frost or ice on the surface portions A in which the interfacial frost or ice has melted. On the other hand, since the heat exchange surface of the outdoor heat exchanger 203 has excellent water repellency and sliding properties, frost or ice in contact with the surface portions A and frost or ice attached are surface portions B partially join to each other and released by their own weight and the wind pressure.

As the release of frost or ice on the heat exchange surface of the outdoor heat exchanger 203 proceeds in this manner, the temperature of the outdoor heat exchanger 203 increases. The defrost operation finishes based on the change of the air temperature difference Ts3-Ts4 between the inlet and the outlet in the outdoor heat exchanger 203 as in the case of Embodiment 14 (step S29). After the defrost operation finishes, the operation is returned to the heating operation by resuming operation of the outdoor fan 203a (step S29 to step S21).

This Embodiment 15 is configured as above, and therefore can exhibit the same effects as in Embodiment 14.

According to this Embodiment 15, since the defrost operation employs the simple hot gas bypass system, the heating operation can be switched to the defrost operation in a continuous manner.

In addition, according to this Embodiment 14, since the defrost operation employs the simple hot gas bypass system, the heat energy accumulated on the high pressure side of the refrigerant circuit is emitted at a burst to an evaporator. Accordingly, interfacial frost or ice in contact with the surface portions A can melt in a short time, and the time for defrost operation can be reduced. In a conventional refrigeration apparatus in which frost or ice on the whole heat exchange surface has to be caused to melt, the amount of heat tends to be insufficient. In the present invention, however, it is only necessary to cause melting of frost or ice on the surface of the surface portions A (interfacial frost or ice), and thus heat energy does not lack.

### (Modified embodiments)

(1) In Embodiment 1, the heat exchange surface of the indoor heat exchanger 5 may be provided with the above surface structure which characterizes the present invention. In such a configuration, the embodiment can not only exhibit the above effect, but also suppress formation of frost in the indoor heat exchanger 5 during low-load cooling operation. The same applies to other embodiments in this respect.
(2) In Embodiment 1, the refrigeration apparatus is a separate heat pump air conditioner. However, the refrigeration apparatus is not limited thereto. For example, the apparatus may be an integrated heat pump air conditioner or a refrigeration apparatus for a refrigerator. The same applies to other embodiments in this respect.
(3) In Embodiment 1, the outdoor heat exchanger 3 has the heat exchange pipes 16 arranged into two rows and eight columns. However, the outdoor heat exchanger 3 is not limited thereto. For example, the number of rows in the heat exchange pipes 16 may be one or three or more. The same applies to other embodiments in this respect.
(4) Embodiment 6 is configured so that the outdoor heat exchanger 3 has a large fin pitch at the lower end and at the end from which air flows out. However, it is also possible to provide only one of the lower end and the end from which air flows out of the outdoor heat exchanger 3 with a large fin pitch.
(5) In Embodiment 9, the outdoor heat exchanger 3 is inclined so that the lower end is downwind. However, the outdoor heat exchanger 3 may be inclined in the opposite direction so that the lower end of the outdoor heat exchanger 3 is upwind. Such a configuration makes the wind pressure push water droplets falling down, and thus can make water droplets or frost fall down further easier, can further extend the time for refrigerating operation, and can further reduce the time for defrost operation.
(6) In Embodiment 13, the defrost cycle may be a normal cycle hot gas bypass system. Specifically, since the normal cycle hot gas bypass system carries out a defrost cycle in which a gas discharged from a compressor is bypassed to the inlet of an evaporator while circulating a refrigerant in a refrigerant circuit in heating operation, a hot gas bypass circuit 207 as in the case of Embodiment 15 is formed in the refrigerant circuit of Embodiment 13 in order to achieve such a configuration. Further, since the heating expansion mechanism 204 is maintained to be activated even in defrost operation, refrigerant circulation resistance of a bypass valve 208 is made larger than in the case of Embodiment 15. Accordingly, the defrost cycle is formed by opening the bypass valve 208 in the heating cycle. Further, the control flow chart when defrost operation is carried out is the same as Fig. 63. In such a configuration, since heating operation can be switched to defrost operation while continuously operating the compressor 201, the time for defrost operation can be reduced.
(7) In Embodiments 14 and 15, the outdoor fan 203a may have multiple wind speed modes during heating operation so that the high-speed mode of the outdoor fan 203a during defrost operation is a speed of the high-speed mode among the wind speed modes during the heating operation. In such a configuration, since the rotation speed of the outdoor fan 203a is common with that in heating operation, a driving unit for the outdoor fan 203a can be produced at a low cost. Industrial Applicability

As described above, the air heat exchanger of the present invention is useful as a heat exchanger requiring defrosting such as an air conditioner for home and business use, a freezer for home and business use, a refrigerator for home and business use, and a water heater for home and business use.

## Claims

1. An air heat exchanger **characterized in that** the air heat exchanger comprises fins that form a surface for heat exchange with air, and heat exchange pipes that are disposed in thermally conductive connection with the fins and circulate a heating medium therein,
wherein the fins have a surface for heat exchange with air comprising a surface structure in which surface portions A with a low heat capacity and surface portions B to which frost or ice is poorly bound and attached are discretely distributed, and
wherein the surface portions A and the surface portions B satisfy the following feature 1 and feature 2:
feature 1 is a feature by which interfacial frost or ice in contact with the surface portions A melts earlier than interfacial frost or ice in contact with the surface portions B when heating the surface of a member to which frost or ice is attached; and
feature 2 is a feature by which frost or ice attached to the surface portions B and at least a part of frost or ice attached to the surface portions A are released in a combined manner by their own weight from the surface of a member to which frost or ice is attached when heating the surface of the member.

2. An air heat exchanger **characterized in that** the air heat exchanger comprises fins that form a surface for heat exchange with air, and heat exchange pipes that are disposed in thermally conductive connection with the fins and circulate a heating medium therein, and
wherein the fins have a surface for heat exchange with air coated with a film formed from a surface treatment composition composed of:
(A) a water-repellent binder resin,
(B-1) a simple carbon substance with DBP absorbed in an amount of 45 to 450 cm³/100 g, and
(C) a dispersing agent.

3. An air heat exchanger **characterized in that** the air heat exchanger comprises fins that form a surface for heat exchange with air, and heat exchange pipes that are disposed in thermally conductive connection with the fins and circulate a heating medium therein, and
wherein the fins have a surface for heat exchange with air coated with a film formed from a surface treatment composition composed of:
(A) a water-repellent binder resin,
(B-2) a simple carbon substance with a specific surface area by nitrogen adsorption of 30 to 400 m²/g, and
(C) a dispersing agent.

4. An air heat exchanger **characterized in that** the air heat exchanger comprises fins that form a surface for heat exchange with air, and heat exchange pipes that are disposed in thermally conductive connection with the fins and circulate a heating medium therein, and
wherein the fins have a surface for heat exchange with air coated with a film formed from a surface treatment composition composed of:
(A) a water-repellent binder resin,
(B-3) a simple carbon substance with DBP absorbed in an amount of 45 to 450 cm³/100 g and a specific surface area by nitrogen adsorption of 30 to 400 m²/g, and
(C) a dispersing agent.

5. The air heat exchanger according to any one of claims 2 to 4, wherein the surface composition is a surface treatment composition that provides a film with an initial sliding angle of 15° or less, the sliding angle defined as an angle of a sample plate at which water droplets begin to roll down when 4 µL of distilled water is added dropwise onto the sample plate horizontally placed under environmental conditions of a temperature of 17 ± 1°C and a relative humidity of 60 ± 2% to form the water droplets, and then the sample plate is inclined at increasing angles with an increment of 0.1°.

6. The air heat exchanger according to any one of claims 2 to 5, wherein the surface treatment composition comprises one of the simple carbon substances (B-1) to (B-3) in an amount of 25 to 400 parts by weight and the dispersing agent (C) in an amount of 5 to 100 parts by weight based on 100 parts by weight of the water-repellent binder resin (A).

7. The air heat exchanger according to any one of claims 2 to 6, wherein the water-repellent binder resin (A) is a fluororesin.

8. The air heat exchanger according to claim 7, wherein the fluororesin is a fluorine-containing copolymer with a number average molecular weight of 1,000 to 500,000 composed of
(1) a fluoroolefin structural unit (1) represented by the formula (I):
-CF₂-CFX- (I)
wherein X is a fluorine atom, a chlorine atom, a hydrogen atom, or a trifluoromethyl group,(2) a β-methyl substituted α-olefin structural unit (2) represented by the formula (II):
-CH₂-CR (CH₃)- (II)
wherein R is a C₁ to C₈ alkyl group,
(3) a structural unit (3) based on a monomer having a chemically curable group,
(4) a structural unit (4) based on a monomer having an ester group on the side chain, and
(5) a structural unit (5) based on a different copolymerizable monomer,
the copolymer comprising the structural unit (1) in an amount of 20 to 60 mol%, the structural unit (2) in an amount of 5 to 25 mol%, the structural unit (3) in an amount of 1 to 45 mol%, the structural unit (4) in an amount of 1 to 45 mol%, and the structural unit (5) in an amount of 0 to 45 mol%, provided that the structural units (1) and (2) are 40 to 90 mol% in total.

9. The air heat exchanger according to claim 2, wherein the simple carbon substance (B-1) is a simple carbon substance pretreated with the dispersing agent (C).

10. The air heat exchanger according to claim 2, wherein the simple carbon substance (B-1) is carbon black or carbon nanotube.

11. The air heat exchanger according to claim 3, wherein the simple carbon substance (B-2) is a simple carbon substance pretreated with the dispersing agent (C).

12. The air heat exchanger according to claim 3, wherein the simple carbon substance (B-2) is carbon black or carbon nanotube.

13. The air heat exchanger according to claim 4, wherein the simple carbon substance (B-3) is a simple carbon substance pretreated with the dispersing agent (C).

14. The air heat exchanger according to claim 4, wherein the simple carbon substance (B-3) is carbon black or carbon nanotube.

15. The air heat exchanger according to any one of claims 2 to 14, wherein the dispersing agent (C) is a polymer comprising a recurring unit derived from a vinyl monomer having a fluoroalkyl group.

16. The air heat exchanger according to claim 15, wherein the polymer is a copolymer with a non-fluorine vinyl monomer.

17. The air heat exchanger according to any one of claims 2 to 16, wherein the surface treatment composition further comprises a crosslinking agent (E), and the water-repellent binder resin (A) is a resin having a chemically curable group.

18. The air heat exchanger according to claim 17, wherein the surface treatment composition comprises the crosslinking agent (E) in an amount of 0.1 to 5 equivalents based on one equivalent of the chemically curable group in the water-repellent binder resin having the chemically curable group.

19. The air heat exchanger according to any one of claims 2 to 18, wherein the surface treatment composition provides a film with an initial water microdroplet sliding angle of 15° or less, the angle at which ultrafine water droplets slide defined as an angle of a sample plate at which the water droplets begin to roll down when 1 µL of distilled water is added dropwise onto the sample plate horizontally placed under environmental conditions of a temperature of 17 ± 1°C and a relative humidity of 60 ± 2% to form the water droplets, and then the sample plate is inclined at increasing angles with an increment of 0.1°.

20. An air heat exchanger **characterized in that** the air heat exchanger comprises fins that form a surface for heat exchange with air, and heat exchange pipes that are disposed in thermally conductive connection with the fins and circulate a heating medium therein, and
wherein the fins have a surface for heat exchange with air coated with a film formed of a surface treatment composition composed of a water-repellent binder resin, polytetrafluoroethylene particles, a dispersing agent, inorganic particles with a low heat capacity, and a solvent.

21. The air heat exchanger according to claim 20,
wherein the water-repellent binder resin is a fluororesin,
wherein the polytetrafluoroethylene particles have a weight average molecular weight of 500 to 200,000 and a mean particle diameter of 0.1 µm or more,
wherein the dispersing agent is a polymer comprising a recurring unit derived from a vinyl monomer having a fluoroalkyl group,
wherein the inorganic particles with a low heat capacity have a molar heat capacity of 6 Ca/JK⁻¹mol⁻¹ to 7 Ca/JK⁻¹mol⁻¹ and are electrically conductive,
wherein the solvent is an organic solvent system, and
wherein the composition comprises the polytetrafluoroethylene particles in an amount of 100 to 200 parts by weight, the dispersing agent in an amount of 5 to 30 parts by weight, the inorganic particles with a low heat capacity in an amount of 25 to 200 parts by weight, and the solvent in an amount of 400 to 2,000 parts by weight, based on 100 parts by weight of the water-repellent binder resin.

22. The air heat exchanger according to any one of claims 1 to 21, wherein the fins are multiple sheets of plate fins located at predetermined intervals, the heat exchange pipes are disposed so that the pipes penetrate through the multiple plate fins, and the spaces between the fins are formed as air passages.

23. The air heat exchanger according to claim 22, wherein the plate fins are formed as slit fins.

24. The air heat exchanger according to claim 22, wherein the plate fins are formed as louver fins.

25. The air heat exchanger according to claim 22, wherein the plate fins are formed as flat fins and provided with notches at the rear of the heat exchange pipes in the direction along which air passes.

26. The air heat exchanger according to claim 22, wherein the plate fins are provided with dimples on the surface.

27. The air heat exchanger according to any one of claims 22 to 26, wherein the plate fins have a large fin pitch formed at the ends from which air flows out.

28. The air heat exchanger according to any one of claims 22 to 27, wherein the plate fins have a large fin pitch formed at the lower ends.

29. The air heat exchanger according to any one of claims 22 to 28, wherein the plate fins are arranged so that the edges are oblique in the air passages.

30. The air heat exchanger according to any one of claims 22 to 29, wherein the heat exchange pipes are arranged in grids.

31. The air heat exchanger according to any one of claims 1 to 21, wherein the heat exchange pipes are flat tubes located in multiple rows, the fins are corrugate fins formed so that the waveform parts are perpendicular to the heat exchange pipes, and the spaces formed in parallel with the waveform parts of the fins form air passages.

32. The air heat exchanger according to any one of claims 1 to 21, wherein the heat exchange pipes are disposed on the surface perpendicular to the direction along which air flows, and the fins are mesh fins disposed so that the surface of the fins is a surface perpendicular to the direction along which air flows.

33. A refrigeration apparatus **characterized in that** the air heat exchanger according to any one of claims 1 to 32 is used as an evaporator.

34. A refrigeration apparatus configured as a heat pump air conditioner, **characterized in that** the air heat exchanger according to any one of claims 1 to 32 is used as an outdoor heat exchanger.

35. A refrigeration apparatus configured as a heat pump air conditioner, **characterized in that** the air heat exchanger according to any one of claims 1 to 32 is used as an indoor heat exchanger and an outdoor heat exchanger, respectively.

36. A refrigeration apparatus comprising an evaporator consisting of the air heat exchanger according to any one of claims 1 to 35; a blower for blowing air to be he.at-exchanged with the evaporator across the evaporator; a refrigerant circuit that can be operated in a defrost cycle in which a gas discharged from a compressor is supplied to the evaporator during defrost operation; and a control unit for controlling the apparatus to activate the defrost cycle and operate the blower during defrost operation.

37. A refrigeration apparatus comprising an evaporator consisting of the air heat exchanger according to claim 1; a blower for blowing air to be heat-exchanged with the evaporator across the evaporator; a refrigerant circuit that can be operated in a defrost cycle in which a gas discharged from a compressor is supplied to the evaporator during defrost operation; and a control unit that, during defrost operation, stops the blower and activates the defrost cycle until interfacial frost or ice in contact with the surface portions A melts, and operates the blower and inactivates the defrost cycle after the interfacial frost or ice in contact with the surface portions A has melted.

38. A refrigeration apparatus configured as a heat pump refrigeration apparatus which can be operated for heating and cooling, comprising an evaporator consisting of the air heat exchanger according to any one of claims 1 to 35; a blower for blowing air to be heat-exchanged with the evaporator across the evaporator; a refrigerant circuit that can be operated in a defrost cycle,in which a gas discharged from a compressor is supplied to the evaporator during defrost operation; and a control unit for controlling the apparatus to activate the defrost cycle during defrost operation and set the operation speed of the blower during the defrost operation at the highest of speeds that can be selected during heating operation.

39. A refrigeration apparatus configured as a heat pump refrigeration apparatus which can be operated for heating and cooling, comprising an evaporator consisting of the air heat exchanger according to any one of claims 1 to 35; a blower for blowing air to be heat-exchanged with the evaporator across the evaporator; a refrigerant circuit that can be operated in a defrost cycle in which a gas discharged from a compressor is supplied to the evaporator during defrost operation; and a control unit for controlling the apparatus to activate the defrost cycle during defrost operation and set the operation speed of the blower during the defrost operation at a higher speed than the highest of speeds that can be selected during heating operation.

40. The refrigeration apparatus according to any one of claims 36 to 39, wherein the refrigerant circuit comprises a defrost cycle of a normal cycle hot gas bypass system.

41. The refrigeration apparatus according to any one of claims 36 to 39, wherein the refrigerant circuit comprises a defrost cycle of a reverse cycle system.

42. The refrigeration apparatus according to any one of claims 36 to 39, wherein the refrigerant circuit comprises a defrost cycle of a simple hot gas bypass system.
